# EUROPEAN PATENT APPLICATION

(11) **EP 1 632 891 A1**
(43) Date of publication of application: **08.03.2006**
(21) Application number: 04745960.7
(22) Date of filing: 09.06.2004
(51) Int. Cl.: G06Q 10/00

(54) **LICENSE DISTRIBUTION METHOD**

(30) Priority: 10.06.2003 JP 2003164633; 20.06.2003 JP 2003177132; 30.07.2003 JP 2003283241
(71) Applicant: MATSUSHITA ELECTRIC INDUSTRIAL CO., LTD., Kadoma-shi, Osaka-fu 571-8501 (JP)
(72) Inventor: TSURUBAYASHI, Ken, Yokohama-shi, Kanagawa;2440003 (JP); MORIKAWA, Takanori, Tokyo 1440046 (JP)
(74) Representative: Pautex Schneider, Nicole Véronique
(86) International application number: PCT/JP2004/008417
(87) International publication number: WO 2004/111903

(57) **Abstract**

A license distribution system and a license distribution method for selling/purchasing a license securely are provided.

When a purchase request of a license for viewing digital contents is received via a network from a client terminal, a reception window terminal of a storefront server receives the purchase request of a license and executes a process of settling accounts at a first stage. Then, a proof of purchase is issued and the license is sent in exchange for the proof of purchase.
Accordingly, no mistake is made in acquiring money at the time of selling the license, and further a table and a process for checking whether charging is made or not are not necessary for a license selling process, thus an operational process and a process program can be simplified and a memory can be used effectively. A license for a subscription commodity and/or a package commodity can be purchased and/or sold as well.

## Description

### BACKGROUND OF THE INVENTION

### Field of the Invention

The present invention relates to a system and license and contents provision method for enabling digital contents to be suitably distributed and viewed by managing and correctly providing license for viewing digital contents data and contents.

### Description of the Prior Art

Conventionally, digital contents made of digital data have a property in which quality is not deteriorated even if data are copied repetitively. Therefore, copyright infringement, in which the digital contents are copied and/or reused without permission, should be prevented in services using digital contents.

In regard to this point, the security level of the digital contents can be improved using improved cryptography. Conventional technology (e.g. Japanese Published Unexamined Patent Application No. Hei 11-259574) for preventing copyright infringement using this cryptography is publicly known.

Foregoing conventional technology discloses a method of distribution management of the digital contents and license using the digital contents and a condition of using the contents in relation to foregoing contents. According to this technology, when a request of executing the digital contents is issued to a digital management system for managing the digital contents from a user by acquiring a state in which an operation system function is working in order to view the digital contents, a dishonest act of using the digital contents without fee can be prevented by informing to a license management center, which operates monitoring results using centralized management practice, about monitoring an operation of the foregoing digital contents and creating charging data of the digital contents and/or "Payper use" data including charter by time and/or charter by number.

However, in a method of distribution management of the contents and license of the foregoing conventional technology, the user needs to connect a network with the license management center for actually viewing the digital contents, thus a problem arises in which a device which does not have this function cannot view the contents. Further, in view of the user, since information of using the digital contents is known to a disinterested party, another problem arises in which privacy cannot be protected. Further, still another problem arises in which a method for handling the license and charging is not considered in the event that data is lost in telecommunication, or the received contents have partial omission (a missing page), etc.

Further, a monthly magazine, a weekly magazine, or the other periodical publications are found in a field of a publication, and there is a practice of purchasing those periodical publications by monthly contract, etc. However, conventionally there is no management technology of purchasing and/or selling the license of an electronic publication by way of monthly contract (i.e. subscription) or package sale by a license distribution management method or system using a computer.

### SUMMARY OF THE INVENTION

The present invention has been made in consideration of problems of the foregoing conventional technology. The first object is to provide a license distribution system and a license distribution method which can securely sell and/or purchase license (including a license for subscription of an electronic publication) or contents.

The second object of the present invention is to provide a license distribution system and a license distribution method which can securely execute a process of settling accounts for selling and/or purchasing license or contents.

The third object of the present invention is to provide a license distribution system and a license distribution method which can prevent unnecessary data from being accumulated after a license is sold if a license or contents are sold.

The fourth object of the present invention is to provide a license distribution system and a license distribution method which can issue a license just once to a purchaser of the license when the license is sold/purchased.

The fifth object of the present invention is to provide a license distribution system and a license distribution method which can structure a system to various types of businesses for selling and/or purchasing license and contents.

The sixth object of the present invention is to provide a license distribution system and a license distribution method which can manage proficiently a case of selling and/or purchasing a license for an electronic publication by way of subscription or package sale.

In order to achieve the foregoing objects, the present invention is characterized in that, to begin with, if a purchase request of a license for viewing digital contents is received via a network from a client terminal, a reception window terminal of a storefront server receives a purchase request of a license and executes a process of settling accounts at the first stage and then a management terminal of a storefront server installed in a back position from the foregoing reception window terminal in view of the side of the client terminal executes a process necessary for issuing a license after this reception window terminal executes a process of settling accounts completely. Licenses include ones for viewing digital contents (hereinafter, referred to as a group of commodity contents) sold as a package commodity or a subscription commodity grouping two or more commodities.

Second, the present invention is characterized in that, when a process necessary for issuing a license after settling accounts is executed, a proof of purchase (electric data corresponding to a receipt of a general transaction, a return receipt, or a claim check) is created without issuing a license directly and sends it to a client terminal and then the license is issued by receiving a license issuance request from a client terminal.

Third, the present invention is characterized in that electric data is sent to a client terminal without sending a proof of purchase to a client terminal immediately when the proof of purchase is created and then the proof of purchase is sent upon receiving a request of the proof of purchase from the client terminal.

Fourth, the present invention is characterized in that a created proof of purchase is temporarily kept in a box set file without sending a proof of purchase immediately if the proof of purchase is created, and at the same time, electric data for acquiring the proof of purchase is sent to a client terminal and then the proof of purchase is sent by receiving a request of the proof of purchase from the client terminal. At this point, the foregoing electric data for acquiring the proof of purchase does not necessarily have to be sent, and according to another mode, the proof of purchase may be sent to the client terminal immediately at the time of creating a proof of purchase.

Fifth, the present invention is characterized in that, when a process necessary for issuing a license of a group of commodity contents is executed after a process of settling accounts is executed, a pBox proof of purchase is created corresponding to a package commodity (two or more commodities are gathered and grouped) or a subscription commodity as an object of a request of purchasing license and sends it to a client terminal, then an eBox request is received for requesting an eBox in which the pBox is disassembled from the client terminal, a relevant eBox proof of purchase is created and sent to the client terminal, and a license is requested by a relevant client terminal.

Sixth, the present invention is characterized in that a box set file is created for recording history of a process up to sending to the client terminal from creating the proof of purchase and necessary data such as its file ID and an ID of the foregoing process of settling accounts are added to the created box set file each time each process is executed.

Seventh, the present invention is characterized in that a box set file is created for recording a history of a process up to sending to the client terminal from creating the proof of purchase, and necessary data such as its file ID, an ID of the foregoing process of settling accounts, and an ID of the box set into a created box set file is added or changed each time each process is executed.

Eighth, the present invention is characterized in that, without sending a pBox proof of purchase immediately when the foregoing pBox proof of purchase is created, the foregoing box set file is sent and then the box set (including the pBox proof of purchase) is sent to the client terminal by receiving a box set request from the client terminal.

Ninth, the present invention is characterized in that an MPID, which is a common identifier which is a connector so as to manage and link-manage a commodity by linking a subscription commodity or a package commodity with a relevant license commodity, is given to both commodities. In the present invention, the pBox proof of purchase corresponds with a receipt of selling a group of two or more commodities, and the eBox proof of purchase can be created by disassembling this pBox proof of purchase. A commodity, which is treated as an object of the eBox proof of purchase by a link management means having MPID as a connector, can be searched and acquired in a process of creating the eBox proof of purchase from this pBox proof of purchase. Further, plural MPIDs each of which is different to each other can be attached to license commodities. This is because one commodity has plural aspects (features) for each commodity, and is contained in plural categories or attributes for each aspect. Then, a license commodity to which plural MPIDs are attached can be included in plural subscription commodities or a group of package commodities which are different to each other.

Tenth, the present invention is characterized in that eBox/pBox type data is included in the proof of purchase to discriminate whether the proof of purchase is a subscription commodity or package commodity or a license commodity and a process of creating the proof of purchase is selected based on this eBox/pBox type.

Eleventh, the present invention is characterized in that history of creating the proof of purchase is recorded and a process of creating the proof of purchase is trailed when the proof of purchase is created. Then, when the eBox proof of purchase is created based on the pBox proof of purchase, a history of creating the proof of purchase is recorded and the ID of the pBox proof of purchase as a parent is recorded in the history of creating the proof of purchase for the foregoing eBox proof of purchase which has been created.

Twelfth, the present invention is characterized in that the box set file is deleted when the proof of purchase is sent to the client terminal.

Thirteenth, the present invention is characterized in that, if there is no response to a task of creating and sending a proof of purchase, after a process of settling accounts is executed, a request of the proof of purchase is received once again and an unacquired proof of purchase is reissued so as to counter telecommunication trouble during operation.

Fourteenth, the present invention is characterized in that a license distribution system includes: a client terminal for outputting a purchase request of a license and a license request; a storefront server for receiving a request of purchasing the foregoing license for viewing digital contents via a network from the foregoing client terminal; and a license distribution management means for creating a proof of purchase corresponding to a request of purchasing the foregoing license, in which the foregoing storefront server includes a reception window terminal and a management terminal for executing necessary processes for issuing a license, the foregoing license distribution management means includes: a commodity management means for managing a commodity by linking a subscription commodity or a package commodity with a relevant license commodity; a proof of purchase creation means for creating a pBox proof of purchase corresponding to a subscription commodity or a package commodity as an object of a request of purchasing the foregoing license; and a proof of purchase creation means for creating a relevant eBox proof of purchase by responding to an eBox request for a license commodity having respective items including the foregoing pBox proof of purchase, and the foregoing storefront server includes the steps of: receiving a purchase request of a license for viewing digital contents sold as a subscription commodity or a package commodity by grouping two or more commodities via a network from the foregoing client terminal in the foregoing reception window terminal; executing a process of settling accounts for a request of purchasing license after receiving a request of purchasing the foregoing license; creating a pBox proof of purchase corresponding to a subscription commodity or a package commodity as an object of purchasing license after a process of settling accounts is completed; sending a created pBox proof of purchase to the foregoing client terminal from the foregoing license distribution management means via the foregoing storefront server; sending a relevant eBox proof of purchase created by the foregoing license distribution management means to the foregoing client terminal if the foregoing client terminal sends an eBox request corresponding to a license commodity having respective items including the foregoing pBox proof of purchase; and sending a license created by the foregoing license distribution management means to a client terminal of requesting this license if the foregoing client terminal sends a license request including the foregoing eBox proof of purchase.

Fifteenth, the present invention is characterized in that a commodity management means manages commodities by giving an MPID, which is a common identifier as a connector of management-linking the subscription commodity or package commodity with the relevant license commodity, to the both commodities.

Sixteenth, the present invention is characterized in that if a request of purchasing license for viewing digital contents is received via a network from a client terminal, a reception window terminal of a storefront server receives a purchase request of a license and executes a process of settling accounts at the first stage and then a management terminal of a storefront server installed in a back position from the foregoing reception window terminal in viewof the side of the client terminal executes a process necessary for issuing a license and distributing contents after this reception window terminal, and further when the license and contents are distributed, the contents are distributed to the client and the license is created by attaching license contents linking data designating the relationship between the license and the foregoing distributed contents so as to distribute to the client.

Seventeenth, the present invention is characterized in that the client makes a copy of the contents linking data attached to the license in a predetermined data region of the contents after the license is distributed to the client.

Eighteenth, the present invention is characterized in that a viewer program is included in the contents.

Nineteenth, the present invention is characterized in that the license and the contents are provided once again if the contents are poor after the license and the contents are provided. When these license and contents are provided once again, a revoke check process is executed based on the ID of the proof of purchase.

Twentieth, the present invention is characterized in that an electronic book display terminal includes: a bookshelf management means for managing data by receiving from a memory medium being storing an electronic book content and a license for browsing this content; an electric power management means for managing an ON/OFF switching operation of a main electric power; an input means for inputting various indications; a time means for timekeeping a current time; a usage limit check means for checking a limit of using license; a display means for displaying data; and a control means for controlling an operation of a function unit of a storing unit. In this electronic book display terminal, the foregoing control means transfers to a waiting state by turning OFF the foregoing main electric power of an electric power management means immediately when the foregoing display means displays a result display according to an indication from the foregoing input means.

Twenty first, the present invention is characterized in that indication of operation of designating a book to be browsed, browsing pages, and browsing books is input from the input means of the electronic book display terminal, the usage limit check means checks to confirm whether browsing is permitted by checking the contents of a license based on a present time acquired by the foregoing time means, and the foregoing electric power management means includes a sub-CPU and monitors existence of an input for designating a start operation while keeping a condition in which the foregoing main electric power is turned OFF.

As explained in the foregoing, according to the present invention, to begin with, when a purchase request of a license for viewing digital contents is received via a network from a client terminal, a reception window terminal of a storefront server receives a purchase request of a license and executes a process of settling accounts at the first stage. Thus, no mistake is made for acquiring money at the time of selling the license, and further a table and/or a process for checking whether charging is made or not are not needed for a license selling process, thus an operational process and a process program can be simplified and a memory can be used effectively.

Second, the present invention, as a process of telecommunication between the client terminal and the storefront server, receives a request from the client terminal at a reception window terminal of a storefront server and then executes a process necessary for purchasing the license by a management terminal of a storefront server installed in a back position from the foregoing reception window terminal in view of the side of the client terminal. Accordingly, telecommunication between the client terminal and an accounting process unit can be performed by a storefront window terminal any time. Thus, in the event that the client terminal and the accounting process unit are connected with the storefront server, even if the specification of each storefront server of the client terminal side and the accounting process unit is different from each other, a storefront gateway as the management terminal of the storefront server is not needed for changing the structure of telecommunication on the side of the storefront server. Accordingly, the storefront server can carry out an advantageous performance for a general purpose.

Third, the present invention sends electronic data for acquiring a proof purchase to a client terminal without sending a proof of purchase to a client terminal immediately when the proof of purchase is created, thus the proof of purchase can be delivered securely upon the request for a proof of purchase.

Fourth, the present invention, even if a task cannot respond during selling the license, continues to execute a process and reissue the proof of purchase by referring to the box set file, thus secure and firm proof can be issued.

Fifth, the present invention, if a request of purchasing license for viewing digital contents is received via a network from a client terminal, a reception window terminal of a storefront server receives a purchase request of a license and executes a process of settling accounts at the first stage and then a management terminal of a storefront server installed in a back position from the foregoing reception window terminal in view of the side of the client terminal executes a process necessary for issuing license after this reception window terminal executes a process of settling accounts completely, the license of a commodity in which two or more commodities are grouped can be purchased and/or sold. Further, no mistake is made for acquiring money at the time of selling license, and further a table and/or a process for checking whether charging is made or not are not needed for a license selling process, thus an operational process and a process program can be simplified and a memory can be used effectively. Further, telecommunication between the client terminal and the accounting process unit can be performed by the reception window terminal. Thus, in the event that the client terminal and the accounting process unit are connected with the storefront server, even if the specification of each storefront server of the client terminal side and the accounting process unit is different from each other, the management terminal of the storefront server is not needed for changing the structure of telecommunication on the side of the storefront server. Accordingly, the storefront server can carry out an advantageous performance for a general purpose.

Sixth, the present invention creates, when a process necessary for issuing license after settling accounts is executed, a proof of purchase (electric data corresponding to a receipt of a general transaction, a return receipt, or a claim check) without issuing a license directly and sends it to a client terminal and then license is issued by receiving a license issuance request from a client terminal, thus an accident and/or discrepancy for selling the license can be avoided.

Seventh, the present invention, when a process necessary for issuing the license is executed after a process of settling accounts is executed, a pBox proof of purchase is created corresponding to a package commodity (two or more commodities are gathered and grouped) or a subscription commodity as an object of a request of purchasing license and sends it to a client terminal, then an eBox request is received for requesting an eBox inwhich thepBox is disassembled from the client terminal, a relevant eBox proof of purchase is created and it is sent to the client terminal, and license is requested by a relevant client terminal, the package commodity and/or the subscription commodities containing plural commodities can be purchased and sold smoothly and the accident and/or discrepancy for selling the license can be avoided.

Eighth, the present invention creates a box set file for recording history of a process up to sending to the client terminal from creating the proof of purchase and adds necessary data such as its file ID and ID of the foregoing process of settling accounts to a created box set file each time each process is executed, thus the progressing degree of executing the processes can be identified and a trouble cannot occur.

Ninth, the present invention, without sending a pBox proof of purchase immediately if the foregoing pBox proof of purchase is created, sends the foregoing box set file and then sends the box set (including the pBox proof of purchase) to the client terminal by receiving a box set request from the client terminal, thus the proof of purchase can be delivered more safely and securely.

Tenth, the present invention gives MPID, which is a common identifier as a connector so as to manage and link-manage a commodity by linking a subscription commodity or a package commodity with a relevant license commodity, to both commodities. Thus, the commodities as the obj ects can be searched and gathered simply and promptly as a group from a large amount of commodity groups. Further, commodities of a database can be rearranged in an adjusting order, grasped, and managed securely.

Eleventh, the pBox proof of purchase corresponds with a receipt of selling a group of two or more commodities, and the eBox proof of purchase can be created by disassembling this pBox proof of purchase, thus a group of commodities can be disassembled easily by a computer process. Further, a commodity, which is treated as an object of the eBox proof of purchase by a link management means having an MPID as a connector, can be searched and acquired in a process of creating the eBox proof of purchase from this pBox proof of purchase. Further, plural MPIDs different from each other can be attached to the license commodities . Still further, because the license commodity to which plural MPIDs are attached can be contained in a group of a package commodity and/or plural subscription commodities each of which is different to each other, one commodity can have plural aspects (features) for each commodity and is contained in plural categories or attributes for each aspect. For these cases, the subscription and/or package commodity can be edited and created flexibly and a sales mode can be changed dynamically.

Twelfth, the present invention deletes the box set file if the proof of purchase is sent to the client terminal, thus unnecessary data is not kept in a memory and the memory can be used effectively.

Thirteenth, the present invention, when a request of purchasing license for viewing digital contents is received via a network from a client terminal, receives a purchase request of a license by a storefront reception window terminal of a storefront server and executes a process of settling accounts at the first stage by the storefront reception window terminal and then a management terminal, i.e. a storefront gateway, of a storefront server installed in a back position from the foregoing storefront reception window terminal in view of the side of the client terminal executes a process necessary for issuing license after this storefront reception window terminal executes a process of settling accounts completely, telecommunication between the client terminal and the accounting process unit can be performed by the storefront window terminal anytime.

Fourteenth, in the event that the client terminal and the accounting process unit are connected with the storefront server, even if the specification of each storefront server of the client terminal side and the accounting process unit is different from each other, a storefront gateway as the management terminal of the storefront server is not needed for changing the structure of telecommunication on the side of the storefront server. Accordingly, the storefront gateway can carry out advantageous performance for a general purpose so as to handle various storefront servers.

Fifteenth, the present invention, if the client terminal acquires the license and the contents, includes an LC connector for identifying the relationship between them in the license and the contents as data, thus the contents and the license using it are not confused to each other within one client terminal. Further, the foregoing LC connector is recorded in the license firstly by allocating the contents ID in the license distribution management means and this license is copied as a part of contents data by a bookshelf management means within the client terminal after this license is sent to the client terminal, thus the LC connector is effectively recorded as an advantageous effect in both of the license and the contents.

Sixteenth, the present invention includes a viewer program in the contents, thus the application of displaying the contents can be sent as one set only by sending the contents. Especially, if a control process of providing the contents once again is executed because misplaced pages are found in the contents and the viewer program has a bug and the like, the contents are provided once again together with the application of displaying the contents. Thus, the client side is released from the operation of updating separately the contents and the viewer program, and an advantageous effect of browsing immediately after a new book is provided once again can be obtained.

Seventeenth, the present invention executes a process of providing the license and the contents once again upon executing a process of checking a revoke at the time of providing the license and the contents once again, thus even if an inquiry concerning an inconvenient condition for the same proof of purchase is given by the user many times, the reception for the correct contents which was provided once again in the past can be denied and thus dishonest request can be avoided as an advantageous effect.

### BRIEF DESCRIPTION OF THE DRAWINGS

FIG. 1 illustrates a functional block diagram of a license distribution system of the present invention;
FIG. 2 is a sequence chart of a license sale control operation of a license sale system of the first embodiment of the present invention;
FIG. 3 is a subsequent sequence chart of the foregoing FIG. 2 of a license sale control operation of a license sale system of the first embodiment of the present invention;
FIG. 4 indicates the data structure of the proof of purchase of the first embodiment of the present invention;
FIG. 5 is the data structure of the eBox of the first embodiment of the present invention;
FIG. 6 is the structure of the box set of the first embodiment of the present invention;
FIG. 7 is the data structure of a box set header of the first embodiment of the present invention;
FIG. 8 is the structure of the box set file ID created by the storefront gateway of the first embodiment of the present invention;
FIG. 9 indicates the related structure condition among the proof of purchase, eBox, and the box set of the first embodiment of the present invention;
FIG. 10 is a sequence chart of the license sale control operation of the license sale system of the second embodiment of the present invention;
FIG. 11 is a subsequent sequence chart of the foregoing FIG. 10 of the license sale control operation of the license sale system of the second embodiment of the present invention;
FIG. 12 is a sequence chart of the response operations of the case in which a task of the storefront server cannot respond in the license sale system of the third embodiment of the present invention;
FIG. 13 is a subsequent sequence chart of the foregoing FIG. 12 of the response operations of the case in which a task of the storefront server cannot respond in the license sale system of the third embodiment of the present invention;
FIG. 14 is a sequence chart of the operation of controlling the license sale of the license sale system of the fourth embodiment of the present invention;
FIG. 15 is a subsequent sequence chart of the foregoing FIG. 2 of the operation of controlling the license sale of the license sale system of the fourth embodiment of the present invention;
FIG. 16 is a subsequent sequence chart of the foregoing FIG. 15 of the operation of controlling the license sale of the license sale system of the fourth embodiment of the present invention;
FIG. 17 is a subsequent sequence chart of the foregoing FIG. 16 of the operation of controlling the license sale of the license sale system of the fourth embodiment of the present invention;
FIG. 18 is a part of the list of the commodities of the rights of using the license guided for selling the commodities of the fourth embodiment of the present invention;
FIG. 19 is the data structure of the proof of purchase of the fourth embodiment of the present invention;
FIG. 20 is the structure of data of the pBox of the fourth embodiment of the present invention;
FIG. 21 is the structure of the box set of the fourth embodiment of the present invention;
FIG. 22 indicates the related structure condition among the proof of purchase, eBox, pBox, and the box set of the fourth embodiment of the present invention;
FIG. 23 is a link management chart of the mode in which a commodity information database manages the commodities by linking subscription and/or package commodity with a relevant license commodity of the fourth embodiment of the present invention;
FIG. 24 is the data structure of the eBox proof of purchase created by a pBox proof of purchase creation process of the fourth embodiment of the present invention;
FIG. 25 is a proof of purchase creation history table in which proof of purchase creation history is recorded in the pBox proof of purchase creation means of the fourth embodiment of the present invention;
FIG. 26 is the data structure of the eBox proof of purchase created by the operating process of creating the eBox proof of purchase from the pBox proof of purchase of the fourth embodiment of the present invention;
FIG. 27 is proof of purchase creation history in which the proof of purchase creation history is recorded in a process of creating the eBox proof of purchase from the pBox proof of purchase in the fourth embodiment of the present invention;
FIG. 28 is the proof of purchase creation history table in which proof of purchase creation history is recorded in the process of creating the eBox proof of purchase from the pBox proof of purchase using a different system from FIG. 26 in the fourth embodiment of the present invention;
FIG. 29 is an explanatory view of reissuing the eBox proof of purchase using the pBox of the fifth embodiment of the present invention;
FIG. 30 is a sequence chart of the control operation after the screen of completing the process of settling accounts is displayed from the control operation of providing the license and the contents of the system of providing the license and the contents of the sixth embodiment of the present invention;
FIG. 31 is a subsequent sequence chart of the foregoing FIG. 30 of the control operation of providing the license and the contents of the system of providing the license and the contents of the sixth embodiment of the present invention;
FIG. 32 exemplifies the data structure of the contents and the license used in the system of providing the contents and the license of the sixth embodiment of the present invention;
FIG. 33 is a list of exemplifying that the license and the content are prepared in the system of providing the contents and the license of the sixth embodiment of the present invention;
FIG. 34 is a block diagram of the structure of an electronic book display terminal for replaying and browsing the electronic book of the seventh embodiment of the present invention;
FIG. 35 is a flowchart of the operation of the electronic book display terminal of the seventh embodiment of the present invention;
FIG. 36 illustrates the bookshelf screen of the electronic book display terminal of the seventh embodiment of the present invention;
FIG. 37 illustrates a bibliography screen with bookshelf screen and a front page of the specific book of the electronic book display terminal of the seventh embodiment of the present invention;
FIG. 38 is a sequence chart of the control operation of providing once again the license and the contents of the system of providing the contents and the license of the eighth embodiment of the present invention;
FIG. 39 is a subsequent sequence chart of the foregoing FIG. 38 of the control operation of providing once again the license and the contents of the system of providing the contents and the license of the eighth embodiment of the present invention;
FIG. 40 is a subsequent sequence chart of the foregoing FIG. 39 of the control operation of providing once again the license and the contents of the system of providing the contents and the license of the eighth embodiment of the present invention;
FIG. 41 is a subsequent sequence chart of the foregoing FIG. 40 of the control operation of providing once again the license and the contents of the system of providing the contents and the license of the eighth embodiment of the present invention;
FIG. 42 exemplifies a damaged commodity list provided in a CS call center in the system of providing the contents and the license of the eighth embodiment of the present invention; and
FIG. 43 exemplifies a revoke proof of purchase list used in the system of providing the contents and the license of the eighth embodiment of the present invention.

Hereinafter, the embodiments of the present invention are explained with reference to attached drawings. At this point, the present invention is not limited to these embodiments, but various modes can be carried out within the scope of the spirit of the present invention.

### DESCRIPTION OF THE PREFERRED EMBODIMENT

### (First Embodiment)

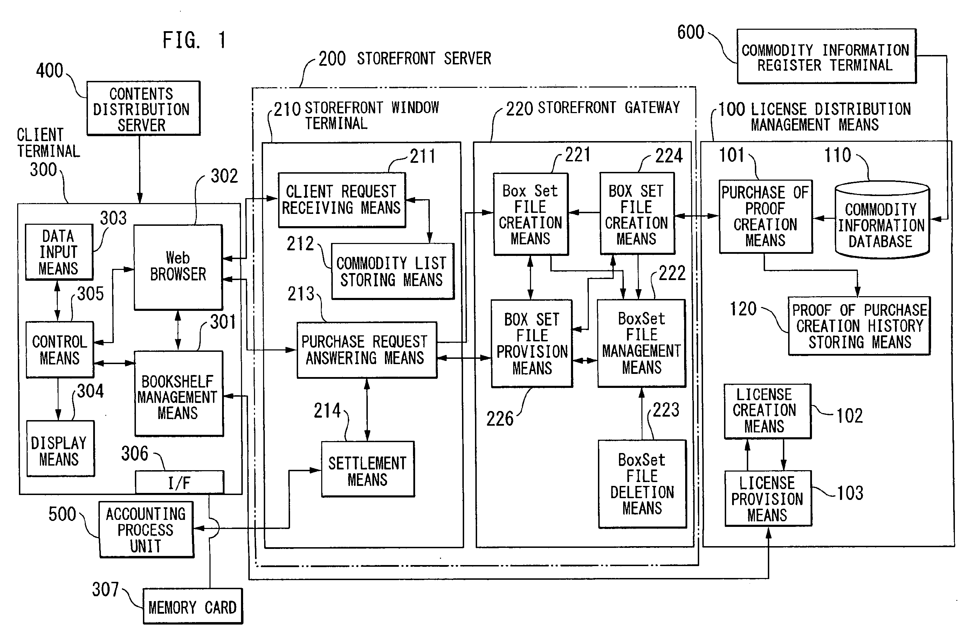

FIG. 1 illustrates a functional block diagram of a license sale system of the first aspect of the present invention. A reference number 100 indicates a license distributionmanagement means having a function of a license distribution management server (LDMS) . A reference number 200 indicates a storefront server (SF) . A reference number 300 indicates a client terminal. A reference number 400 indicates a contents distribution server. A reference number 500 indicates an account processing unit.

The license distribution management means 100 includes a proof of purchase creation means 101, a license creation means 102, a license provision means 103, a commodity information database 110, and a proof of purchase creation history storing means 120. POP (Proof Of Purchase) means electric data corresponding to a claim ticket, a return certificate, a receipt, etc. for general business transaction. Further, the "commodity" of the present invention indicates license.

The storefront server 200 includes a storefront window terminal 210 as a receipt window terminal for receiving a purchase request of the license from a client terminal 300 and a storefront gateway (GW) 220 as a management terminal installed in a back position from the storefront window terminal 210 in view of the client terminal 300. The storefront window terminal 210 includes a client request receiving means 211, a commodity list storing means 212, a purchase request answering means 213 for performing an answering process to a license purchase request from the client terminal 300, and a settlement means 214 for processing the settlement of an accounting process unit 500.

The storefront gateway 220 includes a box set file creation means 221 for creating a box set file, a box set file management means 222 for managing and storing the box set file which was created, a box set file deletion means 223 for deleting the box set file which became unnecessary, a box set creation means 224 for creating the box set (a bunch of proof of purchases) which gathered each eBox by creating the eBox as a receipt corresponding to each proof of purchase based on the proof of purchase which was received from the license distribution management means 100, and a box set provision means 226 for sending the box set which was stored in the box set file management means 222 to the client terminal 300.

The client terminal 300 includes a bookshelf management means 301 for managing the proof of purchase which was received from the storefront server 200 and a web browser 302 for establish communication between the client terminal 300 and the storefront server 200 or the license distribution management means 100. Further, the client terminal 300 includes a data input means 303 for inputting data such as command data at the time of requesting of the license to be purchased, a display means 304 for displaying management contents of the bookshelf management means 301, and a control means 305 for controlling the process of the client terminal 300. Still further, the client terminal 300 includes an interface 306 for loading data which was stored in the bookshelf management means 301 in an external memory medium, so as to load data of the license and contents in the external memory medium such as a memory card 307 via this interface 306. Further, in FIG. 1, a reference number 600 indicates a commodity information register terminal for registering commodity information (license information) in the commodity information database 110.

The operation of a license distribution system of the first embodiment is explained hereinafter, in the event that a user (customer) having or operating the client terminal 300 wants to buy the license of an electronic book on the Internet as an example of the network.

The digital contents of the present invention cannot be browsed if the license is not given even if the contents are distributed. The method for doing so can be realized by way of including a decoding key in the license by encrypting the digital contents. Although those encrypted digital contents are downloaded into the client terminal 300 from the contents distribution server 400, its downloading can be processed anytime. Further, it is supposed that the commodity information database 110 is structured using a SQL database and the commodity information (license information) is registered using an insert sentence of SQL from the commodity information register terminal 600 in advance. A part of information of this commodity information database 110 is sent to the storefront server 200 and stored in the commodity list storing means 212 of the storefront window terminal 210.

The commodity information managed by the commodity information database 110 includes data for a commodity ID, an item name, a price, a title, an author name, an effective start date, an effective end date, a publishing date, a publisher name, etc. of each commodity (a publication of the book and an electric recording medium such as CD and DVD in which music and a picture image are recorded is assumed in this embodiment) . Further, each device of the license distribution management means 100, the storefront server 200, and the client terminal 300 is connected by the network so as to structure the system. A secure protocol such as SSL shall be used since communication shall be made securely so as to communicate data including personal information such as credit information and the license for copyright protection.

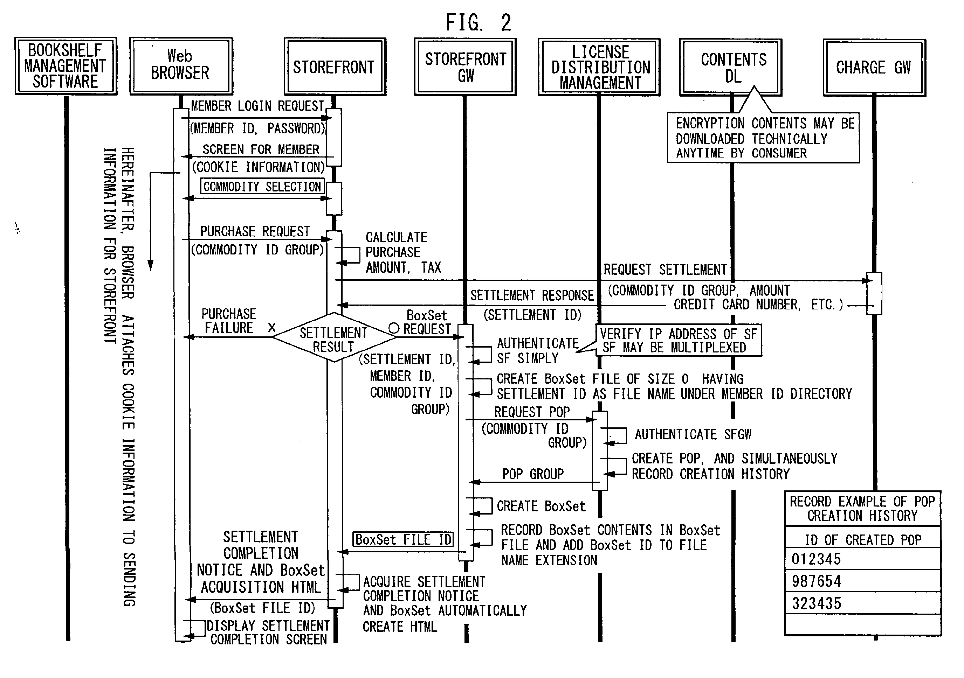

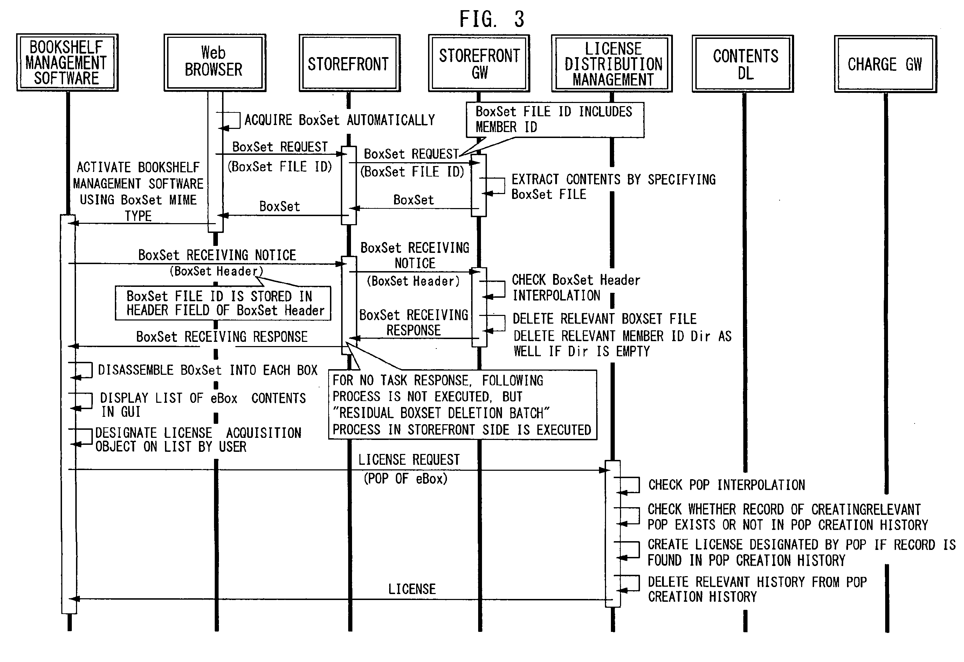

FIGS. 2 and 3 are sequence charts of a license sale control operation of a license sale system of the present embodiment. In FIG. 2, in the first place, the client terminal 300 performs a member login request to the storefront server 200 from the web browser 302. This member login request needs a member ID and a password. On the side of the storefront server 200, the client request receiving means 211 of the storefront window terminal 210 receives the foregoing login request and also gets the member ID and the password. Then, the storefront window terminal 210 reads the commodity list from the commodity list storing means 212 and sends display screen data for the member and cookie information to the web browser 302. After this, the web browser 302 adds cookie information to transmitting information for the storefront window terminal 210. The commodity list indicates information explaining the right of using the contents sold by the storefront server 200.

The commodities for purchasing shall be selected between the storefront window terminal 210 and the web browser 302, if the commodity for purchasing is decided, although the number of commodities may be one or more, the purchase request of a license is sent to the storefront window terminal 210 from the web browser 302. For the process at this stage, an ID group of the commodities for purchasing shall be sent as transmitting data.

Then, on the side of the storefront server 200, the purchase request answering means 213 of the storefront window terminal 210 receives the foregoing request of purchasing, and calculates the tax and purchase amount of purchasing commodities . Next, the amount data is sent to the settlement means 214 if an amount of money is inquired, and the settlement means 214 requests the operation of settling accounts to the accounting process unit 500. For this request of settling accounts, data such as the ID group of commodities, an amount of money, and a credit card number is sent to the accounting process unit 500 from the settlement means 214. The accounting process unit 500 returns a response of settling accounts to the storefront window terminal 210 if the operation of settling accounts is finished. A settlement ID is added to such a response of settling accounts.

The storefront window terminal 210 checks whether or not the foregoing operation of settling accounts is processed correctly in the purchase request answering means 213, and the network telecommunication for requesting and/or receiving the license shall be terminated if the result of checking is abnormal. The abnormal condition of the operation of settling accounts indicates the cases of the abnormal operation of settling accounts, the missing of the corresponding credit card number, the shortage of money there is left, and so forth. If the operation of settling accounts is normal, within the storefront server 200, the proof of purchase is requested to the storefront gateway 220 from the storefront window terminal 210 as the request of the box set. If this box set is requested, the foregoing settlement ID and member ID and the ID group of commodities received from the client terminal 300 are transmitted as transmitting data.

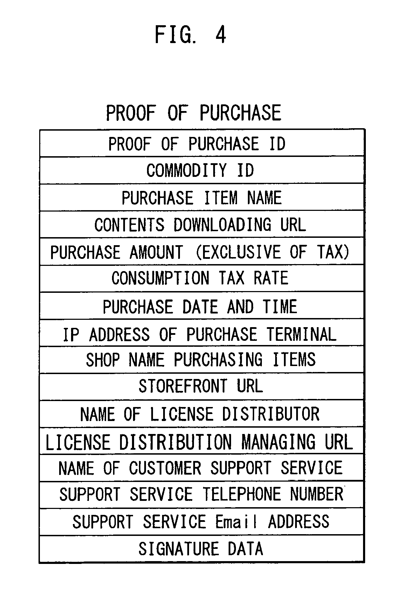

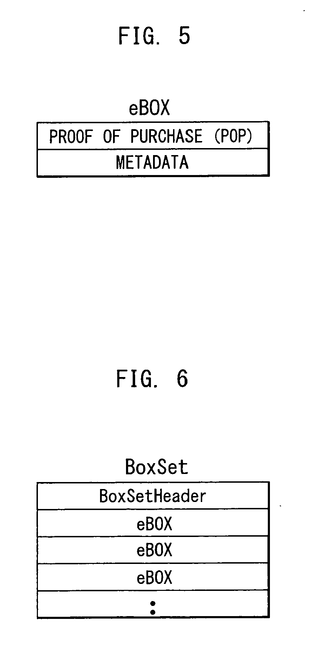

At this stage, the relationship between the proof of purchase and the box set is explained. FIG. 4 indicates the data structure of the proof of purchase. This proof of purchase is created by the proof of purchase creation means 101 of the license distribution management means 100. This proof of purchase includes respective data of the proof of purchase ID, the purchase item name (commodity name) and contents downloading URL, the purchase amount (price exclusive of tax), the consumption tax rate, the purchase date and time, the IP address of the purchase terminal, the shop name of purchasing items, the business owner name of distributing the license, the name of supporting a customer, a support telephone number, a support e-mail address, and signature data. At this point, the signature data indicates data in which the body of the proof of purchase is encrypted by the specified key and logic, and the signature is made at the time that the proof of purchase is created by the proof of purchase creation means 101 of the license distribution management means 100. Each proof of purchase is created to each commodity uniquely, and the purchase data is sent to the storefront gateway 220 from the license distribution management means 100 so as to create the eBox by integrating the proof of purchase with metadata if one proof of purchase is created and signed. FIG. 5 is the data structure of the eBox. If there are two or more purchase items, two or more proof of purchases, that is to say, a group of proof of purchases are sent to the storefront gateway 220 from the license distribution management means 100, and two or more eBoxes are grouped altogether so as to create the set box as well as those two or more eBoxes according to the number of purchasing the commodities are created in the storefront gateway 220.

FIG. 6 is the structure of the box set BoxSet. This box set is composed of BoxStHeader and one or more eBoxes. The condition to decide whether eBox contained in the box set is single or plural is defined by the condition to decide whether the purchase commodity is single or plural at the time of each purchase of the user. Accordingly, the proof of purchase, the eBox, and the box set are basically identical to each other and the proof of purchase is treated as a basic element of the structure. Further, the proof of purchase, the eBox, and the box set can be treated as electric data corresponding to the receipt (a return receipt or the claim ticket may be used) of general transactions. Therefore, the process of the box set file management means 222 shall be identical to the operation of managing the receipt at the time of purchasing items of the user.

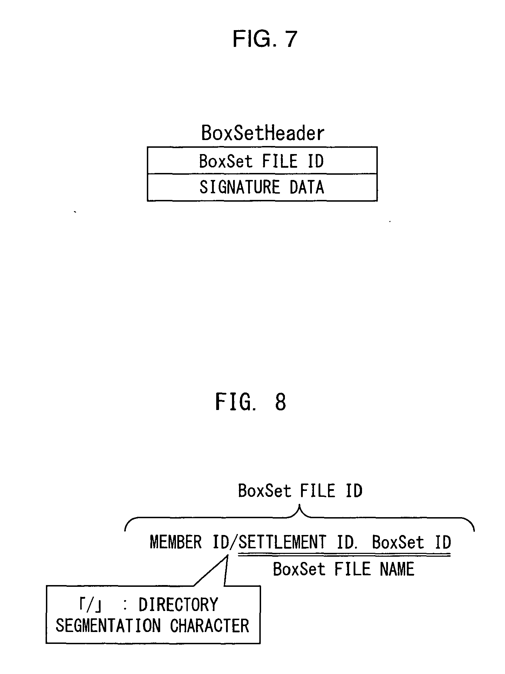

FIG. 7 is the data structure of a box set header BoxSetHeader. This BoxSetHeader includes a box set file ID and signature data The signature data is data in which the box set body is encrypted by the specific key and logic, and signed at the time of creating the box set by the box set creation means 224 of the storefront gateway 220.

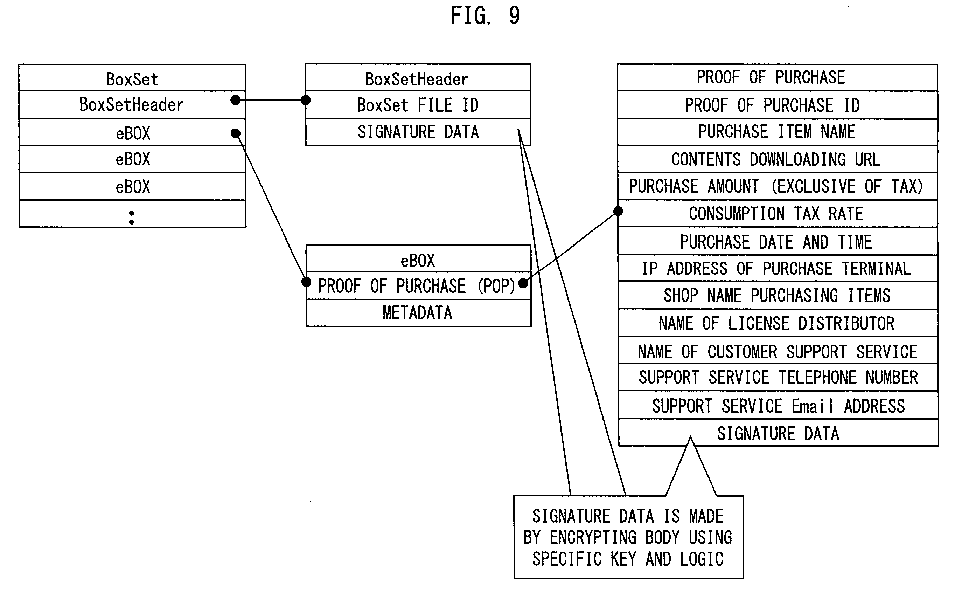

FIG. 9 indicates the related structure condition among the foregoing proof of purchase, eBox, and box set. That is to say, the proof of purchase is contained in the eBox as a chief structure element, the box set gathers those eBoxes as one set, and the box set header is attached thereto so as to define (prescribe) this box set.

FIG. 8 is the structure of the box set file ID created by the storefront gateway 220. This box set file ID contains the member ID, the settlement ID, and a box set ID.

As explained in the foregoing, in the event that the settlement result is normal, the proof of purchase is requested as the box set request to the storefront gateway 220 from the storefront window terminal 210 of the storefront server 200. Then, when this box set request is made, the storefront gateway 220 checks whether or not the box set request from the storefront window terminal 210 is normal. This type of check is executed by processing brief authentication for the storefront window terminal 210. For example, the process of verifying an IP address of the storefront window terminal 210 is executed. Two or more storefront window terminals 210 may be connected to the storefront gateway 220. In this case, the IP addresses of the storefront window terminals 210 may be multiplexed.

After the storefront window terminal 210 is authenticated, the box set file creation means 221 of the storefront gateway 220 creates the box set file having the settlement ID as a file name under the directory of the member ID. The foregoing settlement ID is the settlement ID attached to the settlement answered from the accounting process unit 500 in the foregoing settlement process. At this point, the description of the box set ID is not made since the box set is not yet created at this stage. The box set file created in this way is stored in the box set file management means 222. The storefront gateway 220 sends the request of the proof of purchase to the license distribution management means 100 (POP request) after the foregoing box set file is created. For this POP request, the commodity ID group attached to the box set request from the storefront window terminal 210 is attached as sending data.

Upon receiving the foregoing POP request, the license distribution management means 100 checks to confirm whether or not the POP request from the storefront gateway 220 is normal. This checking operation is executed by the process of storefront gateway authentication, e.g. the process of SSL mutual authentication, etc. After the storefront gateway 220 has been authenticated, the proof of purchase (POP) is created by the proof of purchase creation means 101 of the license distribution management means 100. At the same time as this process, the history of creating the proof of purchase is recorded by the proof of purchase creation means 101, then this history of creating the proof of purchase is stored in the proof of purchase creation history storing means 120. At this point, an example of the history of creating the proof of purchase is indicated in FIG. 2 using a table form. In this example of the history of creating the proof of purchase, each of data of expressing "012345," "987654," etc. indicates each ID of the proofs of purchase which have been created, and also corresponds to each ID of the proofs of purchase of FIG. 4. Then, the proofs of purchase which have been created shall be sent to the storefront gateway 220. Further, when two or more proofs of purchase are created, a group of the proofs of purchase (POP group) is sent.

In the storefront gateway 220, which received the proof of purchase, the box set creation means 224 creates the eBox for each proof of purchase, and further creates the set box which gathered plural eBoxes as one set so as to be stored and managed in the box set file management means 222. The box set ID is attached to this box set, then the contents of the box set are recorded in the corresponding box set files, and further the foregoing box set ID is attached to the extension of the box set file name. Then, while the foregoing box set is maintained in the box set file management means 222, the box set file ID is sent to the storefront window terminal 210 from the storefront gateway 220.

If the storefront window terminal 210 receives the box set file ID, HTML is created so as to receive automatically the box set as well as the notice of settlement completion in the purchase request answering means 213. The box set file ID received from the storefront gateway 220 is included in this HTML. HTML for acquiring automatically the foregoing box set as well as the notice of settlement completion is sent to the web browser 302 of the client terminal 300 from the purchase request answering means 213.

In the client terminal 300, the completion of settling accounts is displayed on the display means 304 based on HTML for the received notice of settlement completion as well as automatic acquisition of the box set. The message of "THANK YOU VERY MUCH FOR YOUR PURCHASE. RECEIPT (THE PROOF OF PURCHASE) IS RECEIVED CONTINUOUSLY." is displayed in a display screen, for example.

The operation after the completion of settling accounts is displayed on the screen is explained with reference to FIG. 3. The web browser 302 of the client terminal 300 activates the steps (or processes) automatically for acquiring the box set, and the process for acquiring the box set is started. If the process for acquiring the box set is started, the request of the box set is sent to the storefront window terminal 210 from the web browser 302. In this process, the box set file ID is attached as data. Next, on the side of the storefront server 200, the purchase request answering means 213 of the storefront window terminal 210 receives the foregoing box set request, and this box set request is transferred to the storefront gateway 220. In this process, the box set file ID is also attached as data. Upon receiving the foregoing set request, the storefront gateway 220 sends the box set by extracting the corresponding box set from the box set file management means 222 based on the box set file ID, and the box set provision means 226 sends this box set to the storefront window terminal 210.

Upon receiving the box set, the storefront window terminal 210 sends the box set to the web browser 302 of the client terminal 300 from the purchase request answering means 213. Upon receiving the box set, the web browser 302 activates the bookshelf management means 301 with a MIME type of the box set and stores the box set so as to bookshelf-manage the box set, and further the notice of receiving the box set is sent to the storefront server 200 from the bookshelf management means 301. This notice is to confirm that the client terminal 300 has received the box set from the storefront server 200. This box set receiving notice is sent to the storefront gateway 220 from the purchase request answering means 213 of the storefront window terminal 210. The box set header is attached if the box set receiving telecommunication is performed.

If the storefront gateway 220 receives the box set, the storefront gateway 220 checks to confirm whether or not the box set header is interpolated. If there is no interpolation, the relevant box set file is deleted from the box set file management means 222. In this way, when the notice of receiving the box set is received, since the storefront gateway 220 deletes the box set file and there is no nonconformity in such a manner that the same box set is repeatedly sent to the client terminal 300, the secure process can be executed. At this stage, when the directory for the member ID becomes empty since the box set file is deleted, the member directory itself shall be deleted. Accordingly, unnecessary data is not left in a limited memory region for a long time, thus the memory can be used effectively. After the foregoing processes, the response of receiving the box set is responded to the storefront window terminal 210 from the storefront gateway 220, and further this response of receiving the box set is responded to the bookshelf management means 301 of the client terminal 300 from the storefront window terminal 210.

At this stage, for the foregoing operation, the client terminal 300, that is to say, the user has not yet acquired the license, but has only the proof of purchase (a group of receipts as the box set type) for acquiring its license. Thus, if the client terminal 300 wants to acquire the license, the bookshelf management means 301 disassembles the box set into each box, that is to say, each eBox so as to display the contents of the eBox in GUI in a browsing way. The user designates the obj ect of acquiring the license in a list displayed in the display means 304 and sends the license request to the license distribution management means 100. This license request means the request of issuing the license itself to the storefront server 200 from the client terminal 300 and a different processing operation from the purchase request of a license, thus the proof of purchasing the designated eBox is attached to this license request.

If the license distribution management means 100 receives the foregoing license request, the license distribution management means 100 checks to confirm whether or not the proof of purchase attached to the license request from the bookshelf management means 301 is interpolated. If the license request from the bookshelf management means 301 is not interpolated, it is checked to confirm whether or not the record of creating the relevant proof of purchase is found in its proof of purchase creation history storing means 120. Then, if the record of creating the relevant proof of purchase is found, the license creation means 102 deletes the relevant proof of purchase creation history of the proof of purchase creation history storing means 120, as well as the license creation means 102 creates the license designated by its proof of purchase. Then, the created license is sent to the license provision means 103 and then sent to the client terminal 300 from the license provision means 103. Accordingly, the license for the proof of purchase designated on the side of the client terminal 300 is issued. On the side of the client terminal 300, the issued license is stored in the bookshelf management means 301, and the license is performed within the predetermined term. At this stage, as already been described, the digital contents as the object of performing the license can be downloaded arbitrarily at any time as explained before. In general, the digital contents are downloaded into the client terminal 300 arbitrarily for the period until the license is issued or performed.

As explained in the foregoing, according to the present embodiment, when the purchase request of a license for viewing the digital contents is received from the client terminal 300 via the network, the purchase request of a license is received by the storefront window terminal 210 of the storefront server 200 and then the storefront window terminal 210 executes the operation of settling accounts at the first stage. Then, after it is confirmed that the storefront window terminal 210 completes the process of settling accounts securely, the necessary process of issuing the license is executed in the management terminal of the storefront server installed in the back portion from the foregoing storefront window terminal 210 in view of the side of the client terminal 300, that is to say, the storefront gateway 220. Accordingly, the telecommunication with the client terminal 300 and the accounting process unit 500 can be executed by the storefront window terminal 210 all the time. Thus, even if each specification of the side of the client terminal 300 and the side of accounting process unit 500 is not the same as each storefront server 200, the modification of the structure of connecting the telecommunication on the side of the storefront server 200 is not required even to the store front gateway 220, and further the storefront gateway 220 can have a higher performance for a general purpose so as to be applied to a variety of storefront servers 200.

### (Second Embodiment)

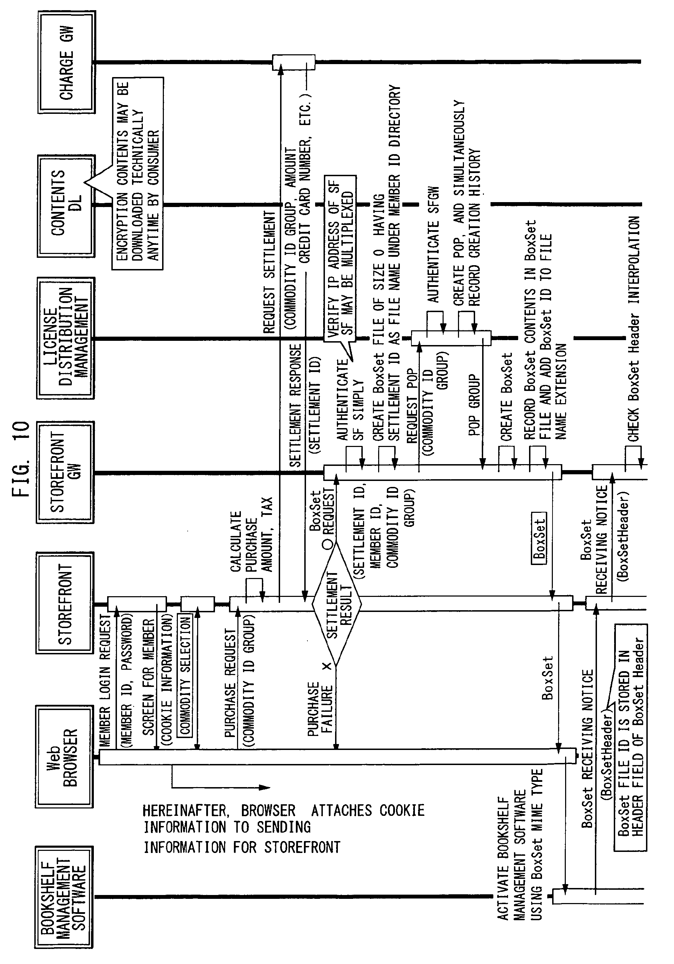

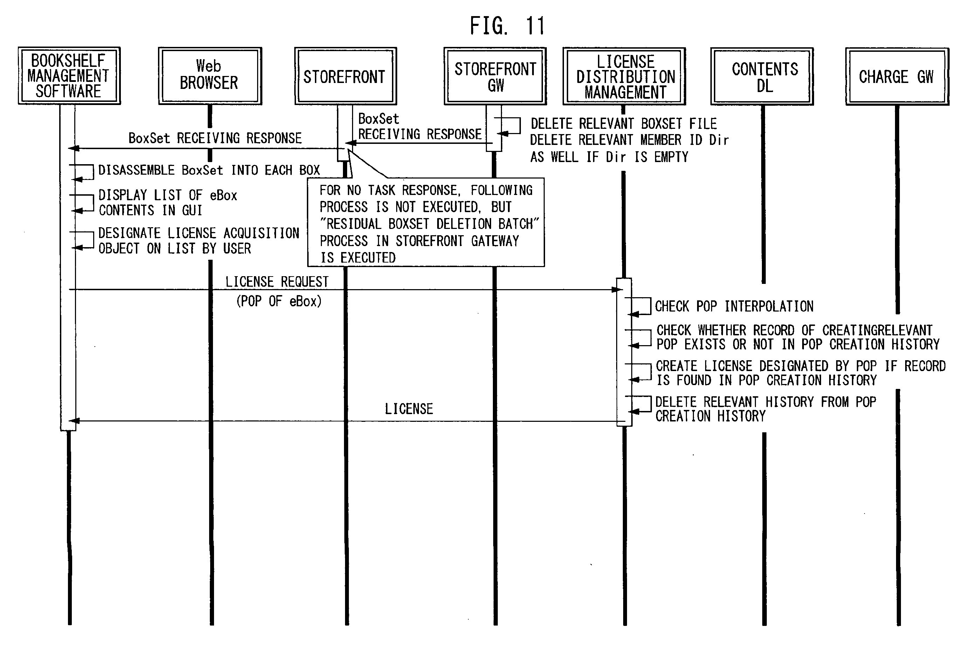

FIGS. 10 and 11 are sequence charts of the license sale control operation of the license sale system of the second embodiment of the present invention.

The license sale control operation of the present embodiment is identical with the license sale control operation of the first embodiment intrinsically. The different point from the license sale control operation of the first embodiment is a process of executing after the box set creation means 224 has created the box set in the storefront gateway 220.

That is to say, after the license distribution management means 100 has created the proof of purchase, the storefront gateway 220 which receives the proof of purchase from the license distribution management means 100 creates the eBox for each proof of purchase in the box set creation means 224 and the box set as a set of grouping plural eBoxes. Further, the box set ID is attached to this box set and the foregoing box set ID is attached to the extension of the box set file name, as well as the contents of the box set are recorded in the relevant box set file.

Up to the foregoing, the operation of the first embodiment is the same as the operation of the second embodiment. After this stage, the operation of the second embodiment is different from the operation of the first embodiment. That is to say, in the storefront gateway 220, after the foregoing box set ID is granted and the box set file ID is attached, the set box is sent to the box set provision means 226 and the box set provision means 226 sends this box set to the storefront window terminal 210.

Upon receiving the box set, the storefront window terminal 210 sends the box set to the client terminal 300 from the purchase request answering means 213. When the client terminal 300 receives the box set, the bookshelf management means 301 is activated with the MIME type of the box set, and the notice of receiving the box set is sent to the storefront server 200 from the bookshelf management means 301, as well as the box set is stored so as to be bookshelf-managed. This box set receiving notice is sent to the storefront gateway 220 from the purchase request answering means 213 of the storefront window terminal 210. If the storefront gateway 220 receives the box set, the storefront gateway 220 checks to confirm whether or not the box set header is interpolated. If there is no interpolation, the relevant box set file is deleted from the box set file management means 222. At this stage, in the event that the directory for the member ID becomes empty since the box set file is deleted, the member directory itself is deleted.

Then, when the client terminal 300 wants to acquire the license, the bookshelf management means 301 disassembles the box set into each box, that is to say, each eBox so as to display the contents of the eBox in GUI in a browsing way. On the contrary, the user designates the object of acquiring the license in a list displayed in the display means 304 and sends the license request to the license distribution management means 100. The proof of purchasing the designated eBox is attached to this license request.

If the license distribution management means 100 receives the foregoing license request, the license distribution management means 100 checks to confirm whether or not the proof of purchase attached to the license request from the bookshelf management means 301 is interpolated. If the license request from the bookshelf management means 301 is not interpolated, it is checked to confirm whether or not the record of creating the relevant proof of purchase is found in its proof of purchase creation history storing means 120. Then, if the record of creating the relevant proof of purchase is found, the license creation means 102 deletes the relevant proof of purchase creation history of the proof of purchase creation history storing means 120, as well as the license creation means 102 creates the license designated by its proof of purchase. Then, the created license is sent to the license provision means 103 and then sent to the client terminal 300 from the license provision means 103. Accordingly, the license for the proof of purchase designated on the side of the client terminal 300 is issued.

In this way, the operation steps for the license sale control operation of the license sale system can be simplified and the processing speed becomes higher by sending the box set immediately to the storefront window terminal 210 by omitting the operation of sending the box set file ID to the client terminal 300 after the box set is created in the storefront gateway 220. Further, the programs of executing the license sale control operation can be simplified, and an application can prevent the trouble from being caused to some degree.

### (Third Embodiment)

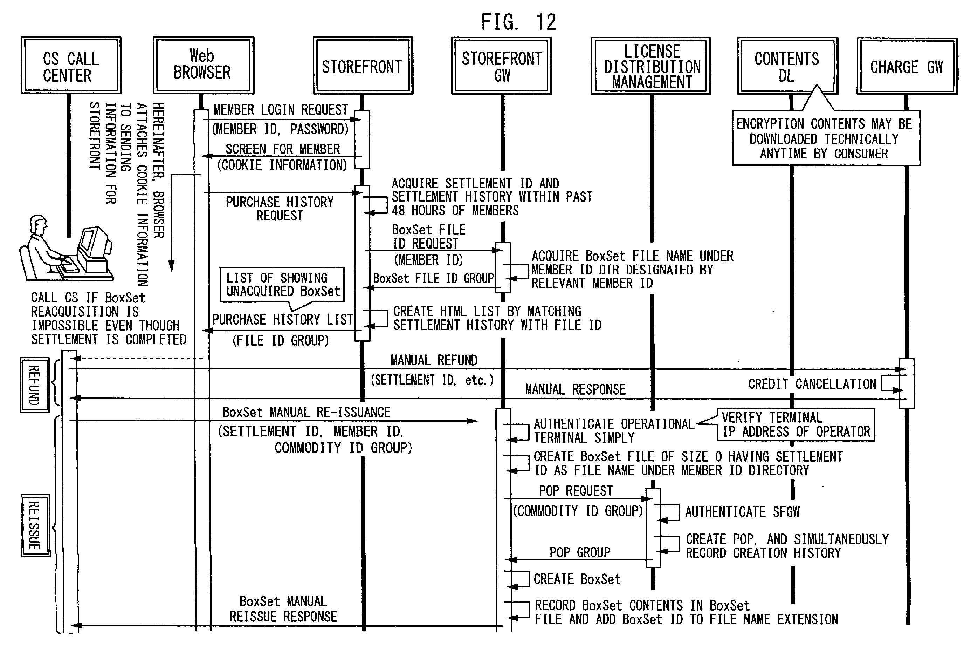

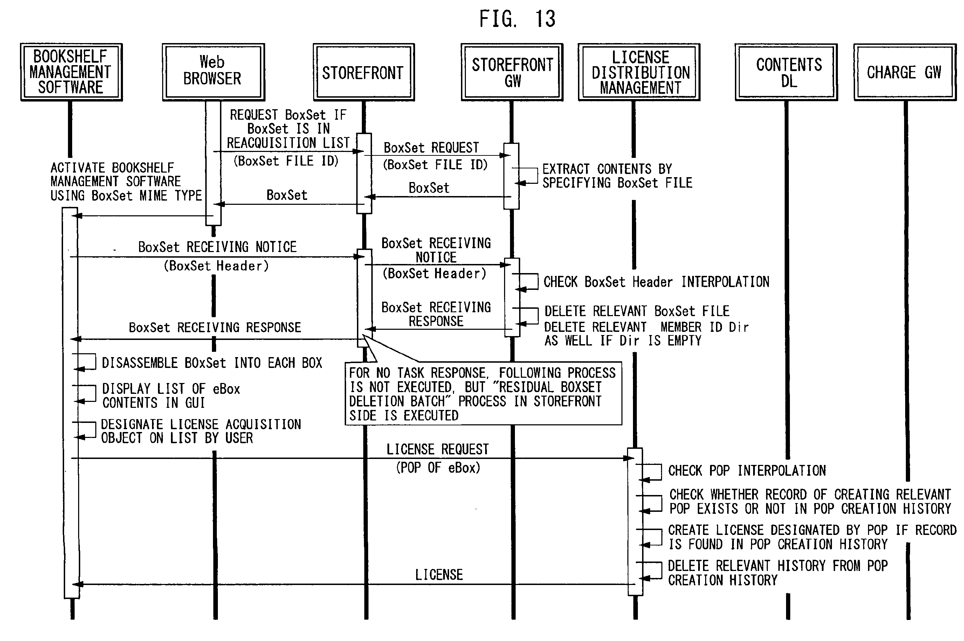

FIGS. 12 and 13 are sequence charts of the response operations of the case in which a task of the storefront server 200 cannot respond although the operation of settling accounts was executed by sending the purchase request to the storefront server 200 from the client terminal 300 in the license sale system with respect to the third embodiment of the present invention.

In this embodiment, as indicated in FIG. 12, the client terminal 300 executes the operation of requesting the member login to the storefront server 200 from the web browser 302. The member ID and the password are attached to this member login request. On the side of the storefront server 200, the client request receiving means 211 of the storefront window terminal 210 receives the foregoing login request and it takes in the member ID and the password. Next, the storefront window terminal 210 sends the information of the cookie and the member display screen including a various types of operation menus (including a trouble corresponding operation) to the web browser 302. After this operation, the web browser 302 attaches the cookie information to the information of sending to the storefront window terminal 210.

The web browser 302 selects a purchase history request from the various types of operation menus and then sends this purchase history request to the storefront server 200.

Next, on the side of the storefront server 200, the purchase request answering means 213 of the storefront window terminal 210 gets the settlement ID and a settlement history within a predetermined time (e.g. 48 hours) of the member, then requests a box set file ID to the storefront gateway 220. In the storefront gateway 220, the box set file name under the member ID directory indicated by the relevant member ID is acquired from the box set file management means 222, and the box set file ID (an ID group in the case of plurality) is sent to the storefront window terminal 210. On the side of the storefront window terminal 210, a purchase history list HTML is created by matching a settlement history with the box set file ID. If there is a box set which has not yet been acquired, its box set is pointed out specifically in this purchase history list. The storefront window terminal 210 sends the foregoing purchase history list to the client terminal 300. The client terminal 300 checks the purchase history list which has been sent, and informs a call center in the event that the box set cannot be acquired again although the settlement has been completed.

There are at least two processes for executing succeeding processes after this stage.

### (Corresponding process 1: refund process)

In this process, the call center executes a refund process between the accounting process unit 500 and the call center. In this case, the call center sends a manual refund request to the accounting process unit 500. Data such as the settlement ID and the member ID is attached to this manual refund request. In the accounting process unit 500, the process of canceling a credit operation is executed, then a manual refund response is returned to the call center. Accordingly, the client terminal 300 can receives a refund.

### (Corresponding process 2: reissue process)

In this process, the call center sends a box set manual reissue request to the storefront server 200. In this manual reissue request, data such as the settlement ID, a member ID, and a commodity ID group is attached to this manual reissue request. In the storefront server 200, the storefront gateway 220 checks to confirm whether or not the manual reissue request from the foregoing call center is normal. This check is executed by the process of simple authentication for the call center, e.g. the process of verifying the IP address of the operator terminal of the call center. Then, the storefront gateway 220 sends the request of the proof of purchase to the license distribution management means 100 (POP request). For this POP request, a commodity ID group is attached as sending data.

Upon receiving the foregoing POP request, the license distribution management means 100 checks to confirm whether or not the POP request from the storefront gateway 220 is normal. This check operation is executed by the process of authenticating the storefront gateway, e.g. the process of SSL mutual verification, etc. After the storefront gateway 220 is verified, the proof of purchase (POP) is created by the proof of purchase creation means 101 of the license distribution management means 100. At the same time, the proof of purchase creation history is recorded by the proof of purchase creation means 101, and this proof of purchase creation history is stored in the proof of purchase creation history storing means 120. Then, the proof of purchase thus created is sent to the storefront gateway 220. Further, a proof of purchase group (POP) is sent if the two or more proof of purchases are created.

In the storefront gateway 220 which has received the proof of purchase, the box set is created by grouping plural eBoxes as one set, as well as the eBox is created for each proof of purchase in the box set creation means 224. The box set ID is attached to this box set, and further the foregoing box set ID is attached to the extension of the box set file name, as well as the contents of the box set are recorded in the corresponding box set file. Then, the box set manual reissue response is sent to the call center from the storefront gateway 220. Accordingly, the client terminal 300 can acquire again the box set by executing the operation of "UNCERTAIN ACQUIRED BOX SET LIST REQUEST."

FIG. 13 is a sequence chart of the operation of requesting again the box set in the event that the uncertain acquired box set is found in a reacquired list. In this case, the box set request is sent to the storefront window terminal 210 from the web browser 302. In this process, the box set file ID is attached as data. Then, on the side of the storefront server 200, the purchase request answering means 213 of the storefront window terminal 210 receives the foregoing box set request, and transferred this box set request to the storefront gateway 220. In this process, the box set file ID is also attached as data. In the storefront gateway 220, when the foregoing box set file request is received, the relevant box set is extracted from the box set file management means 222 based on the box set file ID and sent to the box set provision means 226, then the box set provision means 226 sends this box set to the storefront window terminal 210.

Upon receiving the box set, the storefront window terminal 210 sends the box set to the client terminal 300 from the purchase request answering means 213. In the event that the client terminal 300 receives the box set, the bookshelf management means 301 is activated with the MIME type of the box set, and the notice of receiving the box set is sent to the storefront server 200 from the bookshelf management means 301, as well as the box set is stored so as to be bookshelf-managed. This is a notice to confirm that the client terminal 300 has received the box set from the storefront server 200 in the event that the box set is reissued in progress. Thus received box set receiving notice is sent to the storefront gateway 220 from the purchase request answering means 213 of the storefront window terminal 210.

If the storefront gateway 220 receives the box set receiving notice, the storefront gateway 220 checks to confirm whether or not the box set header is interpolated. If there is no interpolation, the relevant box set file is deleted from the box set file management means 222. In this way, if the notice of receiving the box set is received, since the storefront gateway 220 deletes the box set file and there is no nonconformity in such a manner that the same box set is repeatedly sent to the client terminal 300, a secure process can be executed. At this stage, when the directory for the member ID becomes empty since the box set file is deleted, the member directory itself is deleted. Accordingly, unnecessary data is not left in a limited memory region for a long time, thus the memory can be used effectively. After the foregoing processes, the response of receiving the box set is returned to the storefront window terminal 210 from the storefront gateway 220, and further this response of receiving the box set is responded to the bookshelf management means 301 of the client terminal 300 from the storefront window terminal 210. In the present embodiment, if the task has no response in the process of responding and notifying to such a series of receiving processes in which the box set receiving response is returned to the bookshelf management means 301 via the storefront window terminal 210 from the storefront gateway 220 after the receiving notice of the box set is sent to the storefront gateway 220 via the storefront window terminal 210 from the bookshelf management means 301, the process of responding and notifying repeatedly to the receiving process is not executed. Further, the process is transferred to "RESIDUAL BOX SET DELETION BATCH" of the storefront gateway 220.

### (Fourth Embodiment)

Then, the fourth embodiment of the present invention is hereinafter explained. The operation of the license distribution system of this fourth embodiment is explained by exemplifying the case where the user (customer) having or operating the client terminal 300 wants to purchase the license of an electronic book on the Internet as an example of the network. Besides, the method for purchasing the license of the foregoing electronic book is targeted to the case of bulk purchasing the licenses of plural bundle sale books as a package commodity or purchasing a periodical publication monthly in addition to purchasing a license of each electronic book. A license of each electronic book is purchased by the same operation as the foregoing operations explained in the foregoing first to third embodiments. At this point, the structure of the license distribution system is the same as the structure of FIG. 1.

In the present embodiment, the commodity information database 110 has type information to discriminate each commodity registered therein from the cases where its commodity is a license commodity (explained hereinafter) sold one by one using predetermined availability, its commodity is a subscription commodity that is sold for a predetermined termbased on a monthly contract, etc., or its commodity is a package commodity in which plural commodities are bundle sold as a package. Further, the commodity information database 110 has a function as a commodity management means for managing the commodities by linking the subscription commodity or the package product with a license commodity for each commodity registered in the commodity information database 110. Apart of information of the commodity information database 110 is sent to the storefront server 200, and stored in the commodity list storing means 212 of the storefront window terminal 210.

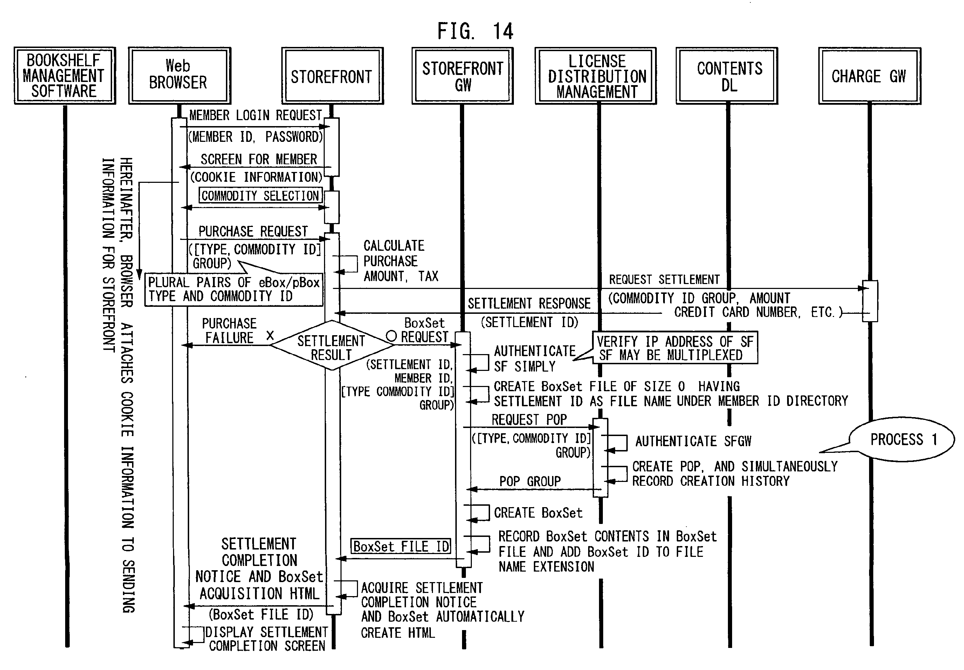

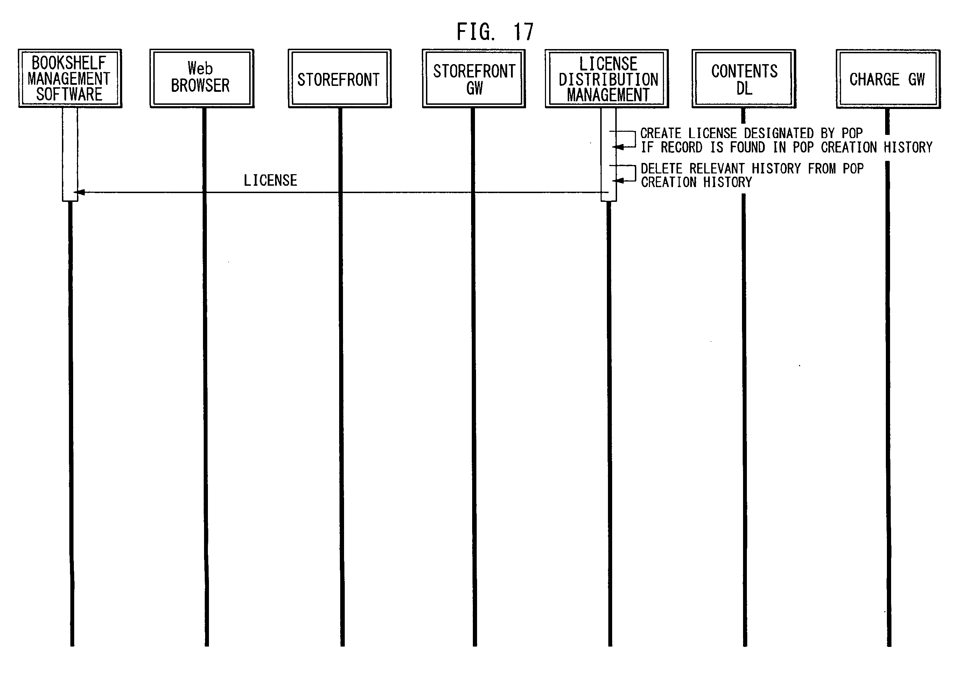

FIGS. 14 to 17 are sequence charts of the operation of controlling the license sale of the license sale system of the present invention. In FIG. 14, at first stage, the client terminal 300 issues the member login request from the web browser 302 to the storefront server 200. In this member login request, the member ID and the password are attached. On the side of the storefront server 200, the client request receiving means 211 of the storefront window terminal 210 receives the foregoing login request and takes in the member ID and the password. Then, the storefront window terminal 210 reads out a list of the commodities from the commodity list storing means 212 and sends the information of a member picture screen and the cookie to the web browser 302. After this operation, the web browser 302 attaches the cookie information to the information sent to storefront window terminal 210. The meaning of the list of the commodities indicates the information of explaining or guiding the rights of using the contents sold by the storefront server 200.

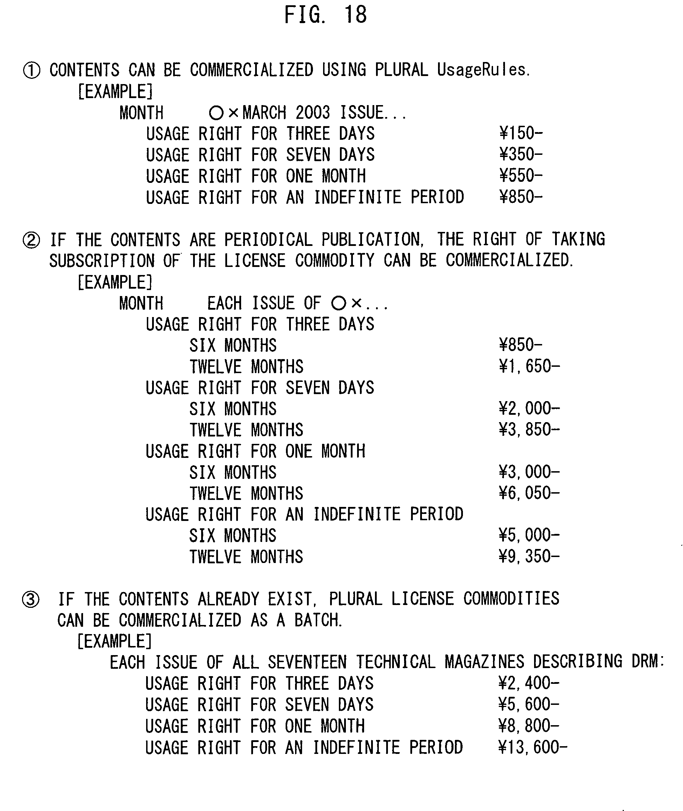

A part of the list of the commodities of the rights of using the license guided by the list of the commodities is exemplified in FIG. 18. The contents of this list of the commodities are also expected by the license sale system of the present embodiment.

As the contents thereof, as the first example, the contents can be commercialized by way of two or more usage methods (Usage Rule) . In this specification, each commodity specified by way of each usage rule is referred to as "LICENSE COMMODITY." As an example thereof, there is the case of ruling the usage rights of a monthly magazine Ox, 2003 March by setting out the usage term and the selling price as follows:

| | |
|---|---|
| Usage right for three days | ¥150- |
| Usage right for seven days | ¥350- |
| Usage right for one month | ¥550- |
| Usage right for an indefinite period | ¥850-, |

where, each of "Usage right for three days ¥150-," "Usage right for seven days ¥350-," "Usage right for one month ¥550-," ····· indicates each license commodity. This license commodity can be purchased as a monthly purchase and/or a single purchase. This is the same as the case where the monthly magazine can be purchased using the monthly contract or the magazine of "Issue Δ" sold at the present time can be purchased even if the monthly contract is not made.

The second example of guiding commodities is commercialization of the subscription rights of the license commodities for periodical publications such as monthly and weekly magazines. This item is referred to as "SUBSCRIPTION COMMODITY" in this specification. This means the license commodity sold based on the monthly contract. As an example thereof, there are commodities in which the usage rights are provided for each publication issue of monthly publications Ox by setting a usage term, a monthly contract term, and the price as follows:

| Usage right for three days | | |
|---|---|---|
| | Reading for six months | ¥ 850- |
| | Reading for twelve months | ¥1,650- |

| Usage right for seven days | | |
|---|---|---|
| | Reading for six months | ¥2,000- |
| | Reading for twelve months | Y3,850- |

| Usage right for one month | | |
|---|---|---|
| | Reading for six months | ¥3,000- |
| | Reading for twelve months | ¥6,050- |

| Usage right for an indefinite period | | |
|---|---|---|
| | Reading for six months | ¥5,000- |
| | Reading for twelve months | ¥9,350-, |

where, each of "Usage right for three days, Reading for six months ¥ 850-, " "Usage right for three days, Reading for twelve months ¥1, 650-," "Usage right for seven days, Reading for six months ¥2, 000-," "Usage right for seven days, Reading for twelve months ¥3,850-"···· indicates each subscription commodity.

The third example of guiding commodities is the item of a bundle (group) commercializing plural license commodities, if the contents exist (already published). This item is referred to as "PACKAGE COMMODITY" in this specification. As an example thereof, there are commodities of providing the usage rights for each issue of all the seventeen technical magazines de scribing DRM by setting the usage term and the price as follows:

| | |
|---|---|
| Usage right for three days | ¥ 2,400- |
| Usage right for seven days | ¥ 5,600- |
| Usage right for one month | ¥ 8,800- |
| Usage right for an indefinite period | ¥13,600-, |

where, each of "Usage right for three days ¥ 2,400-," "Usage right for seven days ¥ 5,600-," "Usage right for one month ¥ 8,800-,"···· indicates each package commodity. This sale of the package commodity corresponds to the sale of a back number magazine, etc.

As explained in the foregoing, if the commodities are subscription commodities and/or package commodities, plural commodities (e.g. six issues in the case of six month reading subscription based on monthly contract) are bundles as one group under a certain rule (or term), and its group is treated as one commodity.

The commodity to be purchased is selected between the storefront window terminal 210 and the web browser 302, and the user decides the item to be purchased by watching the foregoing guide information of the commodity list. The number of the commodities to be purchased may be one or more kinds among the foregoing license commodities, subscription commodities, and package commodities, and the number of units for purchasing may be one or more commodity items. When the purchase item is decided, the purchase request of a license is sent to the storefront window terminal 210 from the web browser 302. In this process, the kind of the purchase item and a commodity ID group are sent as transmitting data.

Then, on the side of the storefront server 200, the purchase request answering means 213 of the storefront window terminal 210 receives the foregoing purchase request and calculates the purchase amount and tax from the purchase items. Then, when the amount is calculated, the amount data is sent to the settlement means 214 and the settlement means 214 issues the settlement request to the accounting process unit 500. For this settlement request, data such as the commodity ID group, the amount, and the credit card number is sent to the accounting process unit 500 from the settlement means 214. The accounting process unit 500, if the settlement process is completed, returns the response of settlement to the storefront window terminal 210. The settlement ID is attached to this settlement response.

The storefront window terminal 210 checks to confirm whether or not the result of the foregoing settlement process is correct in the purchase request answering means 213. If the result of the foregoing settlement process is not correct, the network telecommunication for requesting and/or receiving to purchase the license is terminated. The condition that the settlement result is not correct indicates the case where the settlement has not been performed correctly, the relevant credit card number cannot be found, and remaining money is not enough. If the settlement result is normal, within the storefront server 200, the proof of purchase is requested to the storefront gateway 220 from the storefront window terminal 210 by requesting the box set. For requesting this box set, the foregoing settlement ID, the member ID, and the commodity ID group received from the client terminal 300 are sent as sending data.

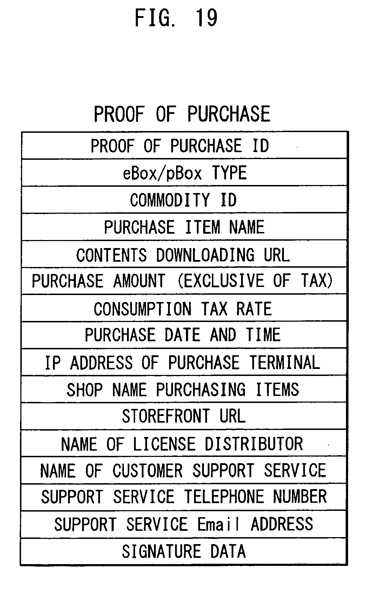

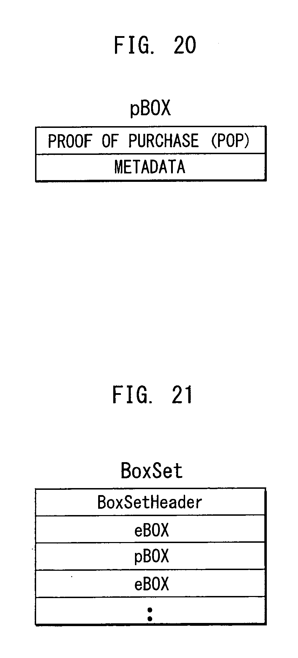

At this point, the relationship between the proof of purchase and the box set is explained. FIG. 19 is the data structure of the proof of purchase. The proof of purchase of FIG. 19 is slightly different from the structure of FIG. 4, thus the proof of purchase of FIG. 19 is referred to as the "second proof of purchase." This second proof of purchase is created by the proof of purchase creationmeans 101 of the license distribution management means 100. This second proof of purchase includes respective data of the proof of purchase ID, data for discriminating whether the commodity (a receipt to be created will be the eBox) corresponding to a regular license commodity or the license commodity (hereinafter, referred to the subscription commodity or the package commodity. In this case, a receipt to be created will be a pBox.) corresponding to the subscription commodity and the package commodity, the commodity ID, the purchase item name (commodity name) and the contents download URL, the amount of purchase (tax excluded), the consumption tax rate, the purchase date and time, the purchase terminal IP address, the purchase shop name, the license distribution business owner name, the customer support name, the support telephone number, the support Email address, and the signature data. At this point, the signature data indicates data in which the body of the proof of purchase is encrypted by the specified key and logic, and the signature is made at the time that the proof of purchase is created by the proof of purchase creation means 101 of the license distribution management means 100. Each proof of purchase is created to each commodity uniquely, and the purchase data is sent to the storefront gateway 220 from the license distribution management means 100 so as to create the eBox by integrating the proof of purchase with metadata, when the foregoing one proof of purchase is created and signed when the commodity is the license commodity. The structure of data of the eBox is the same as the structure of FIG. 5. Further, in the event that plural commodities are grouped under a certain rile and treated as the subscription commodity or the package commodity, one commodity ID is attached to its group. If the foregoing one proof of purchase is created and signed to such a subscription commodity, the pBox is created by integrating the proof of purchase with metadata by sending from the license distribution management means 100 to the storefront gateway 220. FIG. 20 is the structure of data of the pBox. If there are plural proofs of purchases, that is to say, plural commodity IDs are designated, a group of proof of purchases, that is to say, plural proof of purchases are sent from the license distribution management means 100 to the storefront gateway 220. Then, two or more eBoxes and pBoxes are created corresponding to the number of purchasing commodities in the storefront gateway 220 as well as those plural eBoxes and pBoxes are grouped so as to create the box set.

FIG. 21 is the structure of the box set BoxSet. The different point of the box set between FIG. 21 and FIG. 6 is that the box set of FIG. 21 is composed of the box set header BoxSetHeader, one or more eBoxes, and one or more pBoxes. In the example of FIG. 10, the set box is structured in the order of eBox, pBox, and eBox from the upper position to the lower position. The condition whether the number of the eBoxes and/or the pBoxes of the box set is one or more depends on the condition whether the number of commodities corresponding to the eBoxes and/or the pBoxes purchased by the user is one or more. Accordingly, it is obvious that the proof of purchase, the eBox, the pBox, and the box set are basically identical to each other and the proof of purchase is a basic element of each structure. Further, the proof of purchase, the eBox, the pBox, and the box set can be treated as electric data corresponding to the receipt (a return receipt or the claim ticket may be used) of general transactions. Therefore, the process of the box set file management means 227 is identical to the operation of managing the receipt at the time of purchasing items of the user. The structure of data of the box set header is the same as FIG. 7.

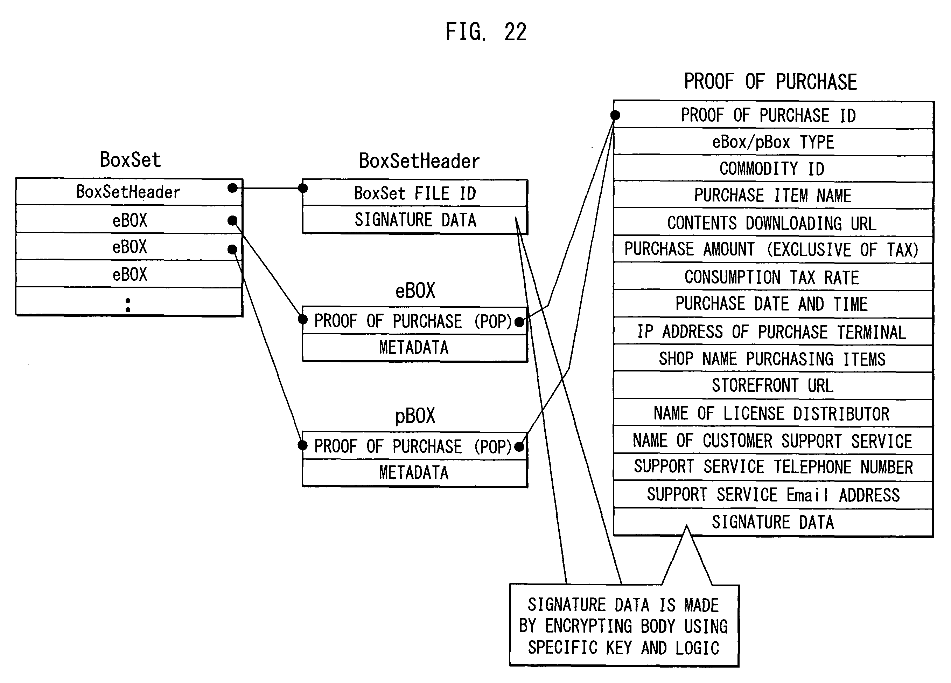

FIG. 22 indicates the related structure condition among the foregoing proof of purchase, eBox, pBox, and box set. That is to say, the proof of purchase is contained in the eBox and the pBox as chief structure elements, the box set gathers those eBoxes and/or pBoxes as one set, and the box set header is attached thereto so as to define (prescribe) this box set.

The structure of the box set file ID created by the storefront gateway 220 is the same as the structure of FIG. 8.

As explained in the foregoing, if the settlement result is normal, the proof of purchase is requested as the box set request to the storefront gateway 220 from the storefront window terminal 210 in the storefront server 200. For requesting this box set, the commodity ID groups and classified data attached to the purchase request from the web browser 302 are attached as sending data. Then, in the event that this box set request is made, the storefront gateway 220 checks whether or not the box set request from the foregoing storefront window terminal 210 is normal. This type of check is executed by processing brief authentication for the storefront window terminal 210. For example, the process of verifying an IP address of the storefront window terminal 210 is executed. Two or more storefront window terminals 210 may be connected to the storefront gateway 220. In this case, the IP addresses of the storefront window terminals 210 may be multiplexed.

After the storefront window terminal 210 is authenticated, the box set file creation means 221 of the storefront gateway 220 creates the box set file having the settlement ID as a file name under the directory of the member ID. The foregoing settlement ID is the settlement ID attached to the settlement answered from the accounting process unit 500 in the foregoing settlement process. At this point, the box set ID is not recorded since the box set is not yet created at this stage. The box set file created in this way is stored in the box set file management means 222. The storefront gateway 220 sends the request of the proof of purchase to the license distribution management means 100 (POP request) after the foregoing box set file is created. For this POP request, the commodity ID groups and the classified data attached to the box set request from the storefront window terminal 210 are attached as sending data.

Upon receiving the foregoing POP request, the license distribution management means 100 checks to confirm whether or not the POP request from the storefront gateway 220 is normal. This checking operation is executed by the process of storefront gateway authentication, e.g. the process of SSL mutual authentication, etc. After the storefront gateway 220 has been authenticated, the proof of purchase (POP) is created by the proof of purchase creation means 101 of the license distribution management means 100. The proof of purchase creation means 101 creates the proof of purchase by reading out data necessary for the commodity from the commodity information database 110. At the same time as this process, the history of creating the proof of purchase is recorded by the proof of purchase creation means 101, then this history of creating the proof of purchase is stored in the proof of purchase creation history storing means 120.

At this point, the operation of creating the foregoing the proof of purchase and the operation of recording the history of creating the proof of purchase are explained herein as a process 1.

### (Operation of process 1)

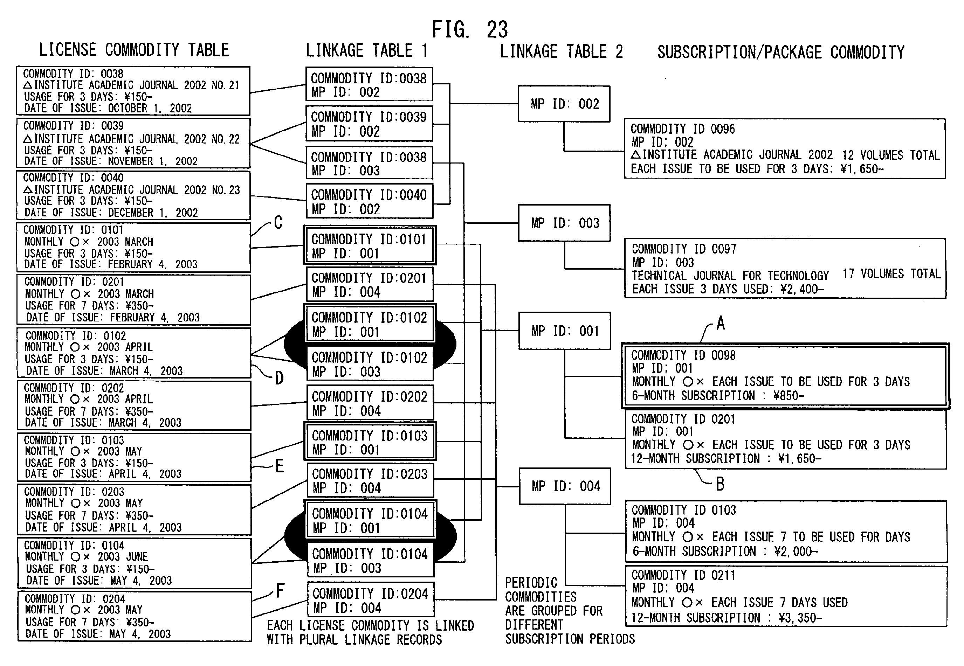

FIG. 23 is a link management chart of the commodity information database 110 as a commodity management means managing the commodities by linking the subscription commodities and/or the package commodities (hereinafter, referred to as a subscription/package commodity) with the relevant license commodities. In FIG. 23, there is created each field of a license commodity table expressing the license commodity by a table format in the left end side. Further, there is created each field of the subscription/package commodity expressing the subscription/package commodity by a table format in the right end side. In the license commodity list, each of the contents of the commodity ID, the purchase item name and the rights of using the license is recorded or registered for one kind of commodity. In the subscription/package commodity table, each of the contents of the commodity ID, the purchase item name and the rights of using the license is recorded or registered for a grouped commodity. Each linkage table 1 and each linkage table 2 are provided between the license commodity table and the subscription/package commodity table. The linkage table 1 and the linkage table 2 have a function to link each commodity of the license commodity table with each commodity of the subscription/package commodity table.

The linkage table 2 is created by attaching ID (MPID) as a common identifier for bundling the subscription commodities for each of the contents of the rights of using the commodities registered in the subscription/package commodity table, that is to say, having the same reading period and/or any relevant subscription commodities or package commodities. That is to say, the linkage table 2 is created by attaching a different MPID by extracting the commodity for each of the rights of using three days, the rights of using seven days, ···· of the commodity table of the rights of using the license as indicated in FIG. 18. In FIG. 23, MPID 001 indicates ID attached to all of subscription commodities relevant to three days usage rights for each issue of monthly publication Ox. In the same way, MPID 004 indicates ID attached to all of subscription commodities relevant to seven days usage rights for each issue of monthly publication Ox. MPID 003 indicates ID attached to the package commodity composed of all the seventeen technical magazines with respect to DRM technology. Further, MPID 002 indicates ID attached to the package commodity composed of all twelve volumes of Δ scientific society of academic journals 2002.

At this point, the linkage table 1 is a table in which each commodity ID and the foregoing MPID are extracted from data of the commodities of the license commodity table so as to correspond to each commodity one by one. Further, one license commodity of plural linkage tables 1 is related to each record of each linkage table 2.

At this stage, in FIG. 23, the commodity (referred to A) of the subscription/package commodity table which is enclosed by a double line frame is considered as an example. The commodity ID of the commodity is 0098, and MPID thereof is 001. Then, the contents of the license indicate "Usage rights for three days for each issue of the monthly magazine ox shall be practiced (read) for six months" and this means the subscription commodity. On the contrary, the commodity (referred to B) having a frame under A is considered. The commodity ID of the commodity is 0201 and MPID thereof is 001. Then, the contents of the license indicate "Usage rights for three days for each issue of the monthly magazine Ox shall be practiced (subscribed) for twelve months" and this also means the subscription commodity. The commodity A and the commodity B have the same contents in the point of "Usage rights for three days for each issue of the monthly magazine O×," thus each MPID has the same 001. The fourth commodity (referred to C) from the top of the license commodity tables is considered. The commodity ID of the commodity is 0101 and the contents of the license indicate "Usage rights for three days for 2003 March issue of the monthly magazine O×." This means the license commodity. Comparing the commodity C with commodities A and B, they have the same contents in the point of "Usage rights for three days for the monthly magazine O×." Thus, they are linked to commodities A and B using an identifier MPID 001 via the linkage table 1 and the linkage table 2. In the same way, the commodities D, E, and F of the license commodity tables of FIG. 23 are also linked to the commodities A and B. For the license commodity tables of FIG. 23, the commodity ID of the commodity D is 0102 and data of "MPID 001" and "MPID 003" is created in the linkage table 1. This means that the commodity D has an attribute linked to the commodity (commodities for commodity ID 0097) as the package commodity in the point of being included in "All seventeen books of technical journals for DRM technology" while the commodity D has an attribute linked to the commodities A and B as the subscription commodity in the point of "Usage rights for three days for the monthly magazine O×." The linkage connectivity of FIG. 23 is made in the same way as above explained.

If the kind data received via the storefront window terminal 210 and the storefront gateway 220 from the web browser 302 indicate the pBox, the license distribution management means 100 searches and designates the commodity having the foregoing received commodity ID in the "commodity ID" field of the records of the subscription/package commodity table of FIG. 23.

At this point, it is provided that the commodity ID is "0098" and the commodity A is identified. Providing the contents of the commodity A, "Usage rights for three days for each issue of the monthly magazine ox shall be practiced (read) for six months" is defined.

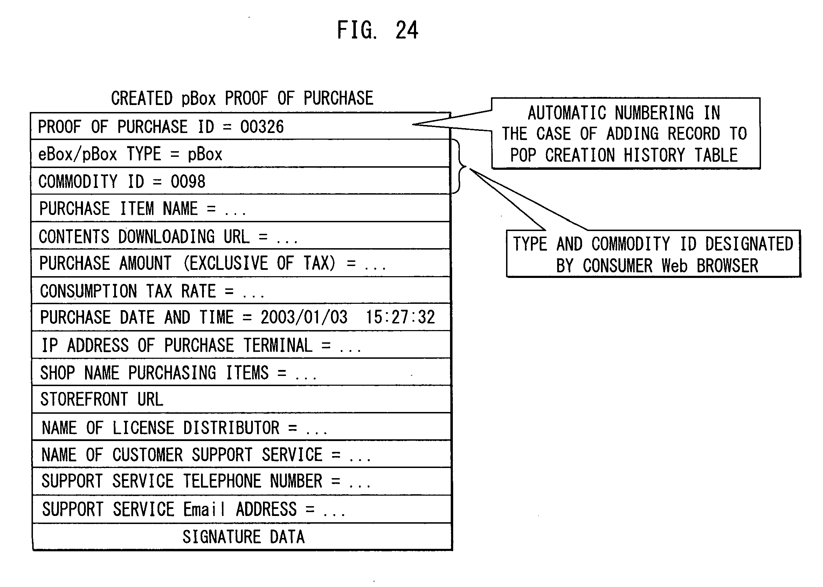

Then, the license distribution management means 100 creates the proof of purchase using information maintained by the record acquired by the subscription/package commodity table in the proof of purchase creation means 101. The proof of purchase created by such a proof of purchase creation process is indicated in FIG. 24. In this proof of purchase, "00326" is attached to the proof of purchase ID. This number is attached for creating this proof of purchase as a serial number attached each time the proof of purchase which has been executed from the past is created. The type of eBox/pBox is recorded as the pBox, and it is designated that the pBox shall be created for creating eBox or pBox in succeeding processes. The commodity ID is "0098." The proof of purchase name, contents download URL, etc. are recorded based on respective data. As the purchase date and time, "2003 January 3, 15:27:32" is recorded. Then, if various information data are recorded, signature data are attached by the license distribution management means 100.

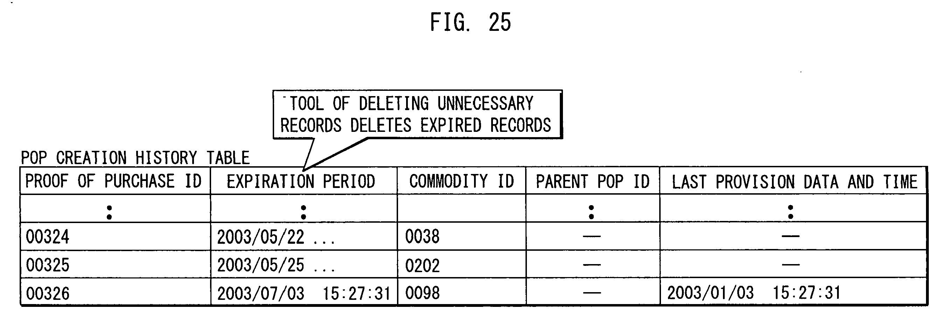

On the other hand, the license distribution management means 100 records proof of purchase creation history, as well as license distribution management means 100 creates the foregoing proof of purchase. FIG. 25 is an example of a proof of purchase creation history table which records proof of purchase creation history. This proof of purchase creation history table is stored in the proof of purchase creation history storing means 120, and includes a memory region for a proof of purchase ID field, a expiration date field, a commodity ID field, a parent proof of purchase ID field, and a last provision date field. In this proof of purchase creation history table, "00326" is recorded in the proof of purchase ID field. "2003 July 3, 15:27:31" is recorded in the expiration date field. This indicates the end data of "Reading for 6 months." "0098" is recorded in the commodity ID field. None is recorded in other fields since none is decided at this moment in time.

If this proof of purchase creation history is recorded, the proof of purchase created in the foregoing is sent to the storefront gateway 220. Further, if two or more proof of purchases are created, a group of proof of purchases (POP group) are sent. In this case, depending on thus created proof of purchase, the type of eBox/pBox may be mixed, having both types of the eBox and the pBox. In the following explanation, the only pBox is considered so as to avoid confusion.

In the storefront gateway 220 which received the proof of purchase (pBox), the box set creationmeans 224 grouped plural pBoxes as one set so as to create the box set (refer to FIG. 21), and stores and maintains the box set in the box set file management means 222. The box set ID is attached to this box set. Further, the foregoing box set ID is attached to the extension of the box set file name, as well as the contents of the box set are recorded in the corresponding box set file. Then, while the foregoing box set is maintained in the box set file management means 222, the box set file ID is sent to the storefront window terminal 210 from the storefront gateway 220.

If the storefront window terminal 210 receives the box set file ID, the storefront window terminal 210 creates HTML for settlement completion notice and box set automatic acquisition in the purchase request answering means 213. The box set file ID received from the storefront gateway 220 is included in this HTML. The HTML for the foregoing settlement completion notice and box set automatic acquisition is sent to the web browser 302 of the client terminal 300 from the purchase request answering means 213.

The client terminal 300 displays the completion of settlement in the displaymeans 304 based on HTML for thus received settlement completion notice and box set automatic acquisition. In the display screen, "THANK YOU VERY MUCH FOR YOUR PURCHASE. NOW, RECEIPT (PROOF OF PURCHASE) WILL BE RECEIVED." is displayed, for example.

Then, the web browser 302 of the client terminal 300 activates automatically the procedure (or process) of acquiring the box set, and the process of acquiring the box set is started. If the process of acquiring the box set is started, the box set request is sent to the storefront window terminal 210 from the web browser 302. In this process, the box set file ID is attached as data. Then, on the side of the storefront server 200, the purchase request answering means 213 of the storefront window terminal 210 receives the foregoing box set request, and the purchase request answering means 213 transferred this box set request to the storefront gateway 220. In this process, the box set file ID is also attached as data. In the storefront gateway 220, if the foregoing box set request is received, the relevant box set is extracted from the box set management means 222 based on the box set file ID and transferred to the box set provision means 226, then the box set provision means 226 sends this box set to the storefront window terminal 210.

If the storefront window terminal 210 receives the box set, the storefront window terminal 210 sends the box set to the web browser 302 of the client terminal 300 from the purchase request answering means 213. If the web browser 302 receives the box set, the bookshelf management means 301 is activated with the MIME type of the box set, and the notice of receiving the box set is sent to the storefront server 200 from the bookshelf management means 301, as well as the box set is stored so as to be bookshelf-managed. This box set receiving notice is a notice to confirm that the client terminal 300 has received the box set from the storefront server 200. This box set receiving notice is sent to the storefront gateway 220 from the purchase request answeringmeans 213 of the storefront window terminal 210. The box set header is attached if the box set receiving telecommunication is performed.

Upon receiving the box set, the storefront gateway 220 checks to confirmwhether or not the box set header is interpolated. If there is no interpolation, the storefront gateway 220 deletes the relevant box set file from the box set file management means 222. In this way, when the notice of receiving the box set is received, since the storefront gateway 220 deletes the box set file and there is no nonconformity in such a manner that the same box set is repeatedly sent to the client terminal 300, thus the secure process can be executed. At this stage, when the directory for the member ID becomes empty since the box set file is deleted, the member directory itself is deleted. Accordingly, unnecessary data is not left in a limited memory region for a long time, thus the memory can be used effectively. After the foregoing processes, the response of receiving the box set is returned to the storefront window terminal 210 from the storefront gateway 220, and further this response of receiving the box set is responded to the bookshelf management means 301 of the client terminal 300 from the storefront window terminal 210.

In the next stage, the process of acquiring a group of eBoxes from the client terminal 300 is started. The proof of purchase of the pBox received in the prior process is attached to this eBox request. When the process of requesting the eBox is started, the eBox request is sent to the storefront window terminal 210 from the bookshelf management means 301. In this process, the proof of purchase of the pBox received in the prior process is attached. Then, on the side of the storefront server 200, the purchase request answering means 213 of the storefront window terminal 210 receives the foregoing eBox request, and then transferred this eBox request to the storefront gateway 220. In this process, the proof of purchase of the pBox is attached as data. In the storefront gateway 220, it is checked to confirm whether or not the eBox request from the storefront window terminal 210 is normal. This checking operation is executed by the process of verifying simply the storefront window terminal 210, e.g. the process of verifying the IP address of the storefront window terminal 210, etc. Two or more storefront window terminals 210 may be connected to the storefront gateway 220. In this case the IP address of the storefront window terminal 210 may be multiplexed.

After the storefront window terminal 210 is authenticated, the storefront gateway 220 creates the foregoing box set file and then sends the eBox request (POP request) to the license distribution management means 100. For this eBox request, the proof of purchase of the pBox sent from the bookshelf management means 301 is attached as sending data. Upon receiving the foregoing eBox, the license distribution management means 100 checks to confirm whether or not the eBox request from the storefront gateway 220 is normal. This checking operation is executed by the process of storefront gateway authentication, e.g. the process of SSL mutual authentication, etc. After the storefront gateway 220 has been authenticated, the license distribution management means 100 checks to confirm whether or not the proof of purchase of the pBox received from the foregoing storefront gateway 220 is interpolated. Then, the proof of purchase of the eBox (POP) is created by the proof of purchase creation means 101 of the license distribution management means 100. At the same time as this process, the history of creating the proof of purchase is recorded by the proof of purchase creation means 101, then this history of creating the proof of purchase is stored in the proof of purchase creation history storing means 120.

At this point, the processes of creating the proof of purchase of the foregoing eBox and this recording proof of purchase creation history are explained as process 2.

### (Operation of process 2)

In this process 2, the proof of purchase of the eBox using pBox is issued. In this process 2, the process is executed in the following processing way.
Step 1: To begin with, the proof of purchase creation means 101 of the license distribution management means 100 acquires "eBox/pBox type" and the "commodity ID" from the proof of purchase of the pBox indicated via the storefront gateway 220 by the bookshelf management means 301. At this point, since the eBox/pBox type is the "pBox," a record having the foregoing acquired commodity ID as the "commodity ID" of the "subscription/package commodity table" records of FIG. 23, to put it concretely, one record (hereinafter, referred to as a commodity record) having a "commodity ID 0098" is searched for and identified.
Step 2: Next, the proof of purchase creation means 101 acquires the MPID recorded in the "MPID" field of the commodity record, then records having the foregoing acquired MPID as the "MPID" field of the records of the linkage table 1, to put it concretely, all the records (hereinafter, referred to as a group of records of extracting the linkage table 1) having "MPID 001" are searched for and identified.
Step 3: Next, the proof of purchase creation means 101 acquires the commodity ID recorded in the "commodity ID" field of each record of a group of records of extracting the linkage table 1, then all the records (hereinafter, referred to as a group of records of extracting the license commodity table) having the foregoing acquired commodity ID as the "commodity ID" field are searched for and identified.
Step 4 : Further, the proof of purchase creationmeans 101 extracts all the records from a group of records of extracting the license commodity table, corresponding to the term defined by the present date and time and the date and time included in the last provision date field of the record of the "proof of purchase creation history table" corresponding to the proof of purchase of the foregoing pBox of the proof of purchase creation history table and the purchase date and time of the proof of purchase of the pBox indicated by the bookshelf management means 301 at the foregoing Step 1.
Step 5: Further, the proof of purchase creation means 101 creates the proof of purchase using information recorded in each record acquired at the foregoing Step 4. At the same time, the present date and time are overwritten in the last provision date field of the record of the "proof of purchase creation history table" corresponding to the proof of purchase of the pBox indicated by the bookshelf management means 301 at the foregoing Step 1. Step 6: The proof of purchase creation means 101 creates the record of "proof of purchase creation history table" corresponding to the proof of purchase created at the foregoing Step 5.

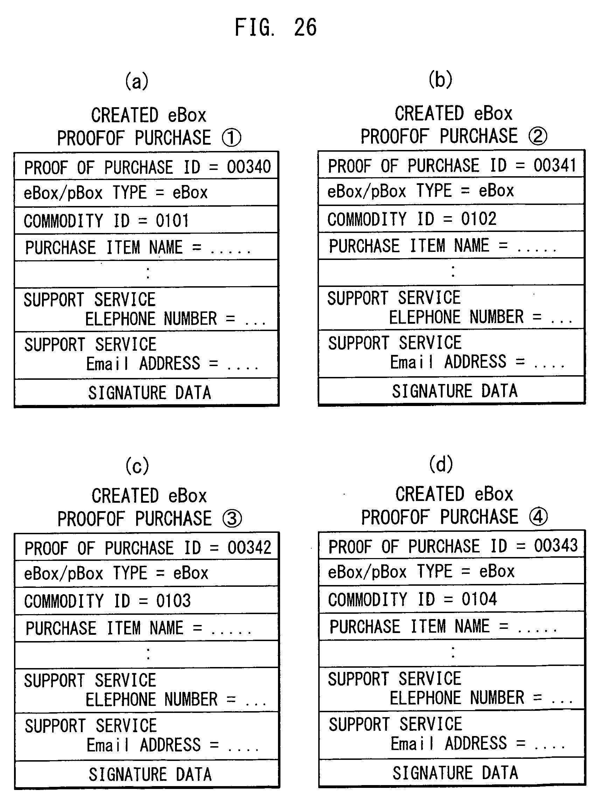

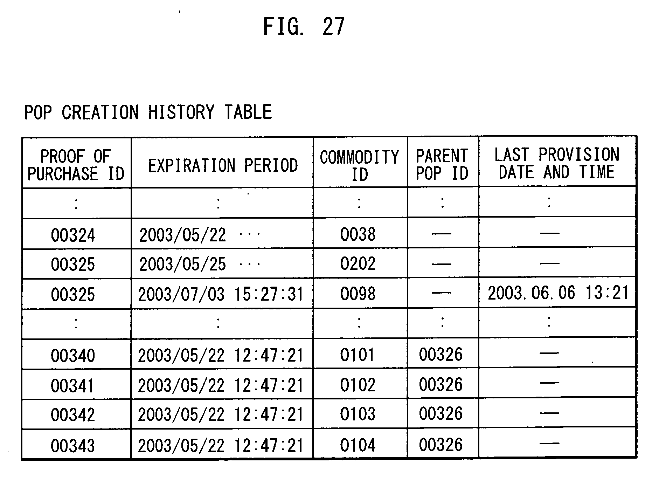

FIGS. 26 A to 26D indicate each proof of purchase of the eBox created by the operation of the foregoing process 2. FIG. 27 is the proof of purchase creation history table recorded as a result of the operation of the foregoing process 2.

FIG. 26A is the proof of purchase of the eBox which was created. For this the proof of purchase of this eBox, the proof of purchase ID is "00340," and this ID is given as a serial number at the time of creating the proof of purchase of the eBox. The type of the eBox/pBox is "eBox." The commodity ID is "0101," and this is relevant to the license commodity by traversing the linkage table 1 from the subscription commodity of the commodity ID 0098 at the foregoing Step 4. The contents thereof are "Usage right for three days of a monthly magazine Ox, 2003 March." FIG. 26B is the proof of purchase of the eBox which was created. For the proof of purchase of this eBox, the proof of purchase ID is "00341," and this ID is given as the next number to the proof of purchase of the eBox as a serial number at the time of creating the proof of purchase of the eBox. The type of the eBox/pBox is "eBox." The commodity ID is "0102," and this is relevant to the license commodity by traversing the linkage table 1 from the subscription commodity of the commodity ID 0098 at the foregoing Step 4. The contents thereof are "Usage rights for three days of a monthly magazine Ox, 2003 April." In the same way, the proof of purchase of the eBox of FIG. 26C and the proof of purchase of the eBox of FIG. 26D are created.

For record data of the proof of purchase creation history table of FIG. 27, each of "00340" to "00343" of the proof of purchase ID fields is each proof of purchase ID corresponding to each proof of purchase of the eBox of FIGS. 26A to 26D. Data recorded in each record corresponding to each proof of purchase ID of the expiration date field, e.g. "2003/05/22 12:47:21" represents the expiration date within which the license request can be executed by the proof of purchase of this eBox, but does not represent the expiration date of the subscription commodity. In this embodiment, the expiration period within which the user can request the license after the proof of purchase of the eBox is issued is set as 48 hours. If the user does not request the license, the data of the expiration date of the proof of purchase creation history table is deleted by a batch procedure. At this point, although the user (the side of client terminal 300) must have purchased the subscription commodity in the process 2, four proofs of purchase of the eBoxes are created at once as apparent from FIGS. 26A to 26D. This is the case in which the user cannot request the proof of purchase of the eBox of "Usage right for three days of monthly magazine Ox, March issue to May issue" because of an overseas business trip and the like but the user requests thereafter the proof of purchase of the eBox of "Usage right for three days of monthly magazine Ox, March issue to June issue" onMay 20, 2003 (48 hours before the foregoing 2003/05/22 12:47:21) because of coming home, although the date of purchase of the subscription commodities of this example is "2003 January 3" as explained in the foregoing. For the June issue, the proof of purchase of the eBox must have been requested newly because it is May. If the user has requested the proof of purchase of the eBox of the "Usage right for three days of monthly magazine Ox, each issue," each proof of purchase of the eBox must have been created for each month.

Next, the modified operations of the process 2 for the operations of creating the proof of purchase of the eBox and recording its proof of purchase creation history are explained hereinafter.

### (Modified operation of process 2)

The modified operation of this process 2 is made by a different structure of the created proof of purchase creation history table from the case of the operation of the foregoing process 2. That is to say, the field in which data of the last provision date and time are recorded in the proof of purchase creation history table used in the operation of the foregoing process 2 is changed to a field of recording the commodity ID which has already provided in the modified process. The modified operation of the process 2 for issuing the proof of purchase of the eBox using the pBox executes the process in the following Steps.
Step 1: To begin with, the proof of purchase creation means 101 of the license distribution management means 100 acquires the "eBox/pBox type" and the "commodity ID" from the proof of purchase of the pBox indicated via the storefront gateway 220 by the bookshelf management means 301. At this point, since the eBox/pBox type is the "pBox, " a record having the foregoing acquired commodity ID as the "commodity ID" of the "subscription/package commodity table" records of FIG. 23, to put it concretely, one record (hereinafter, referred to as a commodity record) having a "commodity ID 0098" is searched and identified.
Step 2: Next, the proof of purchase creation means 101 acquires MPID recorded in the "MPID" field of the commodity record, then records having the foregoing acquired MPID as the "MPID" field of the records of the linkage table 1, to put it concretely, all the records (hereinafter, referred to as a group of records of extracting the linkage table 1) having "MPID 001" are searched for and identified.
Step 3: Next, the proof of purchase creation means 101 acquires the commodity ID recorded in the "commodity ID" field of each record of a group of records of extracting the linkage table 1, then all the records (hereinafter, referred to as a group of records of extracting the license commodity table) having the foregoing acquired commodity ID as the "commodity ID" field are searched for and identified.
Step 4: Further, the proof of purchase creationmeans 101 extracts all the records from a group of records of extracting the license commodity table, corresponding to the term defined by the "expiration period" field of the record corresponding to the proof of purchase of the foregoing pBox of the proof of purchase creation history table and the purchase date and time of the proof of purchase of the pBox indicated by the bookshelf management means 301 at the foregoing Step 1.
Step 5: Further, the proof of purchase creation means 101 deletes the records having the ID as the commodity ID recorded in the ID field of the commodities, which have already been provided, of the record of the "proof of purchase creation history table" corresponding to the proof of purchase of the pBox indicated by the bookshelf management means 301 from a group of records acquired by the foregoing Step 4.
Step 6: Using information recorded in each of residual records at the foregoing Step 5, the proof of purchase is created. At the same time, each ID (license commodity ID) of those records is added to each ID field of the commodities, which have already been provided, of the record of the "proof of purchase creation history table" corresponding to the proof of purchase of the pBox indicated by the bookshelf management means 301 at the foregoing Step 1.
Step 7: Then, the record of "proof of purchase creation history table" corresponding to the proof of purchase created at the foregoing Step 6 is created.

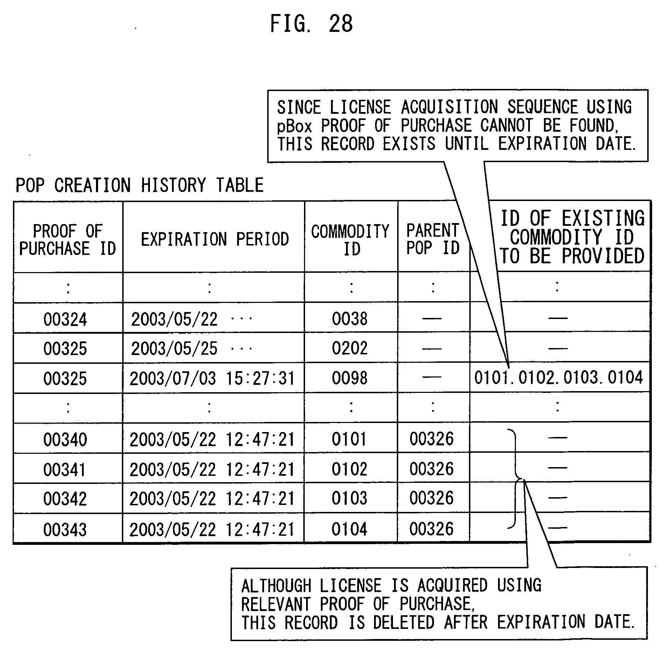

Each proof of purchase of the eBox created by executing the modified operation of the foregoing operation 2 is the same as each proof of purchase of the eBox indicated in each of FIGS . 26A to 26D. Then, the proof of purchase creation history table which has been recorded as a result of the modified operation of the process 2 is indicated in FIG. 28. The proof of purchase creation history table indicated in FIG. 28 is almost equal to the proof of purchase creation history table indicated in FIG. 27 except a part of contents.

In the event that the proof of purchase of the eBox is created and its proof of purchase creation history is recorded by the foregoing process 2 or the modified operation of the operation 2, the created proof of purchase of the eBox is sent to the storefront gateway 220 from the proof of purchase creation means 101. Further, two or more proofs of purchase of the eBoxes are created in the same way as this example, a group of proofs of purchase of the eBoxes (POP group) is sent.

In the storefront gateway 220 which has received the proof of purchase of the eBox, a box set is created by grouping the proofs of purchase of the eBoxes as one set by the box set creation means 224. Then, this box set is sent from the storefront gateway 220 to the storefront window terminal 210.

If the storefront window terminal 210 receives the box set, the box set is sent to the bookshelf management means 301 of the client terminal 300 from the purchase request answering means 213.

If the bookshelf management means 301 receives the box set, the notice of receiving the box set is sent to the storefront server 200 from the bookshelf management means 301, as well as the box set is stored so as to bookshelf-manage the box set. The notice of receiving this box set is a notice of notifying that the client terminal 300 receives the box set from the storefront server 200. The notice of receiving this box set is sent to the storefront gateway 220 from the purchase request answering means 213 of the storefront window terminal 210. The box set header is attached in the event that the box set is communicated so as to be received.

Upon receiving the notice of receiving the box set from the foregoing storefront window terminal 210, the storefront gateway 220 checks to confirm whether or not the notice of receiving the box set is normal. This checking operation is executed by the operation of authenticating simply the storefront window terminal 210, e.g. the operation of verifying the IP address of the storefront window terminal 210. Then, a NOP process is executed in the storefront gateway 220, the notice of responding to the box set receipt is sent back to the storefront window terminal 210 from the storefront gateway 220. Further, such a box set receipt acknowledgement is sent back to the bookshelf management means 301 of the client terminal 300 from the storefront window terminal 210.

At this point, in the foregoing operation, the side of the client terminal 300, that is to say, the user has not yet received the license, and the user has only acquired the proof of purchase (a group of receipts as a type of box set of the package commodity and/or the subscription commodity) for acquiring the license. Therefore, if the client terminal 300 wants to acquire the license, the bookshelf management means 301 disassembles the box set into each box, that is to say, each eBox, and then the bookshelf management means 301 displays the contents of the eBox at sight in GUI. The user designates the object of acquiring the license on a list displayed in the display means 304, and then sends the license request to the license distribution management means 100. This license request is a request for the license itself to be issued from the client terminal 300 to the storefront server 200. This license request is different from the operation of requesting that the license should be purchased. The proof of purchase of the designated eBox is attached to this license request.

Upon receiving the foregoing license request, the license distribution management means 100 checks to confirm whether or not the proof of purchase from the bookshelf management means 301 is interpolated. If the proof of purchase is not interpolated, it is checked to confirm whether or not there is the record of creating the relevant proof of purchase in the proof of purchase creation history storing means 120. Then, if there is the record of creating the relevant proof of purchase, the relevant proof of purchase creation history is deleted from the proof of purchase creation history storing means 120, as well as the license creation means 102 creates the license indicated by the proof of purchase. The license which has been created thereafter is sent to the license provision means 103, and then to the client terminal 300 from the license provision means. Accordingly, the license relevant to the proof of purchase indicated on the side of the client terminal 300 has been issued. On the side of the client terminal 300, the issued license is stored in the bookshelf management means 301, and the license is practiced within a predetermined period. As explained before, digital contents as the object of practicing the license can be arbitrarily downloaded anytime. In general, the digital contents are arbitrarily downloaded in the client terminal 300 in the period up to the issuance or practice of the foregoing license.

As explained in the foregoing, according to the present embodiment, when the purchase request of a license for viewing the digital contents is received via the network from the client terminal 300, the request of purchasing its license is received by the storefront window terminal 210 of the storefront server 200 and the process of settlement is executed by the storefront window terminal 210 at the first stage. Then, after it is confirmed that the operation of settling accounts is completed securely by the storefront window terminal 210, the management terminal of the storefront server installed in the back position from the foregoing storefront window terminal 210 in view of the side of the client terminal 300, that is to say, the storefront gateway 220 shall execute the process necessary for issuing the license, thus the telecommunication between the client terminal 300 and the accounting process unit 500 can be entrusted to the storefront window terminal 210. Therefore, when the client terminal 300 and the accounting process unit 500 are connected with the storefront server 200, even if each specification of the side of the client terminal 300 and the side of the accounting process unit 500 is different from each specification of the storefront servers 200, the modification of the structure of connecting the telecommunication on the side of the storefront server 200 is not required even to the storefront gateway 220. Further the storefront gateway 220 can have higher performance for a general purpose so as to be applied to a variety of storefront servers 200.

### (Fifth Embodiment)

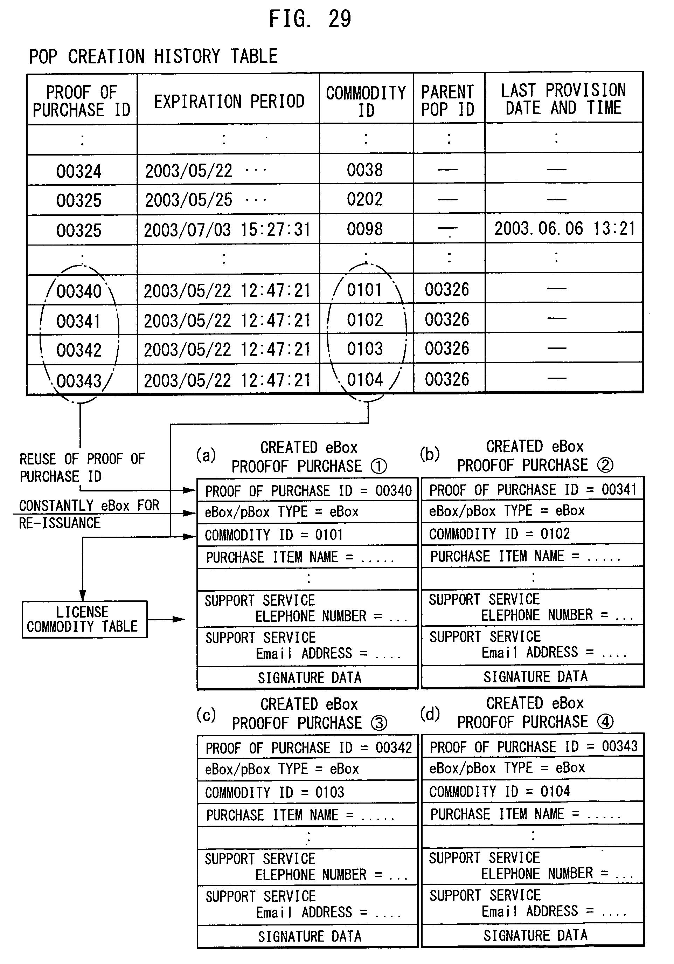

FIG. 29 is an explanatory view of reissuing the proof of purchase of the eBox using pBox of a license sale system with respect to the second embodiment of the present invention. In this figure, there is illustrated the aspect in which the license commodity table and the proof of purchase creation history table used for reissuing the proof of purchase of the foregoing eBox are linked with each other and thus the proof of purchase of the eBox can be created by the foregoing re-issuance.

As explained in the foregoing, if the proof of purchase of the eBox is created in the license distribution management means 100, this created eBox proof of purchase is sent to the storefront gateway 220 from the proof of purchase creation means 101 (explanation of paragraphs "0074, 0075, 0076"). Further, the foregoing eBox proof of purchase is sent to the bookshelf managementmeans 301 of the client terminal 300 via the storefront window terminal 210. If the bookshelf management means 301 has not received the proof of purchase of the eBox because of some trouble while the proof of purchase of the eBox is sent to the bookshelf management means 301 of the client terminal 300 from the license distribution management means 100, the eBox (eBox re-claim) request is sent again to the storefront window terminal 210 from the bookshelf management means 301 (this is the same case as requesting the eBox based on the proof of purchase of the foregoing pBox) . In this eBox re-claim process, the proof of purchase of the eBox is attached in the same way as the foregoing process, this eBox re-claim process is sent to the license distribution management means 100 via the storefront gateway 220. In this POP re-claim, the proof of purchase of the pBox which has been sent from the bookshelf management means 301 is attached as the sending data. The license distribution management means 100 checks to confirm whether or not the POP request from the storefront gateway 220 is normal if the foregoing POP re-claim is received by the proof of purchase creation means 101. Further, it is checked to confirm whether or not the POP of the pBox which has been received from the foregoing storefront gateway 220 is not interpolated. When these checking operations are completed, the license distribution management means 100 starts the operation of a re-issuance process of the proof of purchase of the eBox.

At this point, the operation of the re-issuance process of the foregoing eBox proof of purchase is explained as the operation 3.

### (Operation of process 3)

In this process 3, the proof of purchase of the eBox is reissued. In this process 3, the operations are executed in the following Steps.
Step 1: First, the license distribution management means 100 acquires the "eBox/pBox type" and "commodity ID" from the proof of purchase which has been provided by the bookshelf management means 301 via the storefront window terminal 210 and the storefront gateway 220. If the "eBox/pBox type" is the pBox, the record maintained in the proof of purchase ID of the proof of purchase provided in the "parent POP ID" of the proof of purchase creation history table is searched and identified. At this point, the proof of purchase ID indicates "00340," "00341," "00342," and "00343."
Step 2: Next, the license distribution management means 100 acquires the commodity ID maintained in the commodity ID field of the record acquired in the foregoing Step 1, and searches for and identifies the record having the commodity ID acquired by the "sales ID" field of the license commodity table.
Step 3: Next, the license distribution management means 100 creates the proof of purchase using the contents of the record acquired by the foregoing Step 2. However, in this case, the value maintained by the ready-made record corresponding to the proof of purchase creation history table is used to the value of the "proof of purchase ID."

The proof of purchase of the eBox is reissued (recreated) by the foregoing operation. Each created eBox proof of purchase is indicated in FIGS. 29A to 29D. At this point, each created eBox proof of purchase indicated in FIGS. 29A to 29D is the same as each eBox proof of purchase indicated in FIGS. 26A to 26D. A group of these reissued eBox proof of purchases are sent to the storefront gateway 220 from the proof of purchase creation means 101.

In the storefront gateway 220 which has received the eBox proof of purchase, the box set which grouped the eBox proof of purchase as one set is created in the box set creation means 224. Then, this box set is sent to the storefront window terminal 210 from the storefront gateway 220.

If the storefront window terminal 210 receives the box set, the storefront window terminal 210 sends its box set to the bookshelf management means 301 of the client terminal 300 from the purchase request answering means 213.

If the bookshelf management means 301 receives the box set, the bookshelf management means 301 stores the box set so as to bookshelf-manage the box set, and the notice of receiving the box set is sent to the storefront server 200 from the bookshelf management means 301. This notice of receiving the box set is a notice of confirming that the client terminal 300 has received the box set from the storefront server 200. This notice of receiving the box set is sent to the storefront gateway 220 from the purchase request answering means 213 of the storefront window terminal 210. The box set header is attached if the box set telecommunication is performed.

When the storefront gateway 220 receives the notice of receiving the box set from the foregoing storefront window terminal 210, it is checked whether or not the notice of receiving the box set is normal. This checking operation is executed by the operation of authenticating simply the storefront window terminal 210, e.g. the operation of verifying the IP address of the storefront window terminal 210. Then, a NOP process is executed in the storefront gateway 220, the notice of responding to the box set receipt is sent back to the storefront window terminal 210 from the storefront gateway 220. Further, such a box set receipt acknowledgement is sent back to the bookshelf management means 301 of the client terminal 300 from the storefront window terminal 210. The operations (license request) after this are the same as the foregoing first embodiment.

### (Sixth Embodiment)

Next, the sixth embodiment of the present invention is explained. The operation of this sixth embodiment is explained hereinafter, in which the user (client) who has or operates the client terminal 300 purchases the license of the electronic books on the Internet as an example of the network and further practices (more specifically, practices the right of usage by the contents) the foregoing purchased license by receiving the distribution of the contents. The practice of the license is, as an example, to view the contents by receiving the distribution or provision of the objects of the license. At this point, the license distribution system of FIG. 1 gives and receives the foregoing license and contents.

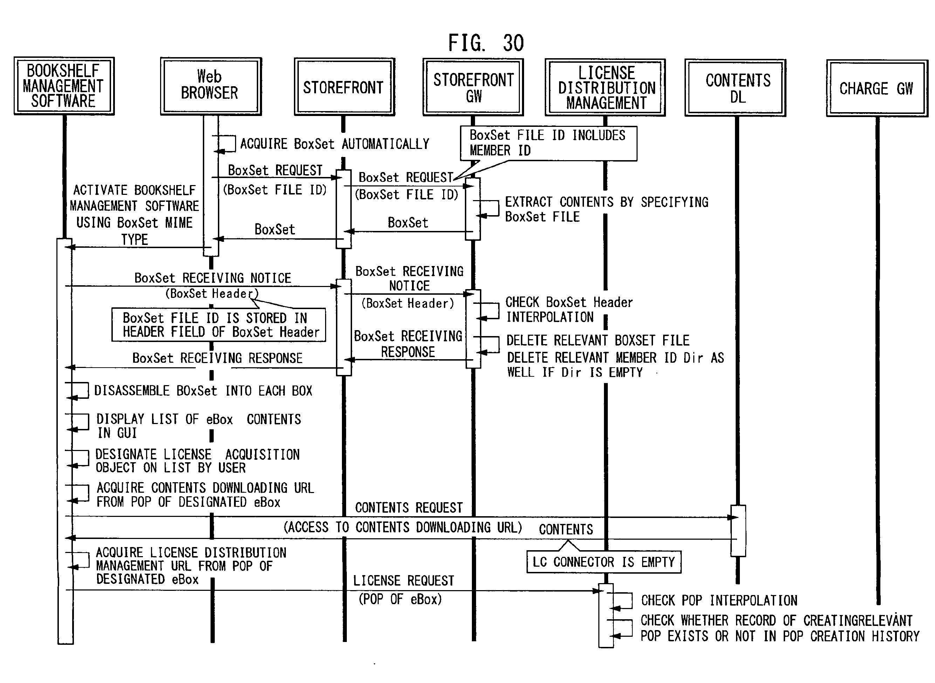

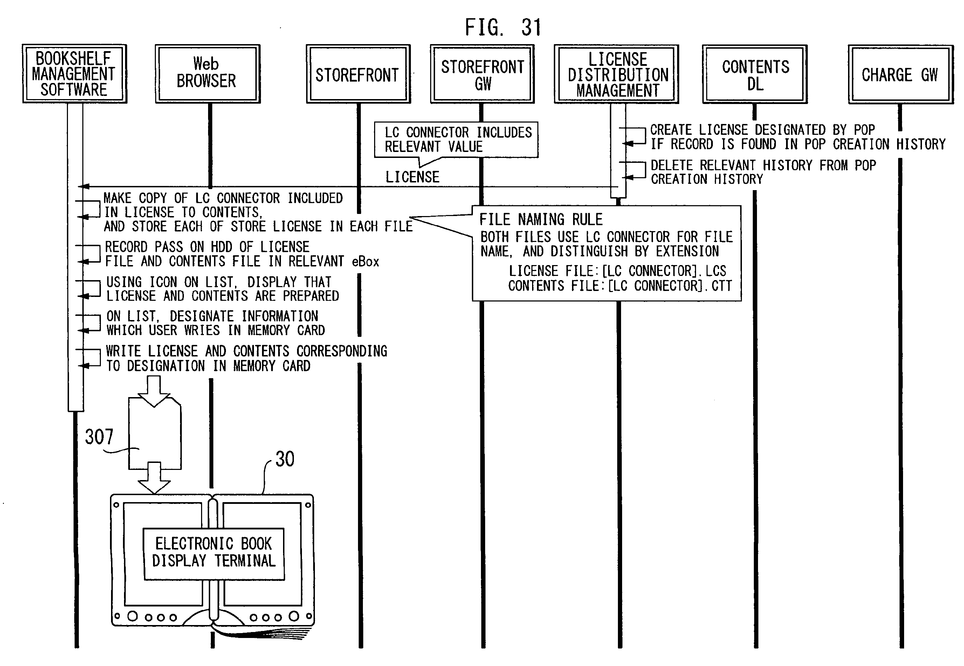

FIGS. 30 and 31 are sequence charts of the operation of the license and contents of the present embodiment. Prior to the operation of FIG. 30, for starting the operation, the client terminal 300 requests the member login to the storefront server 200 from the web browser 302 and the operation of completing the operation of settling accounts is executed by performing the accounting process. The contents of this operation are the same as the contents of the operation already explained using FIG. 2 in the first embodiment. Therefore, the explanation for the operations up to the display of the settlement completion screen from the member login request to the storefront server 200 from the web browser 302 is omitted.

After the settlement completion screenhas been displayed, the web browser 302 of the client terminal 300 activates automatically the procedures (or process) of acquiring the box set of FIG. 30, and the process of acquiring the box set is started. In FIG. 30, if the process of acquiring the box set is started, the box set is requested to the storefront window terminal 210 from the web browser 302. In this process, the box set file ID is attached as data. Next, on the side of the storefront server 200, the purchase request answering means 213 of the storefront window terminal 210 receives the foregoing box set request, and the purchase request answering means 213 transfers this box set request to the storefront gateway 220. In this process, the box set file ID is attached as data. Upon receiving the foregoing box set request, the storefront gateway 220 extracts the relevant box set from the box set file management means 222 based on the box set file ID and sends the box set to the box set provision means 226, then the box set provision means 226 sends this box set to the storefront window terminal 210.

Upon receiving the box set, the storefront window terminal 210 sends the box set to the web browser 302 of the client terminal 300 from the purchase request answering means 213. If the web browser 302 receives the box set, the web browser 302 activates the bookshelf management means 301 with a MIME type of the box set and stores the box set so as to bookshelf-manage the box set, and further the notice of receiving the box set is sent to the storefront server 200 from the bookshelf management means 301. The box set header is attached to the notice of receiving this box set. The "bookshelf management software" of each of succeeding figures after FIG. 30 is software for executing each type operation of this bookshelf management means 301. The notice of receiving the foregoing box set is a notice for confirming that the client terminal 300 has received the box set from the storefront server 200. This box set receiving notice is sent to the storefront gateway 220 from the purchase request answering means 213 of the storefront window terminal 210. The box set header is attached if the box set receiving telecommunication is performed.

Upon receiving the notice of receiving the box set, the storefront gateway 220 checks to confirm whether or not the box set header is interpolated. If the box set header is not interpolated, the relevant box header is deleted from the box set file management means 222. In this way, when the notice of receiving the box set is received, the box set file is deleted in the storefront gateway 220, there is no inconvenience of sending the same box set to the client terminal 300 many times and secure operations can be executed. At this point, if the directory for the member ID becomes empty since the box set file is deleted, the member directory itself is deleted. Accordingly, unnecessary data is not left in a limited memory region for a long time, thus the memory can be used effectively. After the foregoing processes, the response of receiving the box set is responded to the storefront window terminal 210 from the storefront gateway 220, and further this response of receiving the box set is responded to the bookshelf management means 301 of the client terminal 300 from the storefront window terminal 210.

At this stage, for the foregoing operation, the client terminal 300, that is to say, the user has not yet acquired the license, but has only the proof of purchase (a group of receipts as the box set type) for acquiring its license. Thus, if the client terminal 300 wants to acquire the license, the bookshelf management means 301 disassembles the box set into each box, that is to say, each eBox so as to display the contents of the eBox in GUI in a browsing way.

On the side of the client terminal 300, to begin with, the operation of downloading the contents is executed based on the browsing display of the foregoing GUI. Thus, if the user designates a downloading object in a list displayed in the display means 304, the bookshelf management means 301 acquires URL for downloading the contents from the proof of purchase of the designated eBox and sends the contents request to the contents distribution server 400.

Upon receiving the foregoing contents, the contents distribution server 400 sends the digital contents as the object to the client terminal 300. The "contents DL" in FIG. 2 and the subsequent figures is software for downloading the contents of the contents distribution server 400. Accordingly, the contents designated on the side of the client terminal 300 must have been distributed to the client terminal 300. On the side of the client terminal 300, the distributed contents are stored in the bookshelf management means 301. At this point, the distributed contents are composed of digital contents.

Next, in the client terminal 300, license distribution management URL is acquired from the proof of purchase of the designated eBox, and the license request is sent to the license distribution management means 100. This license request is to require the issuance itself of the license corresponding to the foregoing distributed contents from the client terminal 300 to the license distribution management means 100, and this operation is a different process operation from the foregoing license purchase request. The proof of purchase of the designated eBox is attached to this license request.

If the foregoing license request is received, the license distribution management means 100 checks to confirm whether or not the proof of purchase attached to the license request from the bookshelf management means 301 is interpolated. If the proof of purchase is not interpolated, it is checked to confirm whether or not there is the record of creating the relevant proof of purchase in the proof of purchase creation history storing means 120. Then, if there is the record of creating the relevant proof of purchase, the relevant proof of purchase creation history of the proof of purchase creation history storing means 120 is deleted, as well as the license indicated by the proof of purchase in the license creation means 102 is created. The licenses created thereafter is sent to the license provision means 103, and transferred to the client terminal 300 from the license provision means 103. Accordingly, the license corresponding to the proof of purchase indicated on the side of the client terminal 300 must have been issued. On the side of the client terminal 300, the issued license is stored in the bookshelf management means 301.

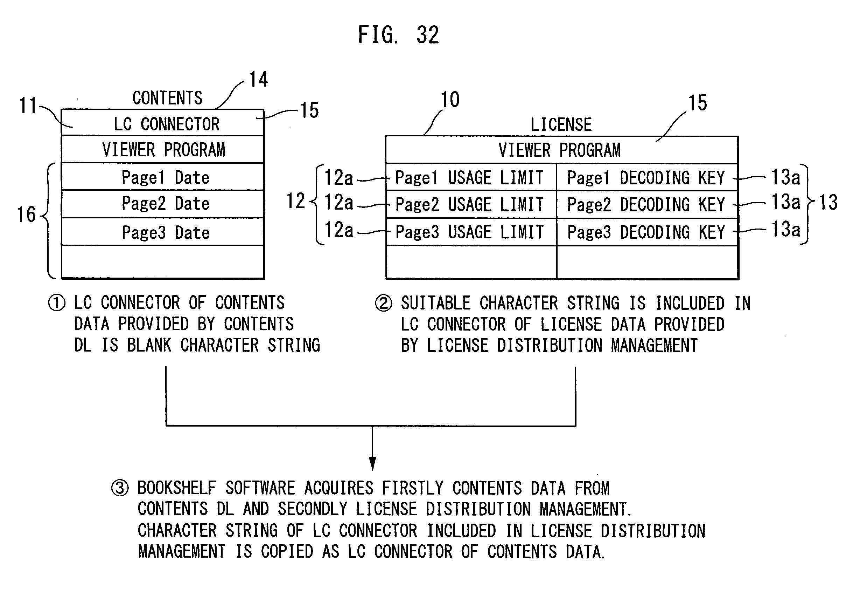

In this way, the distribution of the contents is received at first, then the operation of receiving the distribution of the contents is performed. The relationship between the contents and the license distributed in this way will be explained. FIG. 32 exemplifies the components of the data and the license used in this embodiment. In FIG. 32, the license 10 includes a decoding key 13 of each page and data 12 recording availability limit of each page of the contents (in this case, electronic book is used) corresponding to the license, an LC connector 11, as data. The availability limit 12 means data representing an available extent such as "five time repetitive usability" or "three day usability." The decoding key 13 is a key for decoding encrypted distributed digital contents. In this embodiment, as indicated in FIG. 32, the availability limit 12 is defined in each page in such a way as a page 1 availability limit 12a, a page 2 availability limit 12b, a page 3 availability limit 12c, ·····, and so forth. Further, the decoding key 13 is defined in each page in such a way as a page 1 decoding key 13a, a page 2 decoding key 13b, a page 3 decoding key 13c, ·····, and so forth. The LC connector 11 is the license and data representing the contents corresponding to the license, that is to say, "data linking with the license contents" representing the relationship between the contents and the license representing which license corresponds to which contents, and further represents that the contents and the license having the same LC connector 11 are linked with each other.

As the data structure of this LC connector 11, there is a character string in the following way:
PSSC76704283
In this character string, a header portion, "PSSC," is an ID allocated to the license distribution management means 100 as the license distributor (service provider, etc.). "76704283" in the latter part is an ID of respective contents operated by the license distribution management means 100, and allocated uniquely by each license distribution management means 100. Therefore, appropriate data are recorded as the LC connector 11 in the license 10. The commodity information database 110 allocates the foregoing contents ID in the event that the relevant contents are registered in the commodity information database 110 of the license distribution management means 100.

In this way, since the ID of the license distribution management means 100 is contained in the LC connector 11, the collision between the same contents IDs can be avoided, even if the bookshelf management means 301 is connected to another license distribution management means other than the license distribution management means 100 and another relevant license distribution management means distributes the license for the contents having the same contents ID.

At this point, as the data structure of the LC connector, the other data having the ID of the contents allocated globally and uniquely to respective contents can be given. In this case, the ID of the contents is registered by a specified numbering entity. Further, since data of the LC connector 11 is globally unique, the LC connector 11 can be recorded in the contents of the contents distribution server 400.

In FIG. 32, a content 14 includes the LC connector 11, the viewer program 15 for displaying the recreated contents, and contents data 16, as data. Although the content 14 is sent from the contents distribution server 400, the LC connector 11 is empty and character string data is not yet recorded at a stage of providing the digital contents by the content DL. Since the viewer program 15 is included in the content 14, an application for displaying can be sent altogether only by sending the content 14.

In the foregoing explanation, to begin with, the bookshelf management means 301 acquires the contents from the contents distribution server 400, and then the license is acquired from the license distribution management means 100. However, in a series of operations, the bookshelf management means 301 makes a copy of the data of the LC connector 11 recorded in the relevant license in the area of the LC connector of the contents after the license is acquired. Accordingly, the state in which the same LC connectors 11 are recorded in the contents and the license stored in the bookshelf management means 301 is attained. Thus, the relationship between them becomes clear. At this point, each of the content 14 and the license 10 recording the LC connector 11 in the bookshelf management means 301 is stored in each separate file, and each file name is given to each file. In this embodiment, the LC connector is used in each file name of each file, and both files are classified by having each different extension in each LC connector. As each file name of each file, the following files are given:
License file : [LC connector].LCS
Contents file : [LC connector].CTT
If these types of file names are given, the LC connectors 11 are included in the file names, and the relationship between the license and the contents can be identified from their file names. If such a file name is used, since the LC connector 11 is included in the file name, the relationship between the contents and the license can be identified from its file name. Further, the LC connector is included in the contents of each file, thus the operation of identifying the relationship between the contents and the license can be executed doubly.

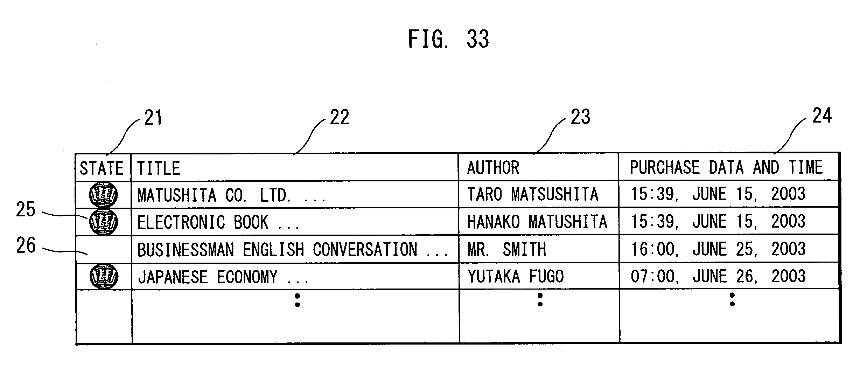

In the bookshelf management means 301, the condition in which the license 10 and the content 14 are prepared is displayed in the display means 304. FIG. 33 is a list of exemplifying that the license 10 and the content 14 are prepared. The list of this figure includes a condition 21, a title 22, an author 23, and a purchasing date and time 24 as columns of indicating display contents. In this list, the condition 21 is a column of indicating whether or not the license 10 and the content 14 are prepared, and an icon 25 is displayed if the acquisition of the license 10 and the content 14 is completed. On the other hand, a blank column 26 is provided if a pair of the license 10 and the content 14 is not prepared. The title 22 is a title of the electronic book as the contents 14. The author 23 is a name of the author of the relevant book. The purchasing date and time 24 indicate year, month, and date of purchasing the license 10 corresponding to the content 14.

By displaying the foregoing list, predetermined contents can be written into the external memory medium (or including an auxiliary memory means or a memory medium such as a portable terminal of playing back the content 14) in the bookshelf management means 301. As an example of the external memorymedium, there are provided FD, HDD, MD, an optical disc, a memory card, and other existing or future developing magnetic or optical media. In this embodiment, the case of writing out the memory card 307 as the external memory medium is considered. In this case, when the user designates the content 14 (content having the icon 25 in FIG. 33) written into the memory card 307, the license 10 corresponding thereto is also designated. If an indication of writing is input from the data input means 303, this indication command is sent to the bookshelf management means 301 from the control means 305, and the designated content 14 and the license 10 corresponding thereto are written and stored in the memory card 307 via the interface 306

In this way, according to this embodiment, when the storefront server 200 receives the license proof of purchase for viewing the digital contents via the network from the client terminal 300, the storefront window terminal 210 of the storefront server 200 receives the license proof of purchase and this storefront window terminal 210 executes the operation of settlement at the first stage. Then, after it is confirmed by the storefront window terminal 210 that the operation of settlement is correctly completed, the management terminal of the storefront server installed in the back position from the foregoing storefront window terminal 210 in view of the side of the client terminal 300, that is to say, the storefront gateway 220 shall execute the process necessary for issuing the license, thus the telecommunication between the client terminal 300 and the accounting process unit 500 canbe entrustedtothe storefront window terminal 210. Therefore, in the event that the client terminal 300 and the accounting process unit 500 are connected with the storefront server 200, even if each specification of the side of the client terminal 300 and the side of the accounting process unit 500 is different from each specification of the storefront servers, the modification of the structure of connecting the telecommunication on the side of the storefront server 200 is not required even to the storefront gateway 220. Further the storefront gateway 220 can have a higher performance for a general purpose so as to be applied to a variety of storefront servers 200.

Further, when the client terminal 300 acquires the license 10 and the content 14, since the LC connector 11 for specifying the relationship between them is included in the license 10 and the content 14 as data, it is not caused in the client terminal 300 that some contents 14 and the license 10 using them are confused. Further, after the foregoing LC connector 11 is recorded in the license 10 at first because the content ID is allocated by the commodity information database 110 of the license distribution management means 100 and this license 10 is sent to the client terminal 300, the LC connector 11 is treated so as to be copied as a part of data of the content 14 by the bookshelf management means 301 of the client terminal 300 and thus the LC connector can be recorded effectively for both of the license 10 and the content 14.

### (Seventh Embodiment)

In the foregoing sixth embodiment, the memory card 307 for storing the content 14 and the license 10 is set in a portable terminal (e.g. electronic book display terminal 30 of FIG. 31) for playing back the contents 14 in this seventh embodiment, and the operation of playing back and browsing the electronic book is executed as an operation of the license.

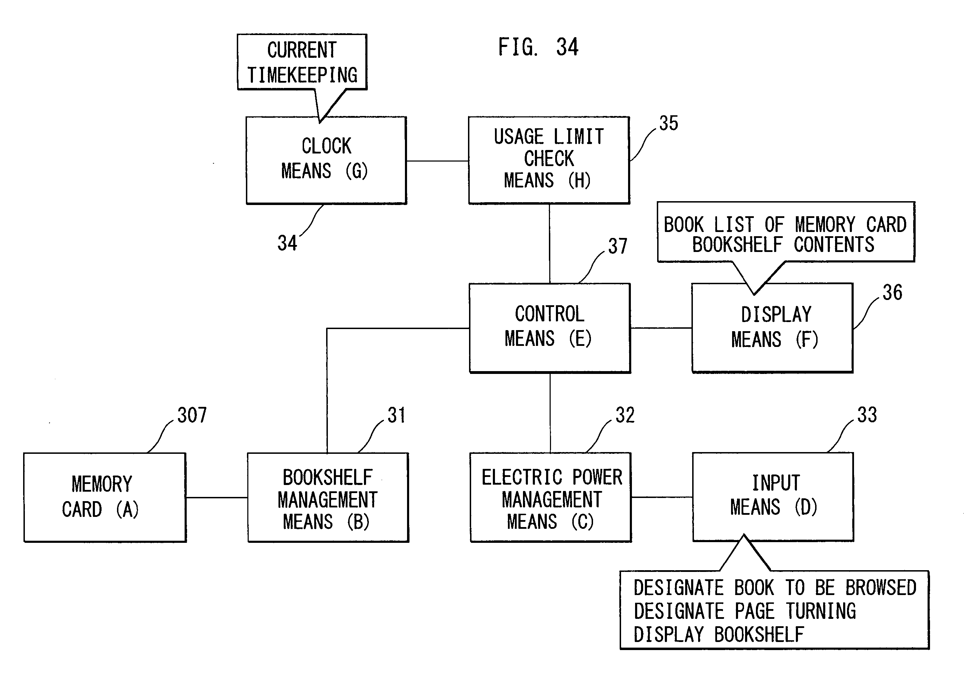

FIG. 34 is ablockdiagramof the structure of the electronic book display terminal 30 for recreating and browsing the electronic book of the seventh embodiment. This electronic book display terminal 30 includes a bookshelf management means 31 for receiving and managing data from the memory card 307, an electric power management means 32 for managing ON/OFF of a main electric power of the electronic book display terminal 30, an input means 33 for inputting various indications, a clock means 34, a usage limit check means 35, a display means 36, and a terminal control means 37 for controlling an entire operation of the electronic book display terminal 30. From the input means 33, the operations for designating a browsing book, turning over the pages, displaying the bookshelf, etc. are input. The clock means 34 clocks the present time. This is to check the expiration date of the license 10. The usage limit check means 35 outputs the checking result of checking whether or not browsing is allowed after the contents of the license has been confirmed. The display means 36 displays a list of the books of the memory card 307 and the contents of the designated books. The terminal control means 37 has a function as a system control unit including a main CPU. Further, the electric power management means 32 includes a sub CPU and monitors the presence of the input designating a starting operation by maintaining the main electric power in a condition of shutting off the main electric power when not in operation.

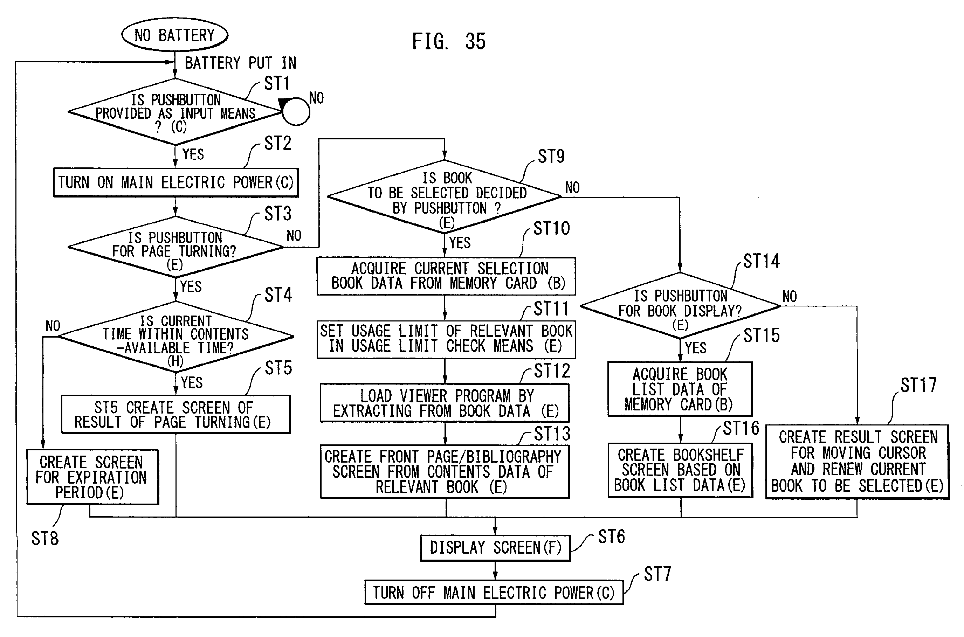

The operation of the electronic book display terminal 30 having the foregoing structure is herein explained. FIG. 35 is an explanatory flowchart of the operation of the electronic book display terminal 30. This electronic book display terminal 30 starts the operation by power activation (power activation is indicated in FIG. 35) as a trigger. In FIG. 35, when the power is activated, the electricpowermanagementmeans 32 checks to confirm whether or not a button (switch) is pushed for the input means 33 (Step ST1). When the button is not pushed, the operation of checking is continued until the button is pushed. On the other hand, when the button is pushed, the electric power management means 32 executes the operation of activating the power (Step ST2). At this point, the operation of activating the power at the time of starting the operation does not activate the main power, but mounts a battery in the electronic book display terminal 30 or represents ON activation of the electric power switch and indicates that the main electric power is not yet turned ON. This state is the same as a waiting state that a remote control type television waits an operation start indication from a remote control switch. In this way, the main electric power is turned ON by pushing the button, and then the electric power is provided to each functional part such as the terminal control means 37. At this point, the buttons for plural functions are displayed on the screen of the display means 36, and each operation of each displayed function is executed by pushing each button corresponding to each displayed function of the screen.

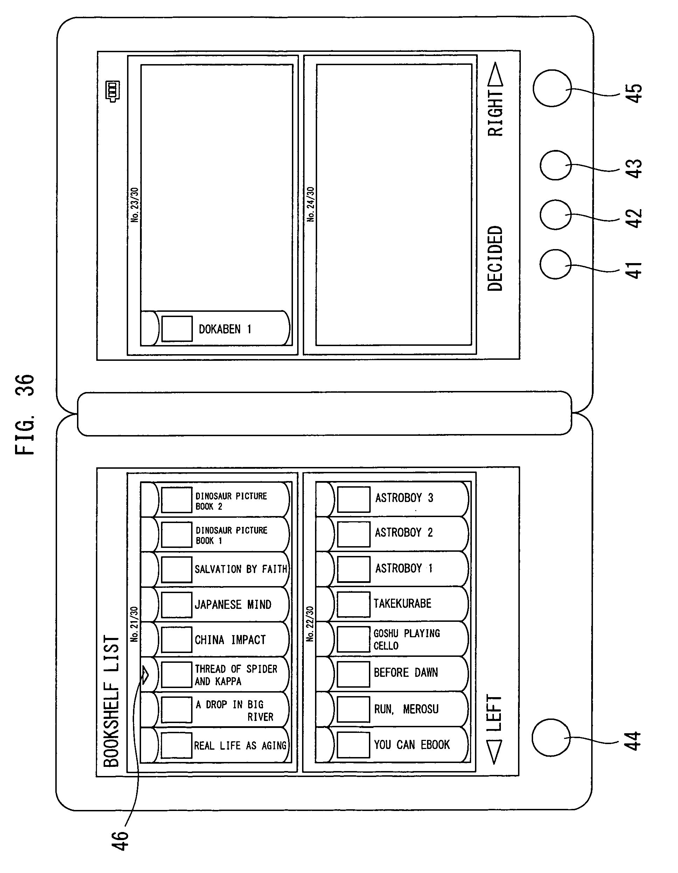

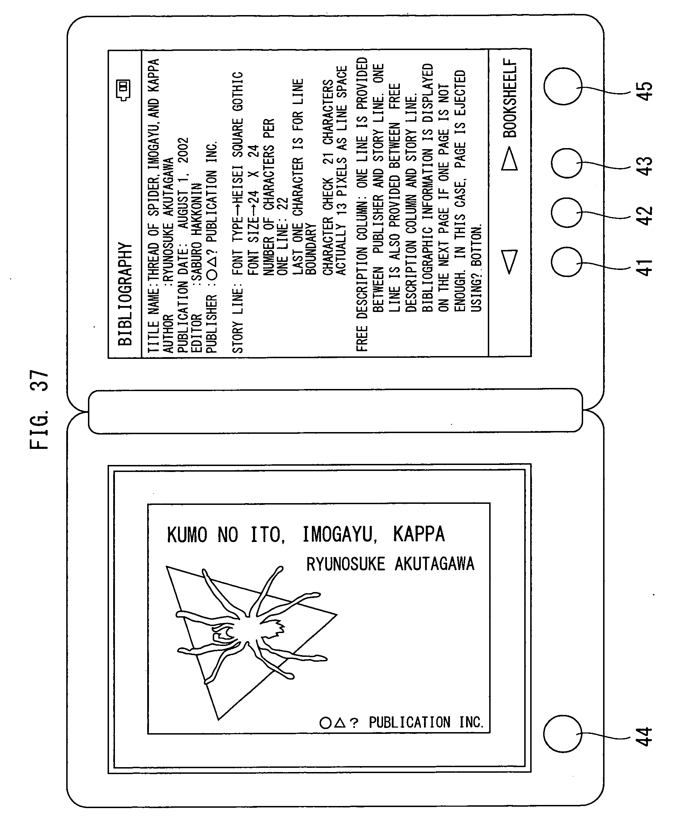

Each example of the displays of the display means 36 corresponding to each of the buttons and operations is illustrated in FIGS. 36and37. FIG. 36 illustrates the bookshelf screen of the electronic book display terminal 30, and FIG. 37 illustrates the screen of a historical bibliography screen with a book cover. In the screen of the bookshelf of FIG. 36, several books available for browsing are arranged in the bookshelf so as to structure a library. Each title of the books is displayed in each back cover of the books. Plural button functions are displayed in the lower portion of the bookshelf. Of these button functions, a button 41, for example, is a button for deciding the selection of the books designated by a cursor (referred to a reference number 46 hereinafter). Further, buttons 44 and 45 are buttons for moving the cursor 46. The button 46 moves the cursor 46 in the left direction, and the button 45 moves the cursor 46 in the right direction. Then, the books arranged in the bookshelf can be designated by moving the cursor 46 in the right and left directions using buttons 44 and 45. At this point, in FIG. 36, although the cursor 46 designates the third book from the upper left side, when the cursor 46 is moved continuously in the right direction by pushing the button 45 from this position, the cursor 46 moves to the lower left end of the bookshelf in the left hand side from the upper right end of the bookshelf in the left hand side. Further, the cursor 46 moves to the upper left end of the bookshelf in the right hand side from the lower right end of the bookshelf in the left hand side. In this way, the cursor 46 can move in all range of one bookshelf, and the cursor 46 can move from one bookshelf to the next bookshelf. In the same way, the similar moving pattern can be obtained. If the cursor 46 moves continuously from the position of FIG. 36 to the position in the left direction by pushing the button 44, in the opposite direction from the above case, the cursor 46 can move in all range of one bookshelf and from one bookshelf to the next bookshelf. At this point, the buttons 42 and 43 have no function in the bookshelf screen of FIG. 36, and no operation can be executed even if the button is pushed.

Further, in the electronic book display terminal 30, a unique system is adopted in the display and operation of the display means 36. That is to say, in the case of the display of FIG. 36, for example, the operation of the terminal control means 37 is started only if the button 44 or 45 is pushed so as to move the cursor 46, the operation of displaying the picture image of the relevant designation is executed in such a way that the relevant picture image is created by pushing the button 41 so as to display in the display means 36 and then the operation of controlling the system is executed in such a way that the main electric power is turned OFF so as to become a waiting state immediately after that. In this waiting state, although the electric power of display means 36 and the terminal control means 37 is turned OFF, the contents of the display of the display means 36 are recorded without modification. Further, the books are selected by moving the cursor 46 in the right and left hand sides using the buttons 44 and 45 in FIG. 36. The book designated by the cursor 46 is selected and decided by pushing the button 41 so as to become the condition of FIG. 37. In FIG. 37, although the buttons 41 and 43 have the functions, the buttons 42, 44, and 45 have no functions, thus no operation can be executed even if they are pressed.

In this way, the operation of controlling the system is executed in a way that, during the operation of the electronic book display terminal 30, the operation of displaying the screen corresponding to each designation is executed and the main electric power is turned OFF immediately after the screen is displayed so as to be transferred to the waiting state, then a lifetime of an electric cell of a hand-held type electronic book display terminal 30 using the electric power by the electric cell and a battery can be elongated as much as possible.

The buttons 41 and 43 of FIG. 37 are buttons for turning the pages, and the button 41 turns the pages of the book in the forward direction (towards the back positions of the book in such a way as the first page, the second page, ···), the button 43 turns the pages of the book in the backward direction (towards the forward positions of the book in such a way as the tenth page, the ninth page, ···). Then, the buttons 41 and 43 can freely turn the pages in the forward and backward directions . At this point, the button 41 of FIG. 37 has a function of deciding the selection of the book designated by the cursor 46, and the buttons 41 and 43 have functions of turning the pages in FIG. 37, although the button 43 has no function. In this way, the functions are different because the picture images displayed by the display means 36 are different.

When the main electric power is turned ON, the terminal control means 37 checks to confirm whether or not the page turning is designated by pushing the foregoing button (Step ST3) . In the case of turning the pages, the usage limit check means 35 checks to confirm whether or not the present date and time is within the term of using the contents, based on the contents of the license and timekeeping data from the clock means 34 (Step ST4). In this checking operation, if the present date and time is within the term of using the contents, the terminal control means 37 creates the result screen of turning the pages (Step ST5). Then, the data is sent to the display means 36. The display means 36 which received the data of the result screen displays the result screen (Step ST6). When this display is completed, the electric power management means 32 turns OFF the main electric power (Step ST7), then the system returns to Step ST1. In this way, it is equal to abovementioned "the relevant display operation is executed, and then the system transfers to a waiting state immediately" to transfer to the operation (waiting operation) of checking whether or not the button is pushed by returning to Step ST1 after a result screen is displayed at Step ST6 and the electric power is turned OFF at Step ST7. The result screen displayed on the display means 36 is displayed after the main electric power is turned OFF. On the other hand, if the present date and time have passed the term of using the contents in the checking process at the foregoing step ST4, the terminal control means 37 creates the screen whose validity has expired (Step ST8). Then the data is sent to the display means 36. The display means 36 which has received the data of the result screen displays the expired screen (Step ST6), then the system transfers to Step ST7.

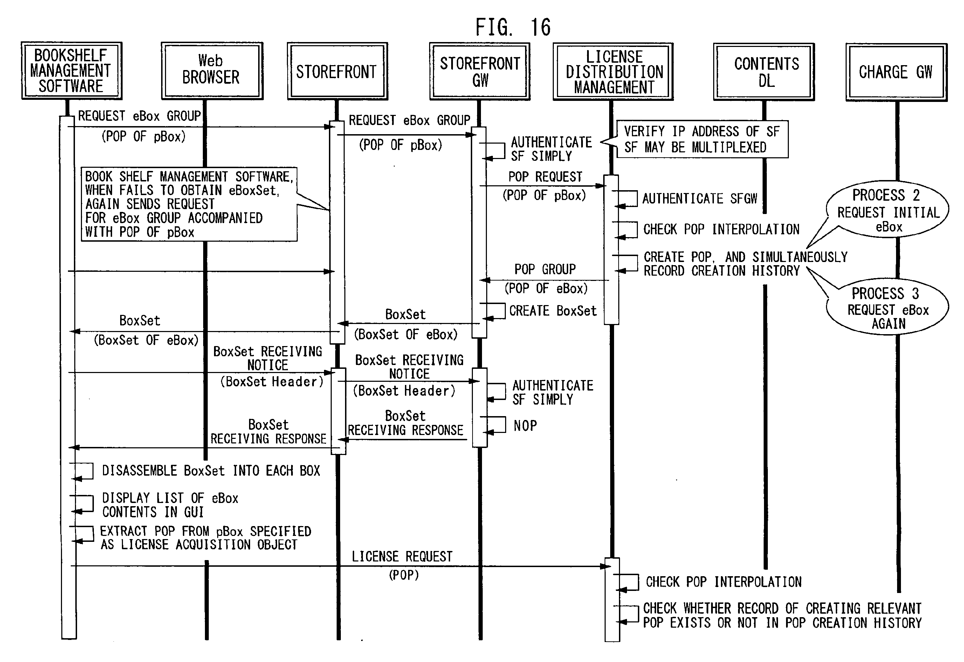

On the other hand, if the page ejection is not designated by pressing the button in the checking operation at the foregoing Step ST3, the terminal control means 37 checks whether or not the operation of pressing the button designates the decision of selecting the book (Step ST9). In this checking operation, if the operation of pressing the button designates the decision of selecting the book, the bookshelf management means 31 acquires the data of the currently selected book from the memory card 307 (Step ST10). Then, the terminal control means 37 sets the limit condition of using the relevant book in the usage limit check means 35 (Step ST11). Then, the terminal control means 37 extracts a viewer program from the book data and loads the viewer program (Step ST12). The loaded viewer program creates a front page/bibliographic screen from the contents data of the relevant book (Step ST13). Then, the data is sent to the display means 36. The display means 36 which has received the front page/bibliographic screen data displays the front page/bibliographic screen (Step ST6) . The display of this front page/bibliographic screen indicates the foregoing FIG. 16. This book has a title of "KUMO NO ITO, IMOGAYU, KAPPA," and the author is Ryunosuke Akutagawa. The front page of the foregoing book is displayed on the left half part of the screen of the display means 36, and the bibliographical contents are displayed on the right hand half part thereof. In this state, if the button 41 is pushed, the next page to the bibliographical screen is displayed. In this way, after the front page/bibliographic screen is displayed, the electric power management means 32 turns OFF the main electric power (Step ST7), then the system returns to Step ST1.

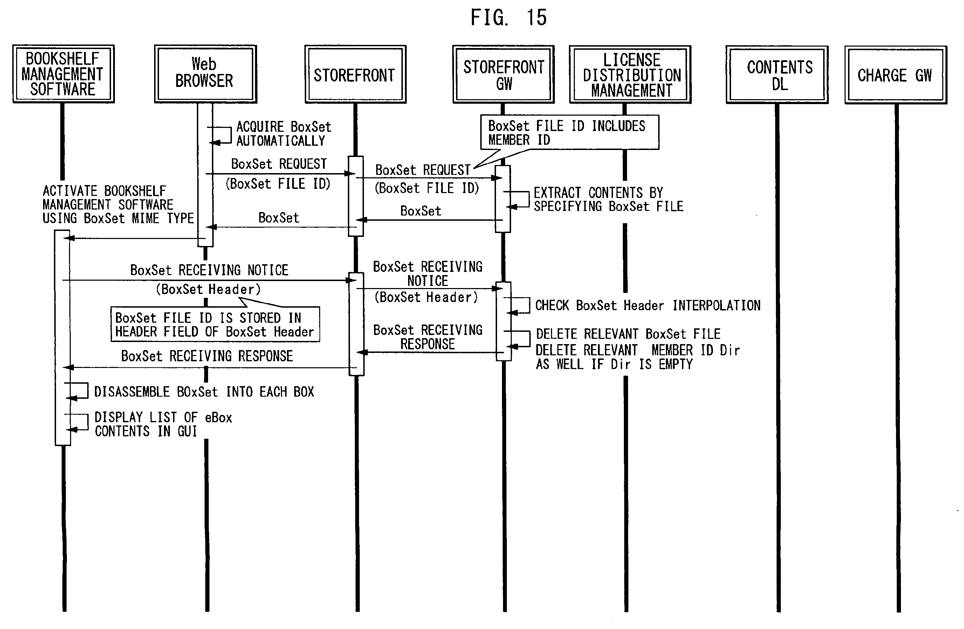

In the checking process of the foregoing Step ST9, in the event that the operation of pushing the button is not the decision of the selection of the book, the terminal control means 37 checks to confirm whether or not the operation of pushing the button designates the operation of displaying the bookshelf (Step ST14). In this checking process, if the operation of pushing the button designates the operation of displaying the bookshelf, the bookshelf management means 31 acquires the book list data of the memory card 307 (Step ST15), the terminal control means 37 creates the bookshelf screen based on the book list data (Step ST16), and the data is sent to the display means 36. The display means 36 which has received the bookshelf screen data displays the bookshelf screen (Step ST6). An example of this shelf screen indicates the foregoing FIG. 15. Various kinds of electronic books are arranged in this bookshelf, and the book can be selected by moving the cursor by pushing the buttons 44 and 45 within this bookshelf screen. In this way, after the bookshelf screen is displayed, the electric power management means 32 turns OFF the main electric power (Step ST7), then the system returns to Step ST1.

In the checking operation of the foregoing Step ST14, in the event that the operation of pushing the button is not the operation of displaying the bookshelf, the terminal control means 37 creates the screen as a result of moving the cursor by the user (or operator) operation (Step ST17). Then, the data are sent to the display means 36. As a result of moving the cursor, the display means 36 which has received the data displays the screen by moving the relevant cursor (Step ST6) . In this way, after the screen is displayed as a result of moving the cursor, the electric power management means 32 turns OFF the main electric power (Step ST7) and the system returns to the Step ST1.

In the foregoing, according to the seventh embodiment, the contents data is loaded in the exterior memory medium from the system of providing the license and the contents. While this exterior memory medium is set in the electronic book display terminal 30 as another recreation device and the bookshelf screen and the contents screen of the book are displayed on the display means 36, the book selection and page turning can be performed, thus the distributed contents can be used with ease.

### (Eighth Embodiment)

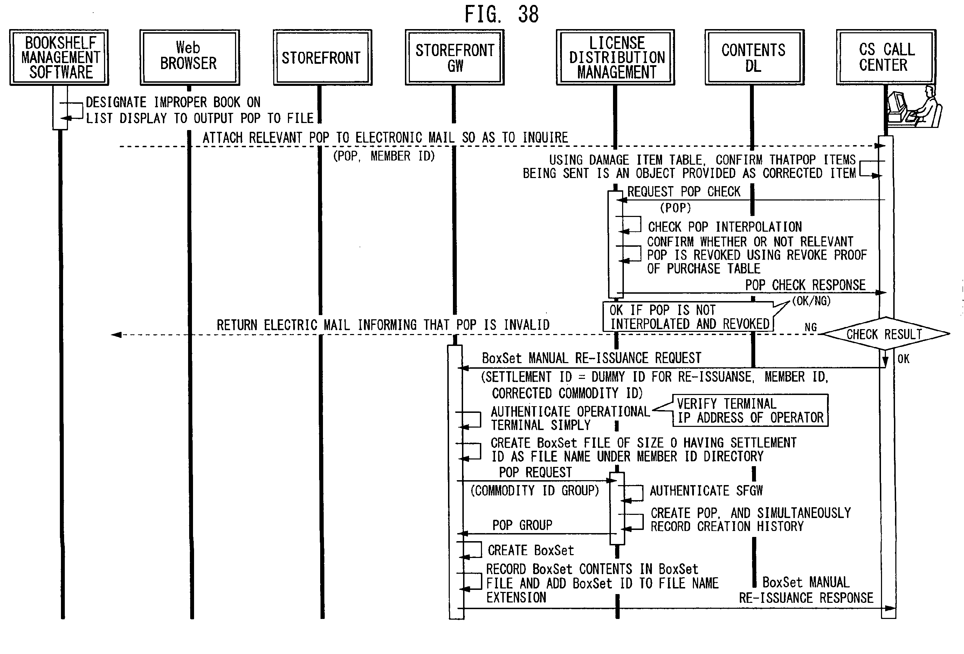

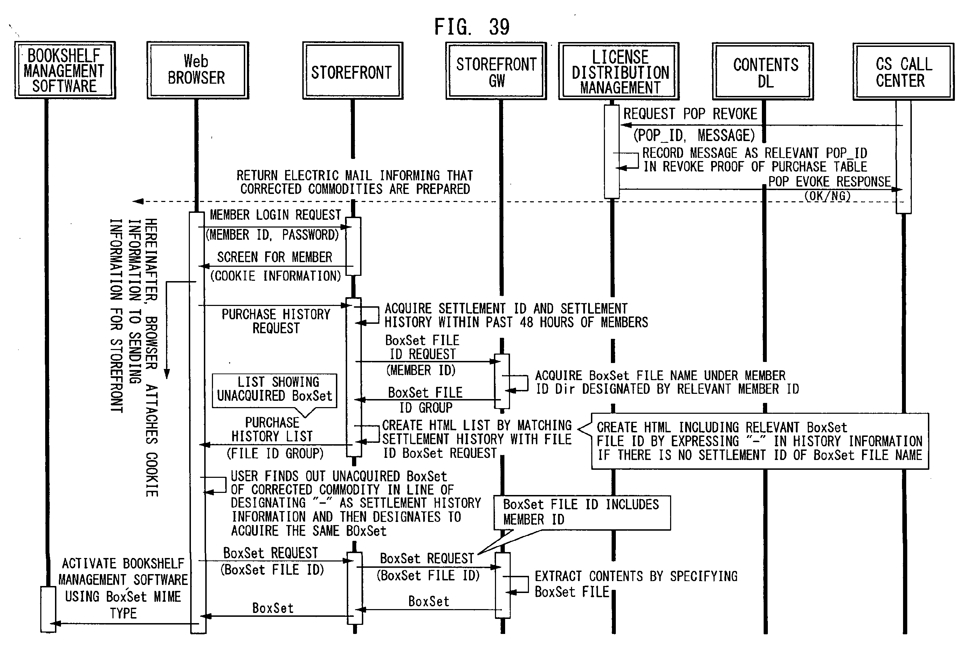

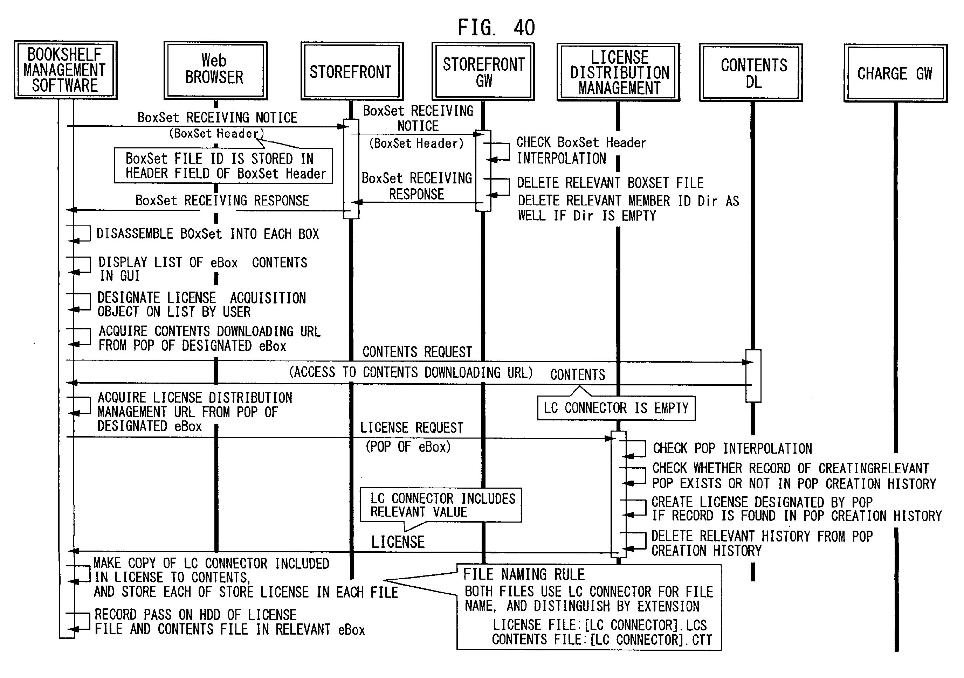

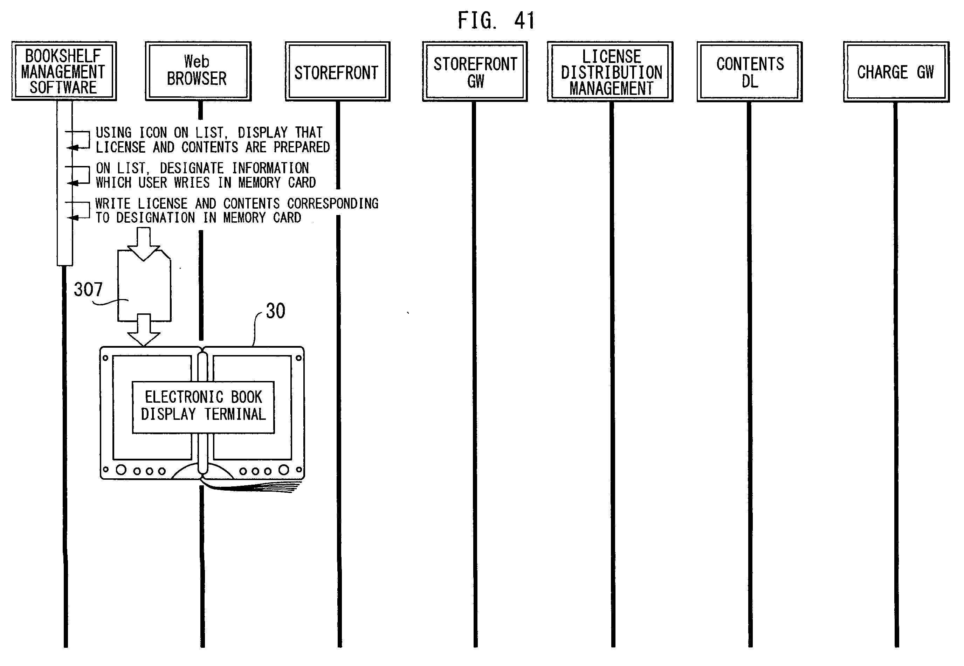

FIGS. 38 to 41 are sequence charts of the eighth embodiment of the present invention. This embodiment relates to the controlling process of providing both of the license and the contents in the system providing the license and the contents.

This method for providing the license and the contents with respect to this embodiment indicates a method for providing the license and the contents once again if the contents of the book cannot be displayed because misplaced pages and/or amissing page of the electronic book were found and/or the viewer program has a bug, for example.

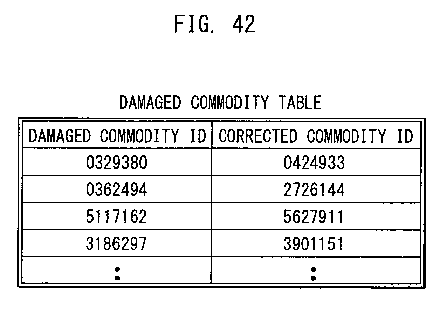

Hereinafter, the controlling process of providing the license and the contents one more of the eighth embodiment of the foregoing invention is explained. The bookshelf management means 301 of the client terminal 300 outputs the proof of purchase to the file by designating the book having inconvenient condition for browsing the display contents. Then, the relevant proof of purchase and the member ID are attached to an electric mail so as to inquire a CS call center. The CS call center confirms in a damaged commodity list whether or not the commodity designated by the proof of purchase which has been sent is a corrected commodity. This damaged item list is exemplified in FIG. 42. This list itemizes each damaged commodity and each recovered commodity (corrected commodity) from each damaged condition using a list (or table) format. If the commodity designated by the purchase of proof which has been sent cannot be confirmed securely to be a provided object as a corrected commodity even after referring to the damaged commodity list, this commodity is added to the damaged item list because a new damaged commodity was newly found. The CS call center sends a check request of the proof of purchase to the license distribution management means 100 after confirmation is made using the foregoing damaged item list. The license distribution management means 100 checks to confirm whether or not the proof of purchase is interpolated. If the proof of purchase is not interpolated, it is checked using a revoke proof of purchase table whether or not the relevant proof of purchase is revoked (invalidated).

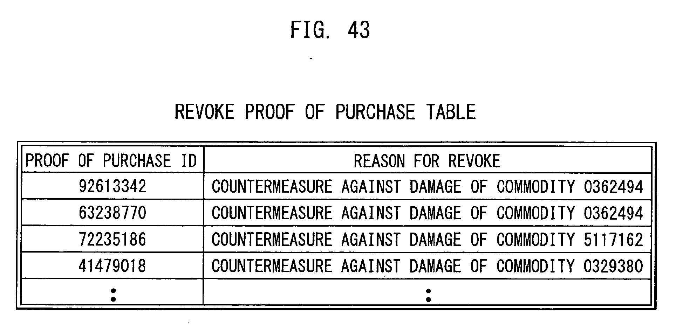

FIG. 43 exemplifies the revoke proof of purchase table. This revoke proof of purchase table is structured by making a list (or table) format of each proof of purchase ID to which the existence of the damaged condition was inquired and its corrective history (result) of each proof of purchase ID, in the event that the content 14 is provided once again. This revoke proof of purchase table is used for making it clear to confirm whether or not the damage condition is corrected for each commodity of the proof of purchase to which the checking operation is requested. Then, after the proof of purchase is checked to confirm whether or not the proof of purchase is revoked using the revoke proof of purchase table, the response of checking the proof of purchase from the license distribution management means 100 to the CS call center is replied.

In this way, since the process of providing the license 10 and the content 14 once again is executed after the proof of purchase is checked to confirm whether or not the proof of purchase is revoked using the revoke proof of purchase table, it is impossible to deny a handling operation for the contents once provided, even if the user informs many times that damaged was found in the same purchase item.

The response to the operation of checking the proof of purchase to the foregoing CS call center is "OK" if the proof of purchase is not interpolated and/or revoked but "NG" for the other cases. Upon checking of the proof of purchase, if the checking result is "NG," the CS call center sends a return e-mail informing that the proof of purchase is not valid to the client terminal 300. On the other hand, if the foregoing proof of purchase result is "OK, "the CS call center will request of the storefront gateway 220 that the box set should be reissued manually. A dummy ID for providing once again as the settlement ID, a member ID, and a commodity ID are attached to this box set manual re-issuance request.

The storefront gateway 220 checks to confirm whether or not the box set from the foregoing CS call center is normal. This checking operation is executed by a brief authenticating process for the CS call center. For example, the processes of verifying the IP address of the operational terminal of the CS call center and the like are executed.

After the CS call center was authenticated, the box file having the size of zero, which has a file name of the settlement ID under the directory of the member ID, is created by the box set file creation means 221 in the storefront gateway 220. The foregoing settlement ID is the foregoing dummy ID for providing once again. At this point, the box set ID is not recorded because the box set is not yet created. The box set file created in this way is stored in the box set file management means 222. After the foregoing box set file is created, the storefront gateway 220 sends a proof of purchase request to the license distribution management means 100 (POP request) . For this POP request, a corrected commodity ID group attached to the box set manual re-issuance request from the CS call center is attached as sending data.

Upon receiving the foregoing POP request, the license distribution management means 100 checks to confirm whether or not the POP request from the storefront gateway 220 is normal. This checking operation is executed by the process of authenticating the storefront gateway, the process of the SSL mutual authentication, and so on. After the storefront gateway 220 is authenticated, the proof of purchase (POP) is created by the proof of purchase creation means 101 of the license distributionmanagementmeans 100. At the same time, the history of creating the proof of purchase is recorded by the proof of purchase creation means 101, and this history of creating the proof of purchase is recorded in the proof of purchase creation history storing means 120. Then, proof of purchase thus created is sent to the storefront gateway 220. Further, the proof of purchase group (POP group) is sent when two or more proof of purchases are created.

In the storefront gateway 220 which has received the proof of purchase, the box set which has grouped plural eBoxes as one set is created so as to be stored and maintained in the box set file management means 222, as well as each eBox of each proof of purchase is created in the box set creation means 224. The box set ID is attached to this box set. Further, the foregoing box set ID is attached to the extension of the box set file name, as well as the contents of the box set are recorded in the relevant box set file. Then, the storefront gateway 220 sends a response informing that the box set manual issuance was performed to the CS call center.

Next, the CS call center sends a revoke request to the license distribution management means 100. The proof of purchase ID and a message of the reason for a revoke are attached to this revoke request. When the license distribution management means 100 receives the foregoing revoke request, the proof of purchase revoke response is sent back to the CS call center after the relevant proof of purchase ID and a message of the reason for a revoke are recorded in the revoke proof of purchase table. The CS call center sent back a message that corrected commodities are prepared (i.e. re-issuance preparation) to the client terminal 300 using an electric mail based on this proof of purchase revoke response.

If the client terminal 300 receives a response in which re-issuance from the foregoing CS call center is prepared, the member login is requested from the web browser 302 to the storefront server 200. The member ID and a password are attached to this member login request. On the side of the storefront server 200, the member ID and the password are received, as well as the client request receiving means 211 of the storefront window terminal 210 receives the foregoing login request. Next, the storefront window terminal 210 sends the screen for the member and cookie information to the web browser 302. Then, the web browser 302 makes a purchase history request to the storefront window terminal 210. Accordingly, the storefront window terminal 210 acquires the settlement ID and the settlement history within past 48 hours and makes a request of the box set file ID to the storefront gateway 220. The member ID is attached to this request of the box set file ID. The storefront gateway 220 acquires the box set file under the member IDdirectory designated by the foregoing member ID, and sends a box set file ID group to the storefront window terminal 210. The storefront window terminal 210 matches the settlement history with the box set file ID so as to create browsing HTML. If the settlement history cannot be found for the settlement ID of the box set file ID in the stage of creating this browsing HTML, HTML including the relevant box file ID is created by recording "-" in history information. Then, the storefront window terminal 210 sends a purchase history list (a file ID group) recording the box set which has not yet been acquired to the web browser 302 of the client terminal 300.

The user of the client terminal 300 finds out the box set of the corrected commodity by checking a recording mark of "-" in the settlement history, and designates the box set so as to acquire it. Then, the box set request is sent to the storefront window terminal 210 from the web browser 302. The box set file ID is attached to this box set request. The member ID is included in this box set file. The storefront window terminal 210 sends the foregoing box set request to the storefront gateway 220. The box set file ID as data is attached to the box set request. In the event that the storefront gateway 220 receives the foregoing box set request, the storefront gateway 220 extracts the relevant box set from the box set file management means 222 based on the box set file ID so as to send it to the box set provision means 226 and the box set provision means 226 sends this box set to the storefront window terminal 210.

If the storefront window terminal 210 receives the box set, the storefront window terminal 210 sends the box set to the web browser 302 of the client terminal 300 from the purchase request answering means 213. If the web browser 302 receives the box set, the web browser 302 activates the bookshelf management means 301 with the MIME type of the box set and stores the box set so as to bookshelf-manage the box set, and further the notice of receiving the box set is sent to the storefront server 200 from the bookshelf management means 301. The box set header is stored in this box set receiving notice. The foregoing box set receiving notice is to confirm that the client terminal 300 has received the box set from the storefront server 200. This box set receiving notice is sent to the storefront gateway 220 from the purchase request answering means 213 of the storefront window terminal 210. The box set header is attached if the box set receiving telecommunication is performed.

If the storefront gateway 220 receives the box set, the storefront gateway 220 checks to confirm whether or not the box set header is interpolated. If there is no interpolation, the relevant box set file is deleted from the box set file management means 222. At this stage, if the directory for the member ID becomes empty since the box set file is deleted, the member directory itself is deleted. Accordingly, unnecessary data is not left in a limited memory region for a long time, thus the memory can be used effectively. After the foregoing processes, the response of receiving the box set is sent to the storefront window terminal 210 from the storefront gateway 220, and further this response of receiving the box set is sent to the bookshelf management means 301 of the client terminal 300 from the storefront window terminal 210.

Then, if the client terminal 300 wants to acquire the license or the contents, the bookshelf management means 301 disassembles the box set into each box, that is to say, each eBox so as to display the contents of the eBox in GUI in a browsing way.

On the side of the client terminal 300, to begin with, the operation of downloading the contents is executed based on the browsing display of the foregoing GUI. Thus, if the user designates a downloading obj ect in a list displayed in the display means 304, the bookshelf management means 301 acquires the URL for downloading the contents from the proof of purchase of the designated eBox and sends the contents request to the contents distribution server 400.

Upon receiving the foregoing contents request, the contents distribution server 400 sends the digital contents as an object to the client terminal 300. Accordingly, the contents designated on the side of the client terminal 300 are distributed to the relevant client terminal 300, thus the client terminal 300 can acquire the contents without any missing page and/or erratic pagination, or the contents embedding viewer program without any bug. On the side of the client terminal 300, the distributed contents are stored in the bookshelf management means 301. At this point, the distributed contents are structured by the encrypted digital contents.

Next, the client terminal 300 acquires the license distribution management URL from the proof of purchase of the designated eBox, and sends the license request to the license distribution management means 100. This license requests the issuance of the license itself corresponding to the foregoing distributed content to thelicensedistribution management means 100 from the client terminal 300, and is a different operation process from the foregoing license purchase request. The designated eBox proof of purchase is attached to this license request.

Upon receiving the foregoing license, the license distribution management means 100 checks to confirm whether or not the proof of purchase attached to the license request from the bookshelf management means 301 is interpolated. If the license request is not interpolated, it is checked to confirm whether or not the record of creating the relevant proof of purchase is found in its proof of purchase creation history storing means 120. Then, if the record of creating the relevant proof of purchase is found, the license creationmeans 102 deletes the relevant proof of purchase creation history of the proof of purchase creation history storing means 120, as well as the license creation means 102 creates the license designated by its proof of purchase. Then, the created license is sent to the license provision means 103 and then sent to the client terminal 300 from the license provision means 103. Accordingly, the license for the proof of purchase designated on the side of the client terminal 300 is issued. On the side of the client terminal 300, thus issued license is stored in the bookshelf management means 301.

In this way, the processes of receiving the contents distribution firstly and the license distribution secondly are executed, the relationship between thus distributed license and contents is the same as the foregoing sixth embodiment, and thus the explanation thereto is omitted herein.

In the foregoing explanation, to begin with, the bookshelf management means 301 acquires the contents from the contents distribution server 400, and then the license is acquired from the license distribution management means 100. However, in a series of these operations, the bookshelf management means 301 makes a copy of the data of the LC connector 11 data recorded in the relevant license in the area of the LC connector of the contents after the license is acquired. Accordingly, the state in which the same LC connectors 11 are recorded in the contents and the license stored in the bookshelf management means 301 is attained. Thus, the relationship between them becomes clear. At this point, in the bookshelf management means 301, each of the content 14 and the license 10 is stored in each separate file, and each file name is given to each file. In this embodiment, the LC connector is used in each file name of each file, and both files are classified by having each different extension in each LC connector. As each file name of each file, in the same way as the case of the foregoing sixth embodiment, the following files are given:
License file : [LC connector].LCS
Contents file : [LC connector].CTT
If these types of file names are given, the LC connectors 11 are included in the file names, the relationship between the license and the contents can be identified from their file names. Further, the LC connector is included in the contents of each file, thus the operation of identifying the relationship between the contents and the license can be executed doubly.

Further, in the bookshelf management means 301, as indicated in FIG. 33, the fact that the license 10 and the content 14 are prepared is indicated using a browsing list by displaying the icon in the display means 304.

By displaying the foregoing browsing list, in the bookshelf management means 301, the predetermined contents can be written in the exterior memory medium (or including auxiliary memory means and/or a memory medium such as a portable terminal fro reproducing the content 14) such as the memory card 307. In this case, if the user designates the content 14 (attaching the icon 25 in FIG. 33) which shall be written in the exterior memory medium and the like, the relevant license 10 is designated successively. If a writing indication is input from the data input means 303, this indication command is sent to the bookshelf management means 301 from the control means 305, and the designated content 14 and the relevant license 10 are written and stored in the memory card 307.

Accordingly, if the contents of the electronic book have incorrect collating or a missing page, the viewer program has a bug, and the contents of the book cannot be displayed correctly, the controlling operation of providing the license contents once again can be performed without any trouble.

Further, as explained in the sixth embodiment, since the viewer program 15 is included in the content 14, if the controlling process of providing the content 14 once again is executed in the eighth embodiment, the application is provided for displaying the contents once again while the content 14 is sent, even if the content 14 is incorrect and the viewer program 15 cannot run correctly. Therefore, the user can be released from the obligatory operation of updating separately the content 14 and the viewer program 15, and immediately browse the book by receiving a new book once again.

Although the present invention is explained based on the preferred embodiments with reference to figures, it is obvious for those having ordinal skill in the art to make easily various changes, omissions, and additions without departing the spirit and scope of the idea of the present invention. It is apparent that the present invention includes such modification.

## Claims

1. A license distribution method, comprising the steps of:
receiving a purchase request of a license for viewing digital contents via a network;
executing a process of settling accounts for the purchase request of a license after receiving the purchase request of a license;
creating a proof of purchase corresponding to said purchase request of a license after a process of settling accounts is finished;
sending the created proof of purchase to a purchase requester of a license; and
creating a license in response to a license request including said proof of purchase so as to send it to a purchase requester of a license.

2. The license distribution method according to claim 1, further comprising the steps of:
creating, after completing the process of settling accounts, a box set file of recording a history of the proof of purchase up to issuance from creation; and
adding a file ID and an ID of settling said accounts to the created box file.

3. The license distribution method according to claim 2, further comprising the steps of:
creating a proof of purchase corresponding to said license request after creating said box set file; and
creating a box set by grouping created proofs of purchase and changing the file ID of said box set file based on the created box set.

4. The license distribution method according to claim 3, further comprising the steps of:
sending the ID of saidbox set file to the purchase requester of a license while keeping the box set file temporarily;
receiving a box set request from the purchase requester of a license via a network; and
sending a box set corresponding to said box set request to the purchase requester of a license after receiving said box set request.

5. The license distribution method according to claim 4, further comprising the step of:
deleting a relevant box set file after receiving a box set receiving notice from the purchase requester of a license via a network.

6. The license distribution method according to claim 1,
wherein telecommunication for said license request/receiving is terminated if accounts are not settled.

7. The license distribution method according to claim 1,
wherein a refund process is executed if no response is returned from a task of creating and sending said proof of purchase after said process of settling accounts.

8. The license distribution method according to claim 1,
wherein a list of unacquired proofs of purchase is sent and the unacquired proofs of purchase are issued once again if no response is returned from a task of creating and sending a proof of purchase after said process of settling accounts.

9. A license distribution method, comprising the steps of:
receiving a purchase request of a license for viewing digital contents via a network;
executing a process of settling accounts for the purchase request of a license after receiving the purchase request of a license;
creating, after completing the process of settling accounts, a box set file of recording history of the proof of purchase up to issuance from creation and adding a file ID and an ID of settling said accounts to the created box file;
creating a proof of purchase corresponding to said purchase request of a license after said box set file is created;
changing the file ID of said box file based on the created proof of purchase;
sending said proof of purchase to a requester of purchasing license;
deleting a relevant box set file after receiving a proof of purchase receiving notice from the purchase requester of a license via the network; and
creating a relevant license responding to a license request including said proof of purchase and sending it to the purchase requester of a license.

10. A license distribution system, comprising:
a client terminal for outputting a purchase request of a license and a license request;
a storefront server for receiving the purchase request of a license for viewing digital contents via a network from the client terminal; and
license distributionmanagementmeans for creating a proof of purchase corresponding to said purchase request of a license, wherein
said storefront server includes a reception window terminal for receiving said purchase request of a license and a management terminal for executing a process necessary for issuing the license,
said storefront server receives the purchase request of a license for viewing digital contents via the network from the client terminal in the reception window terminal,
said storefront server executes a process of settling accounts for the purchase request of a license after receiving the purchase request of a license,
the license distribution management means creates a proof of purchase corresponding to said purchase request of a license after completing the process of settling accounts,
the license distribution management means sends the created proof of purchase to the client terminal via the storefront server from said license distribution management means, and
said license distribution management means creates, when the client terminal sends a license request including said proof of purchase, a relevant license and sends the license to the client terminal that made the license request.

11. The license distribution system according to claim 10, wherein the management terminal of the storefront server creates a box set file for recording a history of said proof of purchase up to issuance from creation after completing the process of settling accounts.

12. The license distribution system according to claim 11, wherein said license distribution management means creates a proof of purchase corresponding to said license request after the management terminal of the storefront server creates said box set file.

13. The license distribution system according to claim 12, wherein said management terminal of said storefront server creates a box set by grouping created proofs of purchase and changing a file ID of said box set file based on said box set.

14. The license distribution system according to claim 13, wherein the management terminal of the storefront server sends said box set file ID to a client terminal while keeping a box set temporarily,
the client terminal sends a box set request to the storefront server based on the received box set file ID,
the management terminal of the storefront server sends a box set corresponding to said box set request to the client terminal after receiving said box set request.

15. The license distribution system according to claim 14, wherein the management terminal of the storefront server sends said box set to the client terminal and deletes a relevant box set file after receiving a box set receiving notice from the client terminal via a network.

16. A license distribution method, comprising the steps of:
receiving a purchase request of a license for viewing digital contents sold via a network as a subscription commodity or a package commodity grouping plural commodities;
executing a process of settling accounts for the purchase request of a license after receiving the purchase request of a license;
creating a pBox proof of purchase as a proof of purchase corresponding to a subscription commodity or a package commodity as an object of said purchase request of a license after the process of settling accounts is completed;
sending the created pBox proof of purchase to a purchase requester of a license;
creating a relevant eBox proof of purchase and sending it to the purchase requester of a license by responding to an eBox request as a proof of purchase corresponding to a license commodity having respective items including said pBox proof of purchase; and
creating a relevant license in response to a license request including said eBox proof of purchase and sending it to the purchase requester of a license.

17. The license distribution method according to claim 16, wherein a commodity is managed by linking the subscription commodity or the package commodity with its relevant license commodity.

18. The license distribution method according to claim 17, wherein an MPID which is a common identifier as a connector of management-linking the subscription commodity or the package commodity with the relevant license commodity is given to the both commodities .

19. The license distribution method according to claim 18, wherein an eBox proof of purchase can be created based on a pBox proof of purchase and a commodity as an object of the eBox proof of purchase by a link management means having an MPID connector is searched for and acquired in the process.

20. The license distribution method according to claim 19, wherein plural MPIDs being different to each other can be attached to license commodities.

21. The license distribution method according to claim 20, wherein the license commodities to which the plural MPIDs are attached can be included in plural groups of subscription commodities or packaging commodities being different to each other.

22. The license distribution method according to claim 16, wherein eBox/pBox type data is included in a proof of purchase to discriminate whether the proof of purchase is for the subscription commodity or the package commodity.

23. The license distribution method according to claim 16, wherein a proof of purchase creation history is recorded and purchase creation of the proof of process is monitored in creating a proof of purchase.

24. The license distribution method according to claim 19, wherein, when the eBox purchase proof is created based on the pBox purchase proof, a proof of purchase creation history is recorded, and a pBox proof of purchase ID as a parent is recorded in the proof of purchase creation history of the created pBox proof of purchase.

25. The license distribution method according to claim 16, wherein a box set file for a recording history of the proof of purchase up to issuance from creation is created after completing the process of settling accounts and the created box set file includes a step of attaching a file ID and an ID of said settlement.

26. The license distribution method according to claim 25, further comprising the steps of:
sending said box set file ID to a purchase requester of a license while keeping a pBox box set temporarily;
receiving a box set file request from the purchase requester of a license via a network; and
sending a box set corresponding to said box set request to the purchase requester of a license after receiving said box set request.

27. The license distribution method according to claim 16, wherein a request of a proof of purchase is received again and an unacquired proof of purchase is issued again if a response to a task of creating and sending a proof of purchase is not received after said process of settling accounts is completed.

28. A license distribution system, comprising:
a client terminal for outputting a purchase request of a license and a license request;
a storefront server for receiving the purchase request of a license for viewing digital contents via a network from the client terminal; and
license distribution management means for creating a proof of purchase corresponding to said purchase request of a license,
wherein
said storefront server includes a reception window terminal for receiving said purchase request of a license and a management terminal for executing a process necessary for issuing the license,
said license distribution management means includes:
commodity management means for managing commodities by linking a subscription commodity or a package commodity with a relevant license commodity;
proof of purchase creation means for creating a pBox proof of purchase corresponding to the subscription commodity or package commodity as an object of said purchase request of a license; and
proof of purchase creation means for creating a relevant eBox proof of purchase in response to an eBox request corresponding to a license commodity having respective items including said pBox proof of purchase, and said storefront server includes the steps of:
receiving a purchase request of a license for viewing digital contents sold as the subscription commodity or package commodity by grouping plural commodities via a network from the client terminal at the reception window terminal;
executing a process of settling accounts for the purchase request of a license after receiving the purchase request of a license;
creating a pBox proof of purchase corresponding to the subscription commodity or package commodity as an object of license purchase after the process of settling accounts is completed;
sending the created pBox proof of purchase to the client terminal from the license distribution management means via the storefront server;
sending a relevant eBox proof of purchase created by the license distribution management means to said client terminal when the client terminal sends an eBox request corresponding to a license commodity having respective items including said pBox proof of purchase; and
sending a license created by said license distribution management means to the client terminal requesting the license when the client terminal sends a license request including said eBox proof of purchase.

29. The license distribution system according to claim 28, wherein said commodity management means manages a commodity by giving an MPID which is a common identifier as a connector of management-linking the subscription commodity or the package commodity with a relevant license commodity to the both commodities.

30. The license distribution system according to claim 28, wherein the management terminal of the storefront server creates a box set file for recording a history of a proof of purchase up to issuance from creation after the process of settling accounts is completed.

31. The license distribution system according to claim 30, wherein said license distribution management means creates a proof of purchase corresponding to said license request after the management terminal of the storefront server creates said box file.

32. The license distribution system according to claim 31, wherein the management terminal of the storefront server sends said box set file ID to a client terminal while keeping a box set temporarily,
the client terminal sends a box set request to the storefront server based on the received box set file ID; and
the management terminal of the storefront server sends a box set corresponding to said box set request to the client terminal after receiving said box set request.

33. A license and contents provision method, comprising the steps of:
receiving a purchase request of a license for viewing digital contents via a network;
executing a process of settling accounts for the purchase request of a license after receiving the purchase request of a license;
creating a proof of purchase corresponding to said purchase request of a license after a process of settling accounts is completed;
sending the created proof of purchase to a purchase requester of a license;
distributing contents in response to a contents request from a client side; and
creating a relevant license in response to a license request including said proof of purchase by attaching license contents linking data indicating linkage with said distributing contents and sending it to a client.

34. The license and contents provision method according to claim 33, further comprising the step of:
making a copy of the license contents linking data attached to a license in a predetermined data region of contents by a client after the license is sent to the client.

35. The license and contents provision method according to claim 34, wherein the license and contents having the license contents linking data are stored in separate files of a client.

36. The license and contents provision method according to claim 35, wherein the license and contents stored in the separate files of the client are, for their respective files, given file names using the license contents linking data.

37. The license and contents provision method according to claim 33, wherein network telecommunication for requesting and/or receiving said license is terminated if the process of settling accounts is not executed.

38. The license and contents provision method according to claim 33, wherein said contents includes a viewer program.

39. The license and contents provision method according to claim 33, wherein, if contents are incorrect after said license and contents are provided, a process of providing a license and contents again is executed.

40. The license and contents provision method according to claim 39, wherein a revoke check process is executed based on a proof of purchase ID when a process of providing a license and contents again is executed.

41. A license and contents provision system, comprising:
a client terminal for outputting a purchase request of a license and a license request;
a storefront server for receiving the purchase request of a license for viewing digital contents via a network from the client terminal; and
license distribution management means for creating a proof of purchase corresponding to said purchase request of a license,
wherein
said storefront server includes a reception window terminal for receiving said purchase request of a license and a management terminal for executing a process necessary for issuing the license,
said storefront server receives the purchase request of a license for viewing digital contents via the network from the client terminal in the reception window terminal,
said storefront server executes a process of settling accounts for the purchase request of a license after receiving the purchase request of a license,
the license distribution management means creates a proof of purchase corresponding to said purchase request of a license after completing the process of settling accounts,
the license distribution management means sends the created proof of purchase to the client terminal via the storefront server from said license distribution management means,
a contents distribution server distributes relevant contents when the client terminal sends a contents request, and
the license distribution management means creates a relevant license by attaching license contents linking data indicating linkage with said distributing contents and sends it to the client terminal of requesting the license when the client terminal sends a license request including said proof of purchase.

42. The license and contents provision system according to claim 41, wherein the client terminal which received the license makes a copy of the license contents linking data attached to the license in a predetermined data region of contents.

43. An electronic book display terminal comprising:
bookshelf management means for managing data after receiving it from a memory medium storing contents of an electronic book and a license for browsing the contents;
electric power management means for managing an ON/OFF switching operation of a main electric power;
input means for inputting various indications;
time means for timekeeping the current time;
usage limit check means for checking a limit of using a license;
display means for displaying data; and
control means for controlling an operation of a function unit of a storing unit,
wherein said control means shifts to a waiting state by making the electric power management means turn OFF the main electric power immediately when said display means displays a result display according to an instruction from said input means.

44. The electronic book display terminal according to claim 43, wherein designation of a book to be browsed, an instruction of turning pages, and an operation instruction of a bookshelf is input from said input means.

45. The electronic book display terminal according to claim 43, wherein said usage limit checkmeans checks to confirm whether browsing is permitted by checking contents of a license based on present time data acquired by the time means.

46. The electronic book display terminal according to claim 43, wherein said electric power management means includes a sub-CPU and monitors presence of an input for instructing a start operation while keeping a state in which the main electric power is turned OFF.
